# EUROPEAN PATENT APPLICATION

(11) **EP 3 118 714 A2**
(43) Date of publication of application: **18.01.2017**
(21) Application number: 16182074.1
(22) Date of filing: 13.10.2010
(51) Int. Cl.: G06F 1/16

(54) **PORTABLE COMPUTING SYSTEM**

(30) Priority: 16.10.2009 US 580922; 16.10.2009 US 580914; 16.10.2009 US 580985; 16.10.2009 US 580946; 16.10.2009 US 580976
(62) Divisional of application: 10775961.5
(71) Applicant: Apple Inc., Cupertino, CA 95014 (US)
(72) Inventor: RAFF, John, Cupertino, CA 95014 (US); ANDRE, Bartley K., Cupertino, CA 95014 (US); DEFOREST, Laura M., Cupertino, CA 95014 (US); DIFONZO, John C., Cupertino, CA 95014 (US); GAO, Zheng, Cupertino, CA 95014 (US); GOLDBERG, Michelle, Cupertino, CA 95014 (US); HAMEL, Bradley J., Cupertino, CA 95014 (US); HIBBARD, Timothy S., Cupertino, CA 95014 (US); HOPKINSON, Ron, Cupertino, CA 95014 (US); LEGGETT, William F., Cupertino, CA 95014 (US); LIGTENBERG, Chris, Cupertino, CA 95014 (US); REID, Gavin J., Cupertino, CA 95014 (US); SCHWALBACH, Charles A., Cupertino, CA 95014 (US); BERGERON, Kathleen A., Cupertino, CA 95014 (US); FETTERMAN, Kevin S., Cupertino, CA 95014 (US); HUANG, Chung-Tse, Kaohsiung County 830 (TW); ZELIFF, Zachary Joseph, Taipei (TW); THOMASON, Gary, Cupertino, CA 95014 (US); GOEL, Ruchi, Cupertino, CA 95014 (US); CASEBOLT, Matthew P., Cupertino, CA 95014 (US); AGARWAL, Anand N., Cupertino, CA 95014 (US); BERG, Bruce E., Cupertino, CA 95014 (US); LIN, Bingjiun, Banchiao City (TW); COISH, Robert L., Cupertino, CA 95014 (US)
(74) Representative: Black, Diego

(57) **Abstract**

A portable computing device, comprising: a single piece, seamless housing; and a top cover pivotally connected to the single piece seamless housing, the top cover comprising: a display housing enclosing a recess and including a first alignment pin extending from an inside surface of the display housing, and a camera module disposed within the recess, the camera module comprising: a lens assembly, a camera printed circuit board (PCB), and a first receiving feature having a size and shape in accordance with the first alignment pin, the first alignment pin being received into the first receiving feature that aids in aligning the lens assembly to a lens opening in the display housing.

## Description

### BACKGROUND OF THE INVENTION

### Field of the Invention

The described embodiments relate generally to portable computing devices. More particularly, the present embodiments relate to enclosures of portable computing devices and methods of assembling portable computing devices.

### Description of the Related Art

The outward appearance of a portable computing device, including its design and its heft, is important to a user of the portable computing device, as the outward appearance contributes to the overall impression that the user has of the portable computing device. At the same time, the assembly of the portable computing device is also important to the user, as a durable assembly will help extend the overall life of the portable computing device and will increase its value to the user.

One design challenge associated with the portable computing device is the design of the enclosures used to house the various internal components. This design challenge generally arises from a number conflicting design goals that includes the desirability of making the enclosure lighter and thinner, the desirability of making the enclosure stronger and making the enclosure more aesthetically pleasing. The lighter enclosures, which typically use thinner plastic structures and fewer fasteners, tend to be more flexible and therefore they have a greater propensity to buckle and bow when used while the stronger and more rigid enclosures, which typically use thicker plastic structures and more fasteners, tend to be thicker and carry more weight. Unfortunately, increased weight may lead to user dissatisfaction, and bowing may damage the internal parts.

Furthermore, in most portable computing devices, the enclosures are mechanical assemblies having multiple parts that are screwed, bolted, riveted, or otherwise fastened together at discrete points. For example, the enclosures typically have included an upper casing and a lower casing that are placed on top of one another and fastened together using screws. These techniques typically complicate the housing design and create aesthetic difficulties because of undesirable cracks, seams, gaps or breaks at the mating surfaces and fasteners located along the surfaces of the housing. For example, a mating line surrounding the entire enclosure is produced when using an upper and lower casing. Not only that, but assembly is often a time consuming and cumbersome process. For example, the assembler has to spend a certain amount of time positioning the two parts and attaching each of the fasteners. Furthermore, assembly often requires the assembler to have special tools and some general technical skill.

Another challenge is in techniques for mounting structures within the portable computing devices. Conventionally, the structures have been laid over one of the casings (upper or lower) and attached to one of the casings with fasteners such as screws, bolts, rivets, etc. That is, the structures are positioned in a sandwich like manner in layers over the casing and thereafter fastened to the casing. This methodology suffers from the same drawbacks as mentioned above, i.e., assembly is a time consuming and cumbersome.

Therefore, it would be beneficial to provide a housing for a portable computing device that is aesthetically pleasing and lightweight, durable and yet environmentally friendly. It would also be beneficial to provide methods for assembling the portable computing device.

### SUMMARY OF THE DESCRIBED EMBODIMENTS

This paper describes various embodiments that relate to systems, methods, and apparatus for providing a lightweight, visually seamless housing suitable for use in portable computing applications.

A computing device is disclosed. The computing device includes at least a single piece, seamless housing formed of a lightweight, flexible material. The seamless housing includes a top portion on which is located at least one user interface and a body portion integrally formed with the top portion. The computing device also includes a movable top cover pivotally connected to the single piece seamless housing. In the described embodiment, the movable top cover and the seamless housing are shaped to create an appearance of a single continuous shape when the movable top cover is closed and in contact with the top portion.

A multi-part computer housing is disclosed. The multipart computer housing includes at least a structural support layer and a single, seamless body. The single seamless body having no visible fasteners. The body includes at least an outer layer formed of lightweight flexible material and an inner layer attached to the outer layer adapted to transfer and distribute a load applied to the computer housing. In the described embodiment, the inner layer is physically connected to the support layer such that the load applied to the computer housing is transferred from the inner layer to the support layer without substantially affecting the outer layer.

In one aspect, the multipart computer housing is a plastic such as PCABS.

In another embodiment, a method is disclosed for organizing internal components of a portable computer. The method can be carried out by performing at least the following: providing a computer housing formed of substantially non-load bearing material, the computer housing configured to enclose a plurality of operational components at least one of which is a load bearing operational component, attaching at least one structural member to an inside surface of the computer housing, attaching the load bearing operational component to the at least one structural member, and forming a load path by coupling a structural support layer to the at least one structural member and the load bearing operational component, the load path providing a path by which a load applied to the computer housing is transferred to the structural support layer without substantially affecting the computer housing.

In one aspect, at least a portion of the inner frame is formed of metal that includes at least aluminum, magnesium, or alloys thereof.

A portable computer is disclosed. The portable computer includes at least a housing formed of compliant non-load bearing material and having an aesthetically appealing shape and aesthetically appealing surface features. A load distributing and load transferring endoskeleton attached to an interior surface of the housing, a structural support layer mechanically coupled to the endoskeleton formed of metald and providing structural support for the portable computer and an electrical ground, such that load applied to the housing is passed by the endoskeleton to the structural support layer with substantially affecting the housing, a protective layer attached to an exterior surface of the structural support layer, the protective layer having an appearance in conformity with the housing, the protective layer forming a junction with the housing that protects the appearance of the housing. The portable computer also includes a top cover having a supporting inner frame, a display supported by the inner frame pivotally connected to the endoskeleton by way of a hinge arrangement and a hinge arrangement enclosure arranged to enclose the hinge arrangement. In the described embodiment, the hinge arrangement enclosure includes at least the following: a back portion being visible to a user when the top cover is in a close state integrally formed from the top cover, and a cover portion being removeably attached to the back portion by way of a zipper lock arrangement such that when the cover portion and the back portion are joined, a resulting seam is not visible by the user when the top cover is in a closed position, and where the resulting seam aligns with a seam formed by the protective layer and the housing when the top cover is in the open position.

A lightweight portable computer is also disclosed. The lightweight portable computer includes at least a housing body. The housing body, in turn, can include an outer layer and an inner layer attached to the outer layer. In the described embodiment, the outer layer can be formed of lightweight and aesthetically pleasing material. The portable computer can also include a structural support layer attached to the inner layer in such a way that the inner layer transfers a load applied to the portable computer to the structural support layer without substantially affecting the outer layer. The portable computer also includes a top portion having an inner frame pivotally connected to the housing body at the inner layer such that a top portion load is transferred by the inner frame to the structural support layer by way of the inner layer. The top portion having an aesthetically pleasing outer shell attached to the inner frame.

In one aspect, the portable computer also includes a protective layer attached on an exterior surface of the structural support layer. The top portion, the housing body, and the protective layer being harmoniously arranged such that the portable computer appears to have a continuous profile shape without any visible fasteners.

This paper describes various embodiments that relate to systems, methods, and apparatus for enclosures for use in portable computing applications. In one aspect, a display housing that utilizes a plastic cover bonded to an internal metal frame is described. The plastic cover can be bonded to the internal metal frame using various adhesives, such as a liquid adhesive. To account for thermal cycling issues, such as a thermal expansion mismatch between the plastic cover and the metal frame, multiple types of adhesives can be employed. The multiple adhesives can be selected to prevent bond slippage that can produce permanent deformations at higher temperatures. In particular embodiments, a very high bond (VHB) adhesive material can be used in certain areas to bond the metal inner frame to the plastic cover and a liquid adhesive can be used in other areas.

In another aspect, the material used for the plastic cover can be translucent to light. For the display housing, a method of coating the plastic cover that blocks light emitted from a lighting source, such as the backlight for the display, is described. The coating scheme can be applied to only a portion of the plastic cover to block light in certain areas over the surface of the plastic cover while allowing light to be transmitted through the uncoated areas. For example, a logo portion can be left uncovered to provide an appearance of a lighted logo on the plastic cover. A three layer coating scheme can be employed to prevent shadowing effects along the border between uncoated and coated areas.

It is an advantage of the present invention to provide portable computing devices that are lightweight, strong, reliable, aesthetically pleasing and distinctive. Such portable computing devices can have outer housings that are comprised of entirely or predominantly plastic or other non-conducing materials, while still maintaining performance with respect to the overall electrical grounding and audio systems. This can be accomplished at least in part through the use of one or more alternative approaches for grounding the electrical components and for positioning the audio sources and other audio components within the portable computing devices. Effective audio system architectures can include positioning one or more audio sources beneath the keyboard assembly such that sound is directed through gaps between keys and/or the housing. Efficient grounding system architectures can include reduced grounding regions that also shield or isolate the main logic board from RF emissions or interference.

In various embodiments, a portable computing device has a substantially non-conducting outer housing and alternative electrical grounding and audio system architectures. The portable computing device can have a main logic board, a keyboard assembly, an audio source positioned below the keyboard assembly, and an equalizer electrically coupled to the audio source, with each of these components being electrically coupled to a universal grounding structure. The audio source can emit sound waves that are propagated through the keyboard assembly and between gaps between keyboard keys and the outer housing. Settings for the equalizer can be selected to account for sound absorption and amplification characteristics of the sound waves along these sound transmission paths. The universal grounding structure can include a plurality of separate ground components that are electrically intercoupled, with each being substantially smaller than the overall portable computing device. The plurality of separate ground components can include an electromagnetic interference shield around the main logic board, a rear bracket that physically couples a top cover to a lower body of the portable computing device, a metal backplate positioned proximate to the main logic board, and/or a plurality of conductive pins positioned through the main logic board and coupling the metal backplate with the electromagnetic interference shield.

In various general embodiments, a laptop computer or other portable computing device can include an outer housing, a main logic board located within the outer housing and having a primary processing unit coupled thereto, one or more additional electrically powered components located within the outer housing and separate from the main logic board, and a universal grounding structure having a plurality of separate ground components that are electrically intercoupled. The outer housing can be composed of entirely or predominantly one or more electrically non-conducting materials, such as a thermoplastic. The universal grounding structure can be electrically coupled to each of the main logic board and the one or more additional electrically powered components. Further, each of the separate ground components can be substantially smaller than the overall computing device, and at least one of the separate ground components can also provide an electromagnetic interference shield around the main logic board.

In some embodiments, the electromagnetic interference shield can comprise a metal Faraday cage of a size that is slightly larger than the main logic board. Further, one of the ground components can comprise a rear bracket that couples a top cover of the portable computing device to a lower body of the portable computing device and transmits physical loads therebetween. Still further, one of the ground components can comprise a metal backplate positioned such that the main logic board is between the metal backplate and the separate electromagnetic interference shield. In addition, the metal backplate can be electrically and mechanically coupled to the electromagnetic interference shield via a plurality of conductive pins positioned through the main logic board.

In various general embodiments, an audio system for a portable computer is described. The audio system is configured to direct sound from one or more audio sources positioned beneath a keyboard. An equalizer is applied to the audio sources to provide a more aesthetically pleasing sound quality. The equalizer settings are selected to account for sound amplification and sound absorption characteristics associated with the sound transmission paths related to the positioning of the audio source relative to the keyboard and the structural design of the keyboard assembly and its integration into the housing of the portable component device.

In various detailed embodiments, an audio system includes three audio sources, two piezoelectric speakers, and an electromagnetically driven cone type speaker. Each of the audio sources directs sound through gaps in a keyboard associated with the portable computer. In a particular embodiment, the cone type speaker is incorporated in a component that is also configured to hold and allow connections to a wireless card. The component includes a chamber that is designed to enhance certain frequencies emitted from the cone type speaker.

In one embodiment, a multipart computer housing is described. The multipart computer housing includes at least a bottom case having a structural support layer covered by a protective cover layer. In an embodiment, the protective cover layer is formed of a thermoplastic elastomer and is wrapped around and over an edge of the structural support layer. The protective cover layer, which has a soft texture, provides an attractive cover layer that is pleasing to the eye and touch. The structural support layer is formed of lightweight yet durable material, such as aluminum.

A method of manufacturing the bottomcase is disclosed. The method can be carried out by the following operations: etching an aluminum sheet to create a textured surface, anodizing the textured aluminum sheet to create high surface energy, applying an adhesive bonding film to the textured aluminum sheet having high surface energy, and overmolding a thermoplastic elastomer layer over the pre-bonded aluminum sheet.

Broadly speaking, the embodiments described herein relate to a lightweight, compact, high charge capacity battery assembly embeddable in a portable computing device.

In one embodiment, the battery assembly can be embedded in a portable computing device having a housing formed of flexible material. In the described embodiment, the battery housing can be formed from a single piece that can include a top portion arranged to provide protection to a plurality of battery components and to provide connectors for securing the battery to the housing. The battery housing can also include a cantilever beam portion integrally formed with the top portion and extending along a lower edge of the top portion, the cantilever beam portion arranged to enhance a resistance to flexing of the battery housing. The battery assembly can further include a lightweight minimum Z stack impact bottom layer attached to the cantilever beam portion and at least some of the battery components by way of a high bond adhesive, the lightweight bottom layer having a thickness that does not substantially impact the Z stack of the battery assembly.

A method of embedding a battery assembly into a portable computer having a computer housing formed of flexible material is disclosed. The method can be carried out by performing at least the following operations: receiving the battery assembly that can include a single piece battery housing arranged to enclose a plurality of battery cells. The battery housing formed to include a front portion with a curved cross sectional shape, a top portion, a cantilever beam portion, and a minimum Z impact protective layer. In the described embodiment, the cantilever beam portion can be integrally formed with a lower edge of the top portion to increase a resistance to flexing of the battery housing. The protective layer can be attached to the cantilever beam portion and the battery cells by way of a high bond strength adhesive. As configured, the battery assembly can be installed into the computer housing by at least placing the front portion snugly into a front frame attached to the computer housing, the front frame having a shape that can accommodate the curved cross sectional shape of the front portion. The battery assembly can then be placed onto an inside surface of the computer housing such that the protective layer is placed in contact with the inside surface of the computer housing. In this way, the computer housing provides a substantial portion of the protection afforded the battery cells. The front portion of the battery assembly can then be secured to the front frame.

In some embodiments, a back of the battery assembly can be secured to a rear frame attached to a rear portion of the housing. In this way, a load applied to the computer housing can be transferred by way of a load path to a structural support layer connected to the front and rear frames without substantially affecting the computer housing, the load path including the battery assembly.

A computing device is disclosed. The computer device having at least a flexible housing, a load transferring inner frame, a load absorbing layer arranged to mechanically couple the housing and the inner frame, a structural support layer connected to the load transferring inner frame; and a battery assembly mechanically connected to the load transferring inner frame, wherein when a load is applied to the flexible housing, the applied load is transferred by way of a load path to the structural support layer without substantially affecting the flexible housing, wherein the load path includes the battery assembly.

Other aspects and advantages of the described embodiments will become apparent from the following detailed description taken in conjunction with the accompanying drawings which illustrate, by way of example, the principles of the described embodiments.

### BRIEF DESCRIPTION OF THE DRAWINGS

The embodiments will be readily understood by the following detailed description in conjunction with the accompanying drawings, wherein like reference numerals designate like structural elements, and in which:
Figs. 1 - 6 show representative views of a multipart housing suitable for supporting a portable computer in accordance with the described embodiments.
Fig. 7 shows a right side front facing perspective view of a portable computing device in an open state.
Fig. 8 shows left side views of a portable computing device in accordance with the described embodiments.
Figs. 9 and 10 show a top view and a front view, respectively, of a portable computing device in a closed state.
Fig. 11 shows an interior view of the portable computing device shown in Figs. 7 - 10.
Fig. 12 shows a representation of top sub-assembly of portable computing device in accordance with the described embodiments
Figs. 13 - 14 show a detailed view of load absorbing attachment features in accordance with the described embodiments.
Figs. 15 - 17 show a cross section view of clutch barrel assembly in accordance with the described embodiments.
Fig. 18 shows an embodiment of status indicator light (SIL).
Fig. 19 shows an embodiment of magnetic power module (MPM).
Fig. 20 shows a top view of camera assembly in accordance with one embodiment.
Fig. 21 shows a cross sectional view of assembled display with aligned camera assembly.
Fig. 22 shows a Hall Effect sensor in accordance with the described embodiments.
Fig. 23 shows a location of the Hall Effect sensor shown in Fig. 22 on a representative main logic board.
Fig. 24 shows a location of the Hall Effect sensor shown in Fig. 22 and 23 in a representative portable computing system.
Fig. 25 shows a flowchart detailing a process for organizing internal components of a portable computer system in accordance with the described embodiments.
Fig. 26 shows a right side front facing perspective view of a portable computing device in an open state.
Fig. 27 shows a perspective view of a portable computing device in a closed configuration.
Fig. 28 is a front view of a portable computing device and a cross section of a portion of the display housing.
Fig. 29 is a block diagram of a bonding scheme for bonding a display housing cover to an inner frame.
Fig. 30 is a block diagram of a coating scheme for a display housing cover.
Fig. 31 is a diagram of coating layers for a coating scheme associated with a lighted portion of the display housing cover.
Fig. 32 is a flow chart of a method of assembling a display housingFIG. 41 illustrates in close-up side cross-sectional view the rear bracket and surrounding region for the exemplary portable computing device of FIG. 7 according to one embodiment of the present invention.
FIG. 33 illustrates in right side front facing perspective view an exemplary portable computing device in an open state according to one embodiment of the present invention.
FIG. 34 illustrates in right side front facing perspective view the exemplary portable computing device of FIG. 1 with audio signals being emitted from multiple audio sources via the keyboard according to one embodiment of the present invention.
FIG. 35 illustrates in side cross-sectional view an exemplary keyboard assembly having an audio source disposed therebeneath according to one embodiment of the present invention.
FIG. 36 provides a block diagram of an exemplary audio system according to one embodiment of the present invention.
FIG. 37 illustrates in side elevation view an exemplary inner component of the portable computing device configured to support a wireless card and an audio source according to one embodiment of the present invention.
FIG. 38 illustrates in top plan view the exemplary inner component mounted within a body of the portable computing device according to one embodiment of the present invention.
FIG. 39 illustrates in right side front facing perspective view an exemplary overall electrical grounding architecture for a partially disassembled portable computing device having a non-conductive outer housing according to one embodiment of the present invention.
FIG. 40A illustrates in bottom plan view the body of the exemplary portable computing device of FIG. 7 as partially disassembled according to one embodiment of the present invention.
FIG. 40B illustrates in top plan view the body of the exemplary portable computing device of FIG. 7 as partially disassembled according to one embodiment of the present invention.
FIG. 41 illustrates in close-up side cross-sectional view the rear bracket and surrounding region for the exemplary portable computing device of FIG. 7 according to one embodiment of the present invention.
FIG. 42A illustrates in front elevation view the lid of the exemplary portable computing device of FIG. 7 according to one embodiment of the present invention.
FIG. 42B illustrates in side cross-sectional view the lid of the exemplary portable computing device of FIG. 7 according to one embodiment of the present invention.
FIG. 42C illustrates in close-up side cross-sectional view the display clutch assembly for the exemplary portable computing device of FIG. 7 according to one embodiment of the present invention.
Fig. 43 shows an exploded perspective view of layers of a bottomcase of a portable computer housing.
Fig. 44 is a flow chart of a method of manufacturing an embodiment of a bottomcase shown in Fig. 49.
Fig. 45 is a top plan view of an aluminum structural support layer having an exemplary recycling code printed backwards.
Fig. 46 top plan view of an interior surface of a protective cover layer, peeled away from the structural support layer, having an exemplary recycling code printed in readable form.
Figs. 47 and 48 show a top view and a front view, respectively, of a portable computing device in a closed state.
Fig. 50 shows the battery seen in Fig. 49 embedded in a lightweight portable computer in accordance with the described embodiments.
Fig. 51 shows a portable computing system in accordance with the described embodiments.
Fig. 52 shows a cross section of a battery cover attached to a front frame in accordance with the described embodiments.
Figs. 53 - 54 show various prospective and cross sectional views of battery assembly in accordance with the described embodiments.
Fig. 55 shows a flowchart detailing a process in accordance with the described embodiments.

### DETAILED DESCRIPTION OF SELECTED EMBODIMENTS

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as may be included within the spirit and scope of the described embodiments as defined by the appended claims.

### COMPUTER HOUSING

The following relates to a multi-part housing suitable for a portable computing device such as a laptop computer, netbook computer, tablet computer, etc. The multi-part housing can include a structural support layer. The structural support layer can be formed of a strong and durable yet lightweight material. Such materials can include composite materials and or metals such as aluminum. Aluminum has a number of characteristics that make it a good choice for the structural support layer. For example, aluminum is a good electrical conductor that can provide good electrical ground and it can be easily machined and has well known metallurgical characteristics. Furthermore, aluminum is not highly reactive and non-magnetic which can be an essential requirement if the portable computer has RF capabilities, such as WiFi, AM/FM, etc. In order to both protect the structural support layer and provide an aesthetically appealing finish (both visual and tactile), a protective layer can be placed on an external surface of the structural support layer. The protective layer can extend up and around an edge of the structural support layer to both enhance the aesthetic appeal of the housing and to protect the appearance of the portable computer. The protective layer can be formed of, for example, thermoplastic elastomer such as TPU.

The multi-part housing can also include a body. The body can include a outer layer supported by an inner layer that can provide support for a computer assembly as well as transfer and distribute loads applied to the portable computing device. The outer layer can be formed of lightweight yet durable materials. Such materials can include, for example, blends of poly-carbonate and acrylonitrile butadiene styrene (ABS), also known as PCABS that exhibit high flow, toughness and heat resistance well suited for portable applications. The inner layer can be formed of composite materials, plastic, or metal such as magnesium or magnesium alloy. The inner layer can be connected directly to the structural support layer forming a load path between the inner layer and the structural support layer. In this way, a load applied to the portable computing device can be distributed across the inner layer and transferred along the load path to the structural support layer without substantially affecting the outer layer. Since the outer layer does not have to be load tolerant, the outer layer can be formed of flexible, but aesthetically pleasing materials such as plastic that would otherwise be unsuitable for use with a conventional portable computer housing.

In the embodiments where inner layer is metallic or at least electrically conductive, the inner layer and the structural support layer can, taken together, provide a good electrical ground plane or electrical ground. This can be especially important due to the fact that by selecting plastic or other non-conducting material for the outer layer, the outer layer cannot provide a ground. Moreover, due to the close proximity of the operational components to one another in the portable computing device, it is highly desirable to isolate sources of significant RF radiation (such as a main logic board, or MLB) from those circuits, such as wireless circuits, highly sensitive to RF interference. In this way, the inner layer can include a metal frame that can, in combination with the structural support layer, be used to electromagnetically isolate the MLB from other components in the computer assembly sensitive to RF interference such as a WiFi circuit.

Since the outer layer is essentially load isolated, the choice of materials that can be used to form the outer layer can be widely varied. In this way, a product designer can create a look and feel for the portable computer well beyond anything realistically possible with a conventional computer housing. For example, the outer layer can be formed of light weight plastic and molded into any shape (such as an undercut shape). Since the outer layer does not provide much, if any, structural support for the portable computer, the shape of outer layer can also be widely varied. For example, the outer layer can present a continuous spline profile so as to appear to an observer to be a single unified shape with substantially no discontinuities. Moreover, since there is no need for external fasteners that would detract from the overall appearance of the portable laptop computer, the overall look and feel presented by the outer layer can be one of a simple continuous shape.

Again, since the outer layer does not carry any substantial loads, the outer layer can include a number of openings having wide spans that do not require additional support structures. Such openings can take the form of ports that can be used to provide access to internal circuits. The ports can include, for example, data ports suitable for accommodating cables (USB, Ethernet, FireWire, etc.) connecting external circuits. The openings can also provide access to an audio circuit, video display circuit, power input, etc.

The portable computer can also include a movable cover. The movable cover can include an inner frame supporting an outer layer. The inner frame can in much the same way as the inner layer of the body, distribute and transfer a load applied to the movable cover. In the described embodiments, the inner frame can be formed of materials that are strong, lightweight and electrically conductive. Such materials can include, for example, magnesium and/or magnesium alloys. By connecting the inner frame to the inner layer of the body, the inner frame can become part of the load path to the structural support layer. In this way, any load applied to or created by the movable cover can be distributed across the inner frame and transferred to the structural support layer by way of the inner layer of the housing. For example, the movable cover can take the form of a lid that can be opened to reveal a portion of the body and closed to hide the portion of the body. By connecting the inner frame to the inner layer of the body using connectors, such as hinges, the inner frame can become part of the load path. In this way, a load imparted to the lid such as when the lid is opened (or closed), for example, can be transferred along the load path from the lid to the structural support layer.

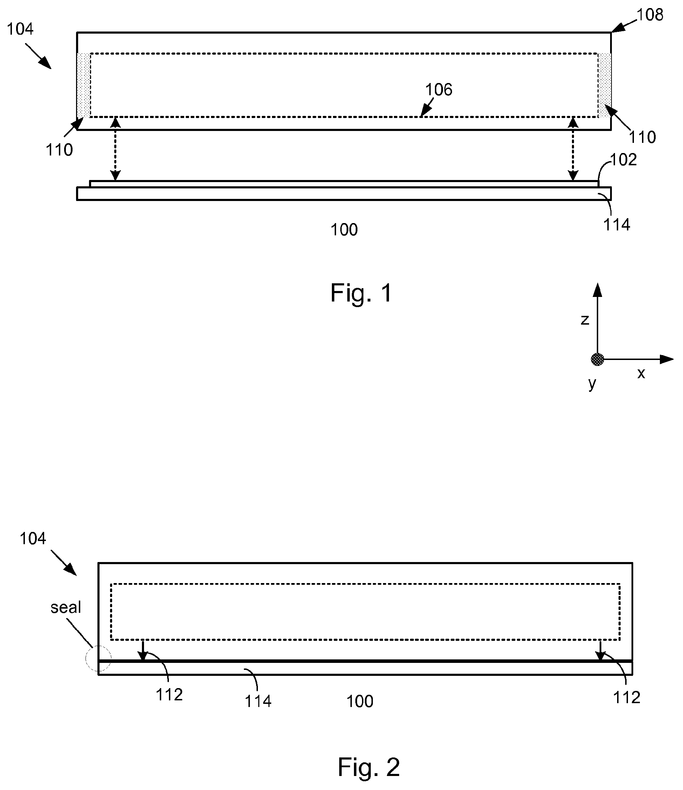

These and other embodiments are discussed below with reference to Figs. 1-25. However, those skilled in the art will readily appreciate that the detailed description given herein with respect to these figures is for explanatory purposes as the invention extends beyond these limited embodiments.

Figs. 1 - 5 show various configurations of multi-part housing 100 (hereinafter referred to as simply housing) in accordance with the described embodiments. Housing 100 can be used to enclose and support a computer assembly. The computer assembly can include a plurality of operational components, such as a main logic board (MLB), hard disc drive (HDD), optical disc drive (ODD) and so on used in the operation of a computing system. The computing system can be a desktop or portable, however, for the remainder of this discussion, the described embodiments relate to a portable computing system without any loss of generality.

Housing 100 can include structural support layer 102. Structural support layer 102 can be formed of materials such as metal (such as aluminum formed in a stamping operation) or composite materials. Housing 100 can also include body 104. Body 104 can, in turn, include load transferring and load distribution inner layer 106 attached to outer layer 108. Outer layer 108 can be formed of material that is chosen for its aesthetic appeal and less for its ability to withstand stress or any significant loads. It is for at least this reason that inner layer 106 can be designed to carry substantially any and all loads applied to housing 100. Accordingly, inner layer 106 and outer layer 108 can be attached to each other in such a way that inhibits the transfer of a load from inner layer 106 to outer layer 108. For example, inner layer 106 and outer layer 108 can be attached together using adhesive 110, such as glue. It should be noted that the choice of adhesive should be such that the adhesive bond formed does not interfere with the load transferring and load distribution characteristics of inner layer 106.

As shown in Fig. 2, inner layer 106 can be mechanically coupled with structural support layer 102. In this way, inner layer 106 can provide a load path to structural support layer 102 such that substantially any load applied to inner layer 106 can be transferred to structural support layer 102 without unduly loading outer layer 108. Accordingly, outer layer 108 can be considered to be load isolated in that substantially all loads applied to housing 100 can be transferred by way of load path 112 to structural support layer 102 bypassing and isolating outer layer 108. Protective layer 114 can be placed on an external surface of structural support layer 102. Protective layer 114 can be formed of resilient material such as TPE that can include, for example, TPU that is corrosion resistant and pleasing to the eye as well as to the touch. Protective layer 114 can extend over an edge of structural support layer 102. When structural support layer 102 / protective layer 114 is mechanically connected to inner layer 106, a junction can be formed between protective layer 114 and outer layer 108 that can protect the integrity of the appearance of housing 100.

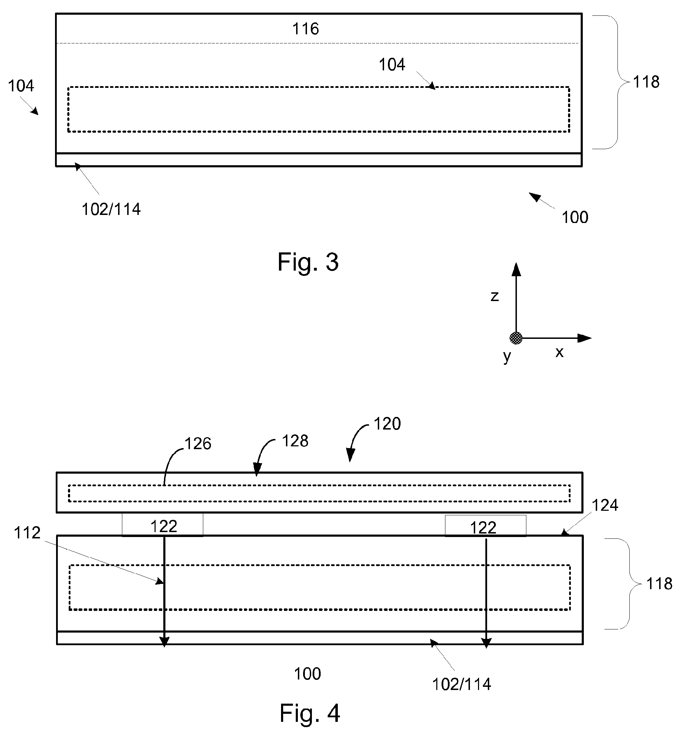

Fig. 3 shows an embodiment of housing 100 having body 104 and integrally formed top portion 116 forming enclosure 118 suitable for accommodating a computer assembly. The computer assembly can correspond to operational components adapted for a laptop computer or other portable computing device. In the context of a laptop computer, as shown in Fig. 4, movable lid 120 can be pivotally attached to enclosure 118 by pivoting connectors 122. In this way, top surface 124 of enclosure 118 can be viewed when lid 120 is in an open state (revealing features on top surface 124 such as a keyboard and/or touch pad) and hidden from view when lid 120 is in a closed state. In the embodiment shown, lid 120 can include load transferring inner frame 126 that can support cosmetic exterior 128. Inner frame 126 can be particularly useful in those situations where lid 120 incorporates a display device such as an LED, LCD, etc. By being mechanically connected to inner layer 106, any load at lid 120 (such as opening or closing lid 120 in relation to enclosure 118) can be transferred along load path 112 from lid 120 to structural support layer 102 without substantially loading outer layer 108.

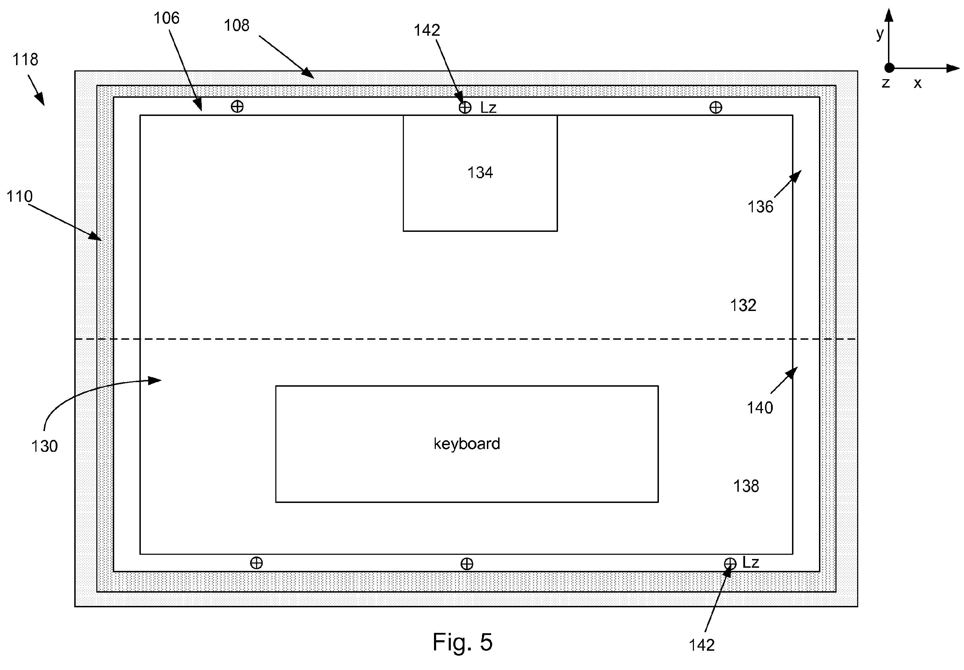

Fig. 5 shows a representation of enclosure 118 in an orientation suitable for receiving components during an assembly operation. In this orientation, structural support layer 102 is not present and components can be placed into enclosure 118 and secured to and/or become part of inner layer 106. Inner layer 106 can be attached to outer layer 108 by way of substantially non-load transferring adhesive 110. During assembly, various operational components can be inserted into enclosure 118 through opening 130 and mounted to inner layer 106. It should be noted that the functional layout of the portable computing device can be used to optimize the ability of inner layer 106 to transfer and distribute loads within enclosure 118. In one embodiment, enclosure 118 can be apportioned into a number of regions that can be based upon the operational components and their respective structural characteristics included therein. For example, if enclosure 118 corresponds to a laptop computer, then enclosure 118 can be thought of as having front portion 132 suitable for accommodating features such as a user interface along the lines of a touch or track pad. The user interface, can in turn, be structurally supported by corresponding frame structure 134 mounted within an opening provided in top surface 124 for the touch pad. In order to adequately support the user interface, frame structure 134 can be formed of strong, rigid material such as metal that can take the form of aluminum, magnesium, and/or magnesium alloy. By incorporating frame structure 134 into front frame 136 of inner layer 106, the intrinsic stiffness and strength of frame structure 134 can be used to augment the overall stiffness of front portion 132 as well as augment the load transferring capability of front frame 136. Similarly, enclosure 118 can be thought as having rear portion 138 that can accommodate other features, such as a keyboard that can be incorporated into an opening in top surface 124 using a heat stake process, for example, whereby heat sensitive posts are melted to form a bond between the keyboard and rear frame 140 described in more detail below. However, since the keyboard is visible to the user, the keyboard is typically formed of material similar to that of outer layer 108 therefore being unsuitable for transferring or distributing loads. Accordingly, the design and construction of rear frame 140 must take into account the fact that the keyboard cannot be relied upon to carry or transfer a load of any substantial magnitude.

After assembly, structural support layer 102 can be used to cover the components assembled into enclosure 118 by, for example, placing structural support layer 102 in contact with inner layer 106. In this way, load path 112 can be formed by connecting inner layer 106 to structural support layer 102 at a plurality of connecting points 142 by way of fasteners that can include screws, rivets, etc. It should be noted that there can be any number and/or combination of types of fasteners used depending upon, of course, the particular design. By securely fastening inner layer 106 to structural support layer 102, the fasteners at connecting points 142 can be used to transfer component of load L in the Z direction (i.e., load component L_{z} )from inner layer 106 "up out of the paper" to structural support layer 102 by way of load path 112 without substantially loading outer layer 108.

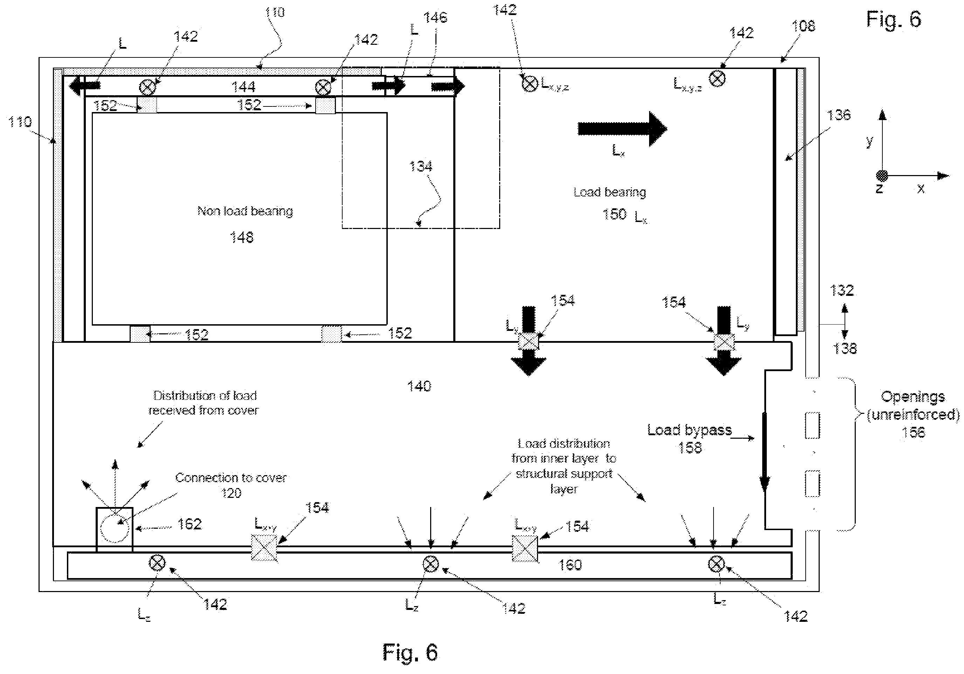

Therefore, by taking into consideration the load carrying or load transferring characteristics as well as the inherent or otherwise enhanced stiffness of components installed in enclosure 118, the ability of inner layer 106 to transfer and/or distribute loads can be enhanced. For example, Fig. 6 shows an embodiment of enclosure 118 having inner layer 106 enhanced for both transferring and distributing loads in accordance with a particular set of operational components, some of which are load bearing and others non-load bearing. Front frame 136 can be configured to include touch pad frame 134. In order to provide structural support for a touch pad, touch pad frame 134 can be rigidly attached to outer layer 108 (using glue, for example) and as part of front frame 136, touch pad frame 134 can facilitate the transfer loads in enclosure 118. In this way the inherent stiffness of touch pad frame 134 can be added to the stiffness of outer layer 108 without adding any more weight than would be otherwise be required. Moreover, as part of front frame 136, touch pad frame 134 can act in conjunction with attachment feature 144 (also part of front frame 136) using bridge feature 146 to hand off load L between attachment feature 144 (used to attach non-load bearing component 148 to outer layer 108) and load bearing component 150. Non-load bearing component 148 can be coupled to attachment feature 144 using load isolating connectors 152 that can substantially isolate non-load bearing component 148 from loads on either front frame 136 (such as load L) or rear frame 140. In a particular embodiment described in more detail below, load isolating connectors 152 can take the form of a slot and pin arrangement. Moreover, since attachment feature 144 can be connected to structural support layer 102 by way of fasteners at connection points 142, attachment feature 144 can in addition to transferring loads in the XY plane transfer z component L_{z} of load L directly to structural support layer 102.

Load bearing component 150 can be attached directly to structural support layer 102 as well as to front frame 136 in essence becoming part of front frame 136. Load bearing component 150 can also be connected to rear frame 140 at load transferring connectors 154. In the described embodiment, rear frame 140 can take the form of a weight reduced metal plate located in rear portion 138 that can be used to provide at least mechanical support for components, such as the MLB that cannot tolerate flexion. Rear frame 140 can be attached directly to enclosure 118 using adhesives such as glue. It should be noted that rear frame 140 can be used to provide support to the keyboard by providing posts onto which heat stakes can be melted during installation of the keyboard into enclosure 118. Since load bearing component 150 can be connected directly to structural support layer 102 and rear frame 140, load bearing component 150 can spatially distribute loads in X, Y, and Z directions. For example, load L can be divided into its three constituent spatial components, {Lₓ L_{y} L_{z}} each of which can be transferred independent of the others. In this way, load component Lₓ can be transferred independent of load component L_{y} by load bearing component 150. For example, load component L_{y} can be transferred to rear frame 140 by way of connectors 154 independent of load component Lₓ. Similarly, load component L_{z} can be transferred to structural support layer 102 by way of fasteners 142 independent of either load components Lₓ or L_{y}.

Rear frame 140 can be formed of strong and rigid material such as metal in the form of magnesium or magnesium alloy. Rear frame 140 can provide support for components, such as the main logic board, or MLB, that do not tolerate much flexion. Rear frame 140 can distribute loads received from load bearing component 150 such by way of connectors 154 as well as support the load isolating function of connectors 152. In some embodiments, rear frame 140 can be configured to provide support to external features fabricated in outer layer 108. For example, openings 156 in outer layer 108 can be used to provide access to data ports, power ports and so on, some of which may be required to have relatively large spans. By providing local bypass structure 158, openings 156 can be protected from loading thereby removing any need for reinforcement of outer layer 108.

Additional support for rear portion 138 can be provided by rear bracket 160 separate from rear frame 140. Rear bracket 160 can serve many purposes not the least of which is to provide additional support for enclosure 118. In the described embodiment, this additional support can be achieved by the fact that rear bracket 158 can act as a cantilever beam. Accordingly, rear bracket 160 can be formed of strong, lightweight, and resilient materials such as metal along the lines of magnesium or magnesium alloy. In addition, rear bracket 160 can aid in the distribution of high concentration loads that if applied to rear frame 140 without dissipation could adversely affect the bond between rear frame 140 and enclosure 118. For example, lid 120 can be coupled to inner layer 106 at connector 162 as part of rear bracket 160 that can extend out from the main body of rear bracket 160. This extension can have the effect of dissipating and distributing high concentration loads received when li1920 is opened or closed. Rear bracket 160 can be attached to rear frame 140 at a number of points using load transferring type connector 154 as well as to structural support layer 102 at connecting points 142 using suitable fasteners. In this way, rear bracket 160 can act to minimize the concentration of loads, aid in the distribution of loads within enclosure 118, and provide added stiffness to enclosure 118.

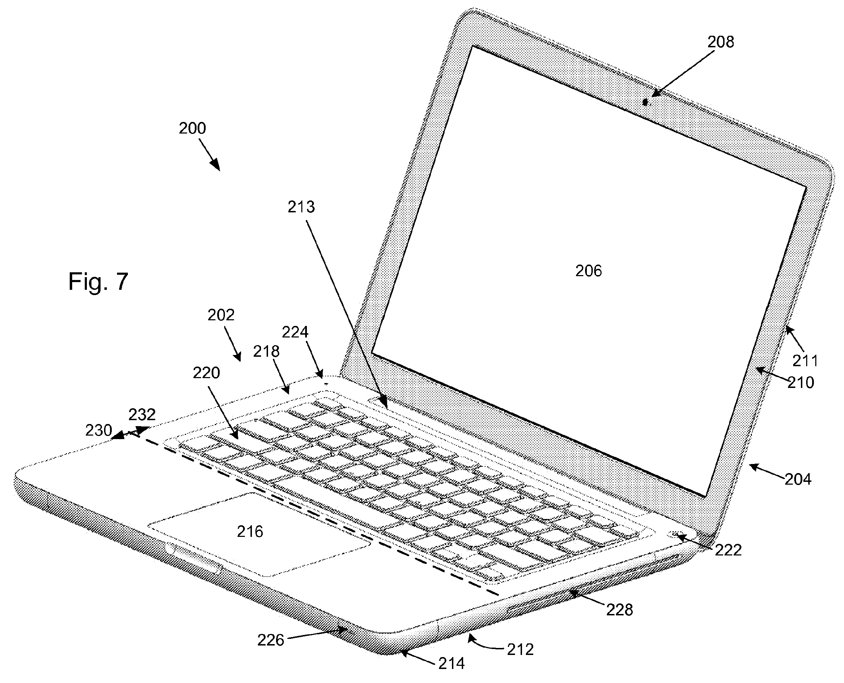

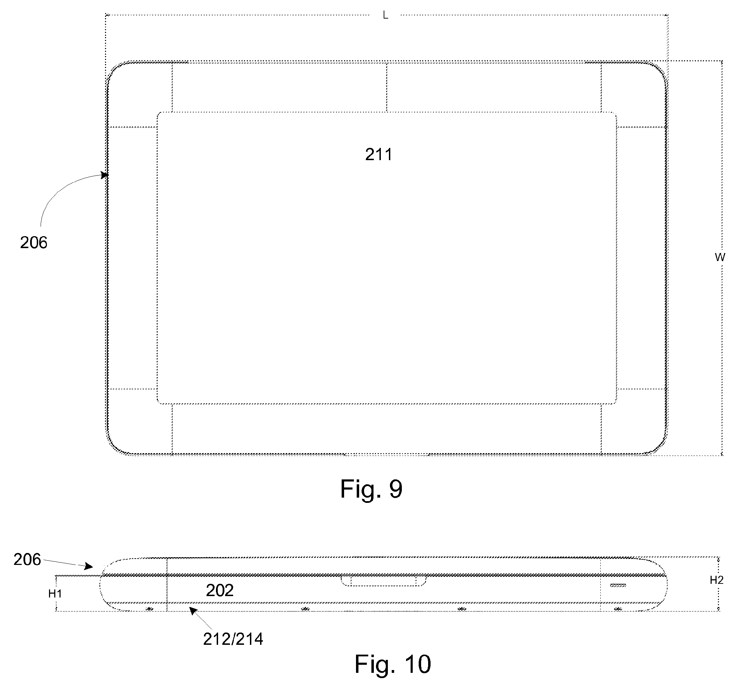

Figs. 7 - 8 show various open perspective views of portable computing device 200 whereas Figs. 9 and 10 show various closed views of portable computing device 200.

Fig. 7 shows a right side front facing perspective view of portable computing device 200 in an open state. Portable computing device 200 can include a body having outer layer 202 and top cover 204 having display 206 with protective layer 207. Top cover 204 can be moved with the aid of display clutch (not shown) by a user from a closed position to remain in an open position and back again. Display 206 can display visual content such as a graphical user interface, still images such as photos as well as video media items such as movies. Display 206 can display images using any appropriate technology such as a liquid crystal display (LCD), OLED, etc. Portable computing device 200 can also include image capture device 208 located on top cover 204. Image capture device 208 can be configured to capture both still and video images.

Display trim (or bezel) 210 formed of suitable compliant material can be supported by structural components (not shown) within top cover 204 but attached to cosmetic rear cover 211. By not attaching display trim 210 directly to a structural component provides for good registration between the cosmetic rear cover 211 and display trim 210. Display trim 210 can enhance the overall appearance of display 206 by hiding operational and structural components as well as focusing a user's attention onto the active area of display 206. Top cover 204 can be coupled to outer layer 202 using a hinge assembly also referred to as display clutch assembly (hidden by a clutch barrel) that in turn can be connected by way of a load path to structural support layer 212. Structural support layer 212 can be formed of composite material or metal such as aluminum. Structural support layer 212 can be covered by protective layer 214 formed of protective yet durable material that is both attractive to the eye and the touch. Protective layer 214 can be formed of TPU that extends up and over an edge of structural support layer 212 to form TPU seam 215 with outer layer 202. TPU seam 315 can preserve an appearance of continuity in the shape of outer layer 202.

Outer layer 202 can include a number of user input devices such as touch pad 216 and keyboard 218. Keyboard 218 can include a plurality of key pads 220 each having a symbol imprinted thereon for identifying to a user the key input associated with the particular key pad. Keyboard 218 can be arranged to receive a discrete user input at each keypad using a finger motion referred to as a keystroke. In the described embodiment, the symbols on each key pad can be laser etched thereby creating an extremely clean and durable imprint that will not fade under the constant application of keystrokes over the life of the portable computing device 200. Touch pad 216 can be configured to receive a user's finger gesturing. A finger gesture can include touch events from more than one finger applied in unison. The gesture can also include a single finger touch event such as a swipe or a tap.

Outer layer 202 can also include power button 222 arranged to assist the user in turning on and turning off portable computing device 200. Audio input device 224 can be used to receive audible input such as speech. Status indictor light (SIL) 226 can be used to provide a user with information. Such information can be related to, for example, an operational status of portable computing device 200. Since outer layer 202 can be formed of semi-translucent plastic material that can transmit a noticeable portion of light (referred to as light bleed), SIL 226 can be configured to substantially eliminate all light except that confined by the geometric confines of a light emitting transparent portion of SIL 226. Outer layer 202 can also include openings used for accessing operational circuits mounted within housing 202. For example, disc slot 228 can be used for inserting disc media such as compact discs (CDs) and or digital versatile discs (DVDs). As a convention, outer layer 202 can be considered to be divided into front portion 230 and rear portion 232 as viewed by a user when operation portable computing device. In this way, touch pad 216 can be considered to be located in front portion 230 and keyboard 218 can be considered to be located in rear portion 232.

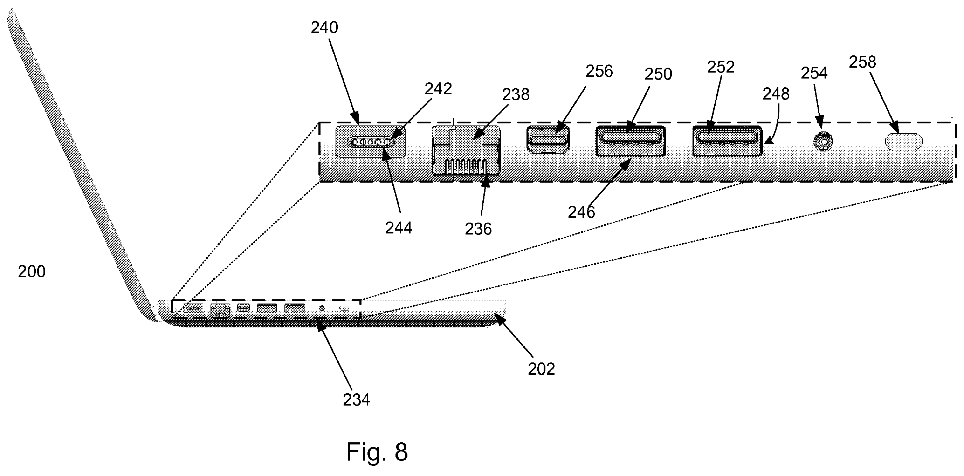

Turning now to Fig. 8 showing left side views of portable computing device 200 and especially a more detailed view of a number of ports 234. Due to the fact that outer layer 202 does not carry any substantial loads, the openings in housing 202 used to accommodate the ports can have a relatively wide span without requiring additional support structures. For example, opening 236 formed in outer layer 202 used to accommodate an Ethernet cable connected to Ethernet port 238 must have a relatively large size in order to accommodate a standard Ethernet cable adapter. The same can be said for opening 240 used to accommodate power connector receptacle 242. It should be noted that opening 240 must have a high aspect ratio in order to accommodate power connector receptacle 242. This is especially true since power connector adapter receptacle 242 includes a relatively large platform 244, or mesa, that allows a power plug to more easily align to power connector receptacle 242. Other openings can include openings 246 and 248 used to accommodate USB cable adapter connected to USB ports 250 and 252, respectively. Audio jack 254, FireWire™ port 256, video port 258, and optional port 260 can also included. In some cases, optional port 260 can be used as a lock port suitable for receiving a locking key along the lines of a Kensington lock well known in the art. In any case, in order to prevent an outside observer from being able to view inside portable computing device 200 using optional port 260, a cap formed of resilient material such as rubber can be mounted inside of optional port 260 to obscure any such views.

Figs. 9 and 10 show a top view and a front view, respectively, of portable computing device 200 in a closed state. More specifically, Fig. 8 illustrates the uniformity of shape of portable computing device 200. This continuity in shape is evident by the continuous lines between top cover 204, outer layer 202, and structural support 212 and protective layer 214.

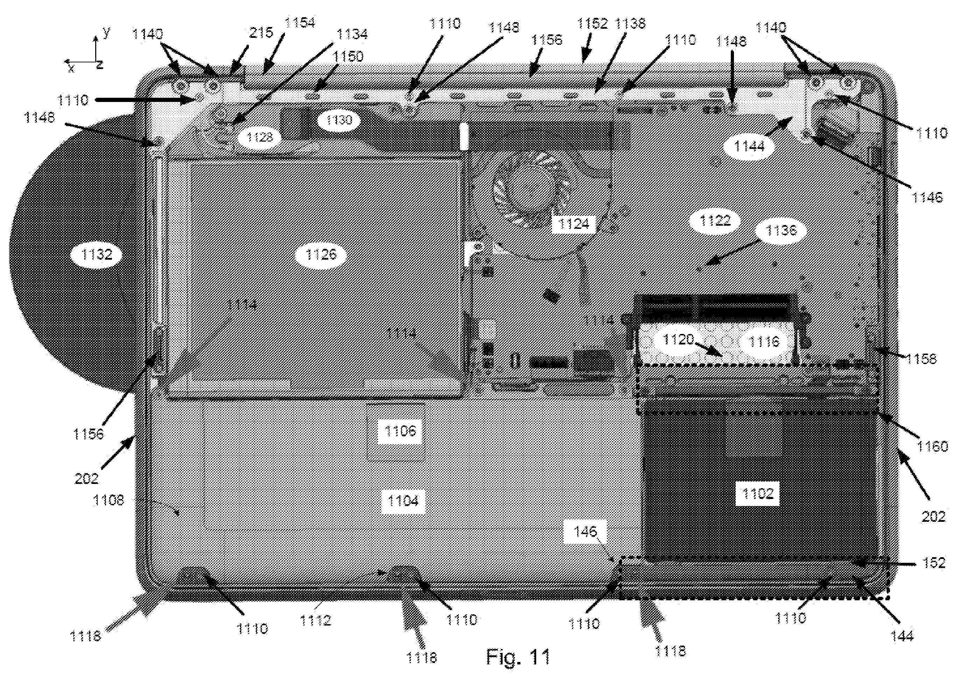

Figs. 11 - 12 show various views of portable computing system 200. More specifically, Fig. 11 shows portable computing system 200 oriented along the lines shown in Fig. 6 revealing the layout of various operational and structural components and their relationship to each other. Accordingly, non-load bearing component 148 can take the form of hard disc drive (HDD) 1102 connected to outer layer 202 by way of attachment feature 144. Attachment feature 144 can be coupled to load bearing component 150 by way of bridge structure 146. In the described embodiment load bearing component 150 can take the form of embedded battery assembly 1104. Battery assembly 1104 can include pull tab 1106 used to assist in removing battery assembly 1104 from enclosure 118. In order to provide additional stiffness to outer layer 202, battery body 1108 (used to enclose and support battery cells associated with battery assembly 1104) can have a form and composition that can be mechanically coupled to and thereby add to the stiffness of outer layer 202. Battery body 1108 can have a shape that can conform to the shape an interior surface of body 202 presenting a tighter, more integrated fit and cleaner more appealing appearance when structural support layer 102 is removed.

At least some of holes 1110 are suitable for receiving fasteners (that correspond to connectors 142 of Fig. 6) that can connect to structural support layer 102 by way of attachment feature 1112. Battery body 1108 can include holes 1114 that can accommodate fasteners (that correspond to load transferring connectors 154 shown in Fig. 6) that can couple battery assembly 1104 to rear frame 1116. Attachment feature 1112 can also include holes 1118 arranged to accept fasteners that can secure battery assembly 1104 to inner layer 106 by way of attachment feature 1112 (along the lines of fastener 142 shown in Fig. 6). In this way, battery assembly 1104 can facilitate the transfer and distribution of load L in any spatial coordinate. For example, battery assembly 1104 can transfer load L having spatial coordinates{Lₓ, L_{y}, L_{z}} to structural support layer 102 (L_{z}), or inner layer 106 (Lₓ), or rear frame 1116 (L_{y}).

Rear frame 1116 can be formed of lightweight, electrically conductive material such as aluminum, magnesium or magnesium alloy. The weight of rear frame 1116 can be further reduced by forming a plurality of holes 1120 in rear frame 1116 using any number of techniques such as stamping. The plurality of holes 1120 can reduce the weight of rear frame 1116 without substantially affecting the strength of rear frame 1116 or its ability to provide support for components that have little or no tolerance for flex. Such components can include main logic board (MLB) 1122. Due to the relatively large number of individual components on MLB 1120 that are surface mounted or are otherwise susceptible to being damaged by flexion, MLB 1122 must be firmly supported. Other components mounted to and supported by rear frame 1116 can include fan 1124, optical disc drive 1126, and integrated audio/wireless card 1128 electrically connected to MLB 1122 by way of flex 1130. It should be noted that, integrated wireless audio card 1128 in the embodiment shown is not mounted directly to rear frame 1116 but rather rests on a metallic platform that is part of ODD 1126 used to accommodate optical media such as optical disc 1132. In addition to providing support, the metal platform can provide an electrical ground to which display grounding wires 1134 can be connected. Grounding pins (sometimes referred to as pogo pins) 1136 can be used to make electrical contact with structural support layer 102. In this way, an RF shield can be formed that can contain RF energy generated by various components on MLB 1122. Moreover, the RF shield can also protect circuits such as integrated wireless/audio card 1128 from RF leakage and interference that can seriously impact the wireless performance of integrated wireless/audio card 1128.

Rear bracket 1138 can be formed of lightweight and strong metal such as magnesium or magnesium alloy and as such can be coupled to rear frame 1116 and structural support layer 102. Rear bracket 1138 can also function along the lines of a cantilever beam providing additional mechanical support to outer layer 202. Furthermore, rear bracket 1138 can be formed to include vent like structures that can facilitate the transfer of air between enclosure 118 and the external environment while at the same time obscuring an interior view of enclosure 118 from the outside. Rear bracket 1138 can be part of inner layer 106 and as such can transfer loads from top cover 204 by way of a display clutch (not shown) at connectors 1140 (that correspond to connectors 154 in Fig. 6) to rear frame 1116 and connector 1110. In the described embodiment, rear bracket 1138 can include an extended portion 1144 that can act as a cantilever beam by connecting rear bracket 1138 by way of connector 1146 (corresponding to connector 162 of Fig. 6) directly to rear frame 1116. In this way, high concentrated loads, such as those generated when cover 210 is opened or closed, can be distributed over a wider area of rear frame 1116 than would otherwise be the case. This distributing of these high concentrated loads can result in reducing the likelihood of adversely affecting the adhesive bond between rear frame 1116 and outer layer 202 to which it is attached. Rear bracket 1138 can also attach to rear frame 1116 at connectors 1148 (corresponding to connectors 154 of Fig. 6). Rear frame 1138 can also include electrical contacts 1150 that can provide a ground path to structural support layer 102.

In order to enhance the aesthetic appeal of portable computing device 200 in conjunction with providing a structural sound product, visible seams are generally deemed to be undesirable. Besides being a visual distraction, seams can attract dirt and dust and potentially create structural integrity problems. Therefore, attempts to eliminate or at least reduce the visual impact of seams can include implementing display clutch barrel 1152 in such a way that in a closed state, display clutch seam 1154 cannot be normally seen by a user. Moreover, display clutch seam 1154 can be aligned with TPU seam 215. In this way, display clutch seam 1154 and TPU seam 215 provide an appearance of continuity when portable computing device 200 is seen in a bottom view. Clutch barrel 1152 can include circuits that can support other components. For example, clutch barrel 1152 can include an RF antenna used by integrated wireless/audio card 1128. In order to provide easy access to these circuits, clutch barrel 1152 can include clutch barrel cover 1156 that can be removed and attached in a zipper like action. It should be noted that clutch barrel 1152 is described in more detail below.

Portable computing device 200 can also include other attachment features, such as restricted Z stack attachment feature 1158 that can attach a component, such as ODD 1126, in such a way as to restrict any motion in the Z direction but providing ample motion in the XY plane for post insertion adjustments. Load absorbing attachment feature 1160 (more specific example load absorbing attachment feature 152 shown in Fig. 6) can be used in conjunction with load absorbing attachment feature 152 to attach non-load bearing components such as HDD 1102 to rear frame 1116 and inner layer 106, respectively.

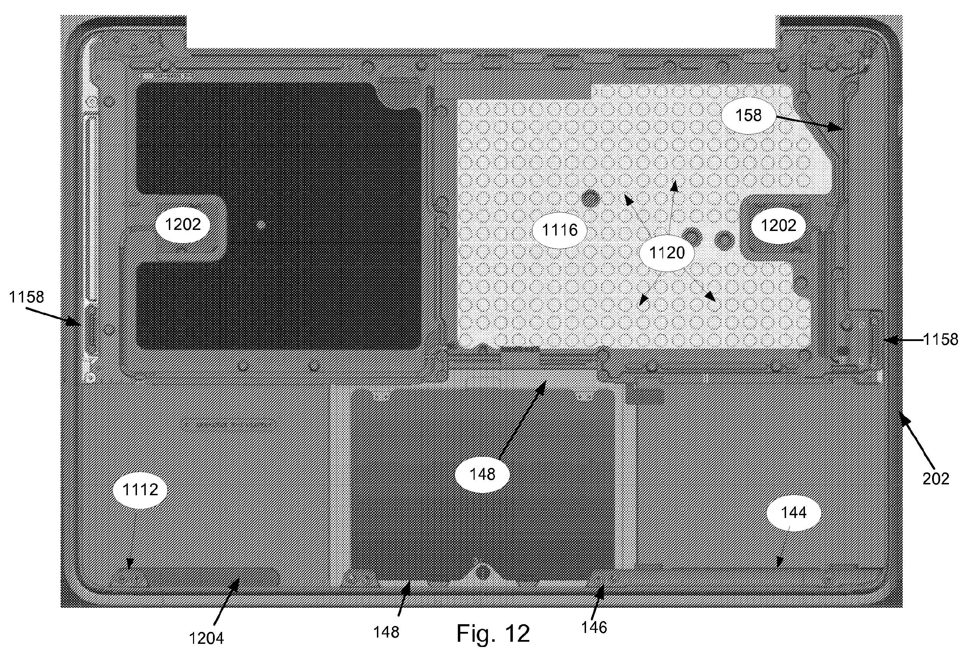

Fig. 12 shows a representation of top sub-assembly 1200 of portable computing device 200 in accordance with the described embodiments that includes installation pads 1202 suitable for placement of piezo-electric audio transducers and attraction plate 1204.

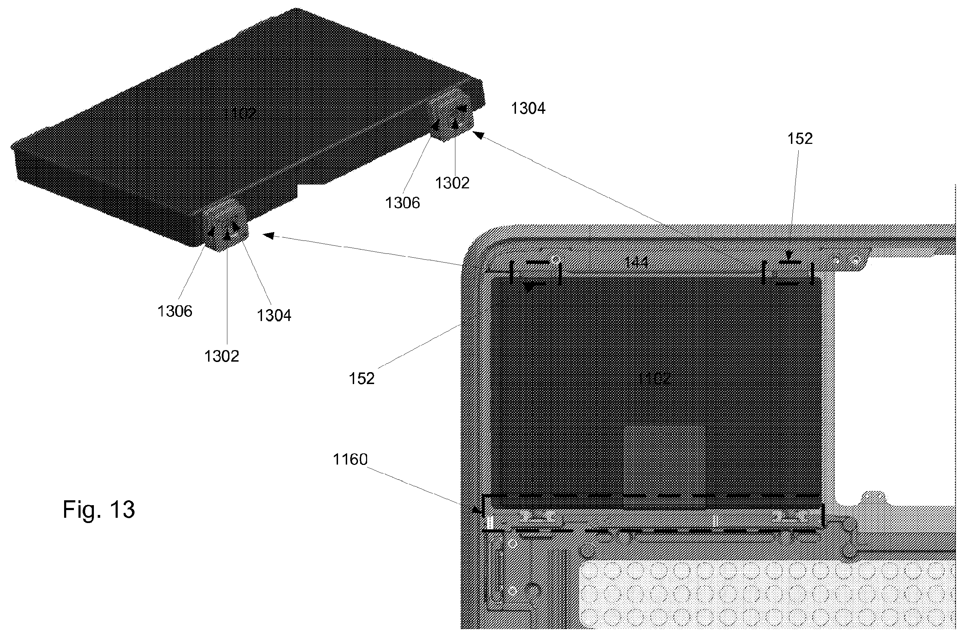

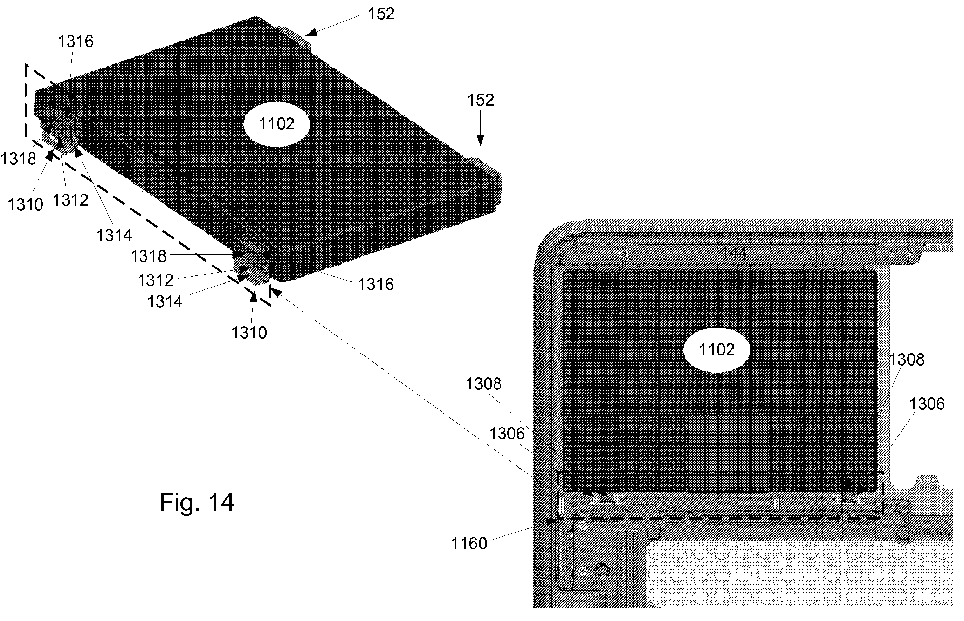

Figs. 13 and 14 show load absorbing attachment feature 1160 and 152 in accordance with the described embodiments. As discussed above, load absorbing attachment features can be used to attach non-load bearing components such as HDD 1102 to inner layer 106. In this regard, attachment feature 152 can include opening 1302 arranged to receive a mounting post attached to the non-load bearing component. In order to isolate and or absorb any shocks, opening 1302 can be surrounded by support structure 1304 arranged to support the mounting post in a firm manner. Support structure 1304 can be formed of material, such as hard plastic, arranged to transfer and distribute a point load originating at opening 1302 (from, for example, the mounting post). The point load can be distributed out from support structure 1304 and into load (or shock) absorbing material 1306 that can take the form of soft plastic. In this way, the point load received at support structure 1304 can be dispersed and absorbed by load absorbing material 1306.

In order to install the non-load bearing component as shown in Fig. 14, installation posts 1308 on one side of the non-load bearing component are fully inserted into openings 1302. The non-load bearing component can then be lowered down onto receiving portions 1310 of attachment feature 1160. In the described embodiment, receiving portions 1310 can be formed of essentially the same material as attachment feature 152 having an upward facing semi-circular support portion 1312 within load, or shock, absorbing portion 1314 and sized to receive installation post 1308 placed on the other side of the non-load bearing component. Once installation post 1308 is placed within support portion 1312, upper locking portion 1316 having complementary shaped locking portions 1318 can be placed upon receiving portions 1310. Once properly placed onto receiving portions 1310, locking portion 1316 can lock installation pin 1308 into place. In this way, installation posts are substantially locked in place and any shocks or loads (that can take the form of a point load) at the receiving portion can be "spread out" by the locking portion 1314.

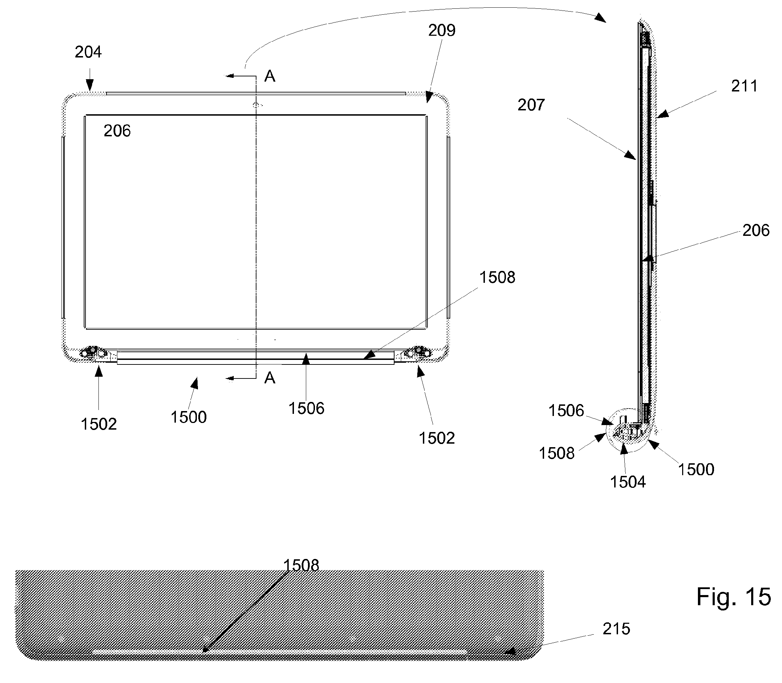

Figs. 15 - 17 show various views of top cover 204 and, in particular, specific embodiments of display clutch assembly 1500. Fig. 15 shows front view of top cover 204 highlighting display 206 (display protective cover 207 being more clearly shown in "A" cross section), and bezel 209. Display clutch assembly 1500 can be associated with connectors 1502 that can connect display inner frame to rear brace 1138 and rear frame 1116 at connectors 1140 and 1110 (discussed above with reference to Fig. 11). Display clutch assembly 1500 can be partially enclosed within extended portion 1504 of rear cover 211. Display clutch assembly 1500 can thereafter be fully enclosed by joining extended portion 1504 and clutch barrel 1506 using a number of connectors forming a seam referred to as clutch barrel reveal 1508. Adding to the aesthetic look of feel, reveal 1508 cannot be readily seen by a user when top cover 204 is in the closed position. Furthermore, when top cover 204 is in the open position, reveal 1508 can align with seam 215 giving the impression of continuity even in those areas not expected to be readily seen by a user in normal operational use.

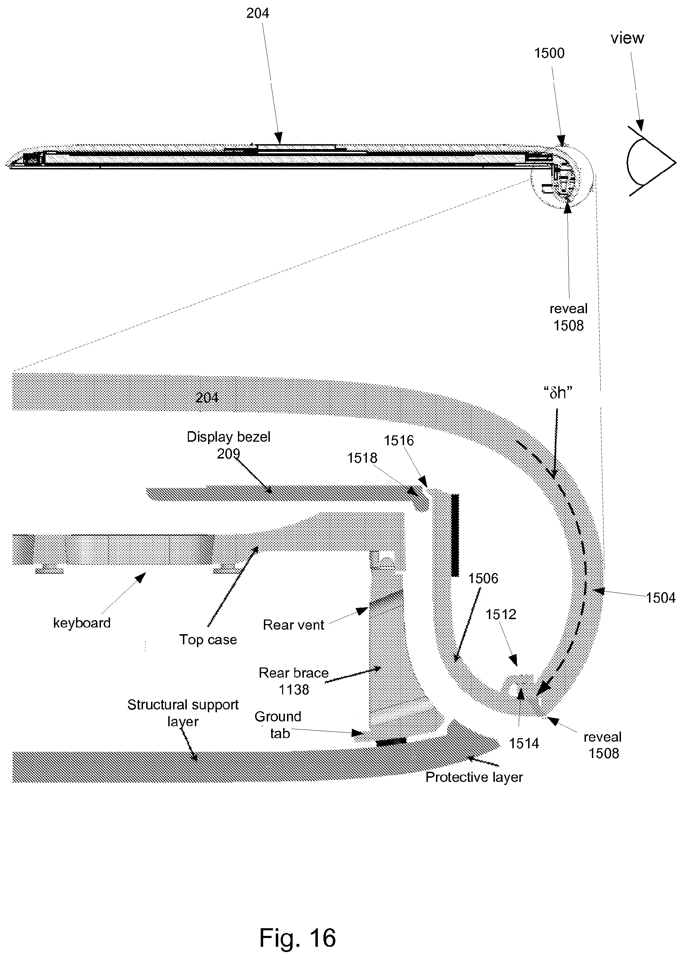

As shown in more detail in Fig. 16, display clutch assembly 1500 can enclose and therefore hide from view a number of electrical components (such as an RF antenna). Furthermore, extended portion 1504 can provide for a longer uninterrupted span for top cover 204. In this way, the beam height "h" of top cover 204 can be increased by about δh providing additional stiffness to top cover 204. Clutch barrel 1506 can include a number of snap connectors 1512 that can be used in conjunction with pass throughs 1514 on extended portion 1504 to secure clutch barrel 1506 to top cover 204. For example, clutch barrel 1506 can be anchored to display bezel 206 by attaching lip 1516 to support 1508 and then secured to extended portion 1504 by inserting snap connector 1512 into pass through 1514.

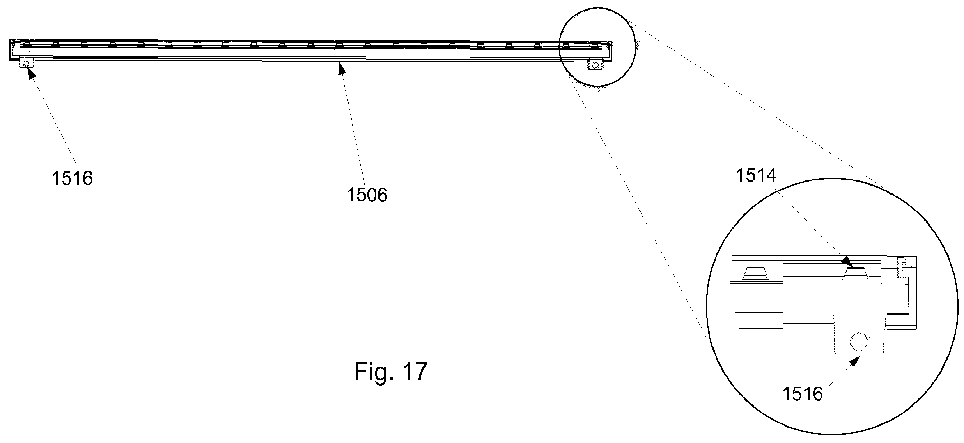

Fig. 17 shows a detailed view of clutch barrel 1506 and in particular a close up, interior view of pass through 1514 on clutch barrel 1506 used in combination with snap connector 1512 on extended portion 1504 to secure clutch barrel 1506 to top cover 204. Clutch barrel 1506 can include plurality of pass-throughs 1514 each of which can accept a corresponding snap connector 1512. In this way, clutch barrel 1506 can be securely connected to top cover 204 and yet, as with a zipper, easily removed when necessary by merely "unzipping" clutch barrel 1506 from top cover 204. This unzipping can be accomplished by pulling and serially releasing a snap connector from the corresponding pass through. In this way, when top cover 204 and clutch barrel 1506 are joined, the strength of that joining is about equal to the strength of a single connection multiplied by the total number of such connections. Therefore, the relatively large number of such connections can result in a strong joint far surpassing the strength of a single connection. However, as with a zipper, clutch barrel 1506 can be removed simply and easily by serially undoing each connection one at a time.

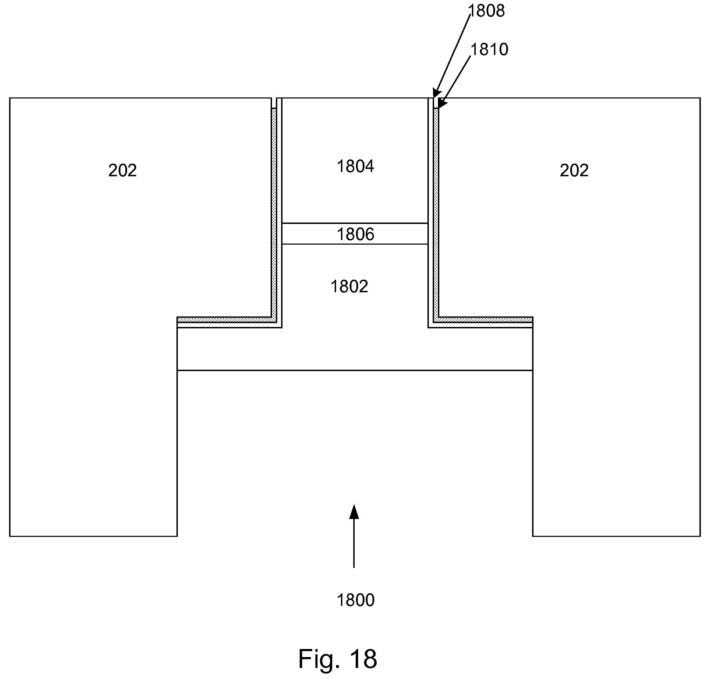

Fig. 18 shows an embodiment of SIL 226. SIL 226 can take the form of laminate structure 1800 having first layer of clear plastic 1802 and second layer of clear plastic 1804 each being capable of transmitting substantially all light incident thereon. Light filtering medium 1806 can be placed between the layers of plastic. Light filtering medium 1806 can take the form of ink having a color corresponding to the desired color of the light emitted by SIL 226. In the described embodiment, the ink can be a color in keeping with the overall look of portable computing device 200. Ink 1806 can color filter the light passing between the first and the second layers of plastic such that all light transmitted by the second layer of plastic is essentially the same color as the ink, which in this case is substantially white. Ink 1806 can also act to bond the layers of plastic together. Third layer of ink 1808 can be placed on the sides of laminate structure 1800. The third layer of ink being substantially the same color as layer 1806. The third layer of ink providing a uniform appearance of the light emitted by SIL 226 when viewed by a user. In order to prevent light from escaping to outer layer 202, fourth layer 1810 of light absorbing material can be placed on top of the third layer of ink. The fourth layer can be gray, for example or any appropriate color that will absorb light without becoming noticeable to the user.

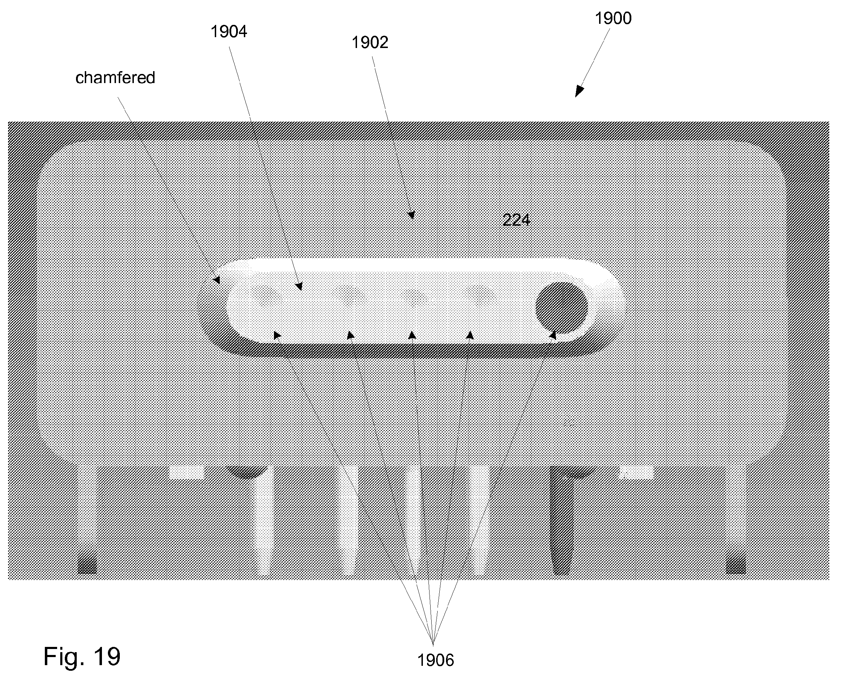

Fig. 19 shows magnetic power module (MPM) 1900 suitable for use with portable computing device 200. In order to avoid damaging outer layer 202 when repeatedly coupling a power cable to portable computing device 200, power connector 224 can be shaped to include an alignment portion that can also support a plurality of power connectors. The power connectors being used to conduct power from an external power supply to portable computing device 200. In the described embodiment, alignment feature 1902 allows the power connector 244 to guide the power adapter's complementary connector as it is moved towards the power connector 244 in order to make a connection. This guidance causes the power connector 244 to align with the power adapter to aid the connection of the two. An example of an alignment feature 1902 is the chamfered edges of the pedestal 1904. The combination of the force exerted towards the power connector 244 (by the user and the by the magnetic attraction of the opposing magnetic connectors) and the chamfered edges of the pedestal 1904 cause the connector on the power adapter to properly align with the pedestal 1904. Therefore the electrical connectors 1906 from both the power connector 244 and the power adapter connector are also properly aligned.

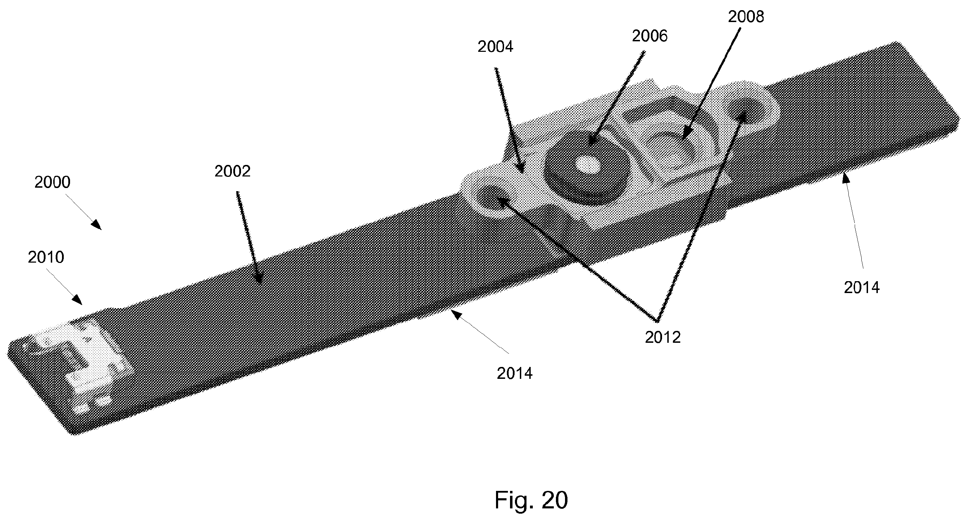

Fig. 20 is a perspective view of camera module 2000 in accordance with the described embodiments. Camera module 2000 can include camera printed circuit board (PCB) 2002, lens holder 2004, camera lens 2006, camera LED indicator 2008, and data transmission connector 2010. Alignment features 2012 can have a chamfered interior shape that can aid in aligning and receiving alignment pins. Also shown are support pads 2014 having one side formed of foam other suitable material which are in contact with the bottom of PCB 2002 and another side in contact with a supporting structure, such as inner frame of top cover 204. Support pads 2014 can aid in the movement of camera assembly 2000 within a camera assembly recess formed in the supporting structure.

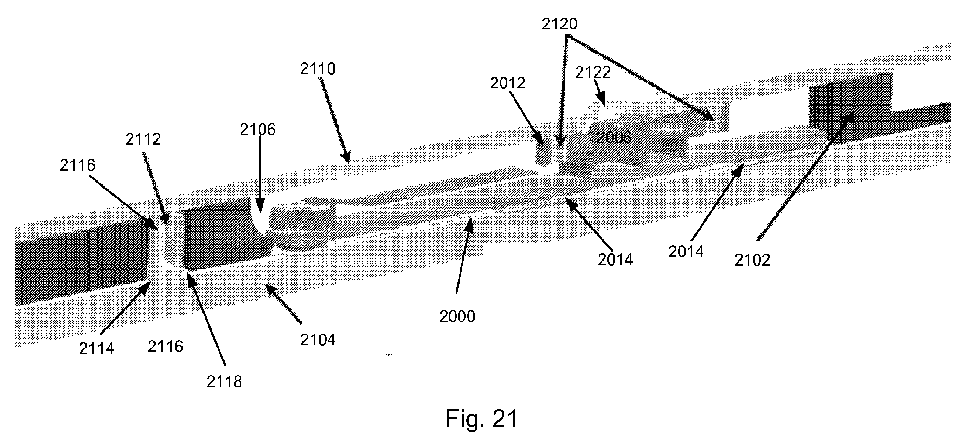

Fig. 21 shows cut away side view of camera assembly 2000 incorporated into top cover 204. In the described embodiment, frame 2102 can be formed of magnesium or magnesium alloy arranged to support housing 2104 that can be formed of plastic. Camera assembly 2000 can be placed within recess 2106 formed in frame 2102 having a size and location to accommodate camera assembly 2000. In order to install and properly align camera assembly 2000, in particular, camera lens 2008 to lens opening 2108 in bezel 2110, bezel to housing alignment posts 2112 located on an inside surface of bezel 2110 can be placed into and coupled with corresponding receiver assembly 2114. In the described embodiment, receiver assembly 2114 can have a tube like body 2116 originating at housing 2104 and sized to receive alignment post 2112. During assembly, housing 2104 can be mounted to frame 2102 by inserting body 2116 into frame alignment holes 2118. Once housing 2104 is securely mounted to frame 2102, bezel 2110 can be mounted to frame 2102 but registered to housing 2104 by inserting alignment posts 2112 into the corresponding open end of receiver assembly 2114 and into body 2116. It should be noted, however, that alignment post 2112 can be longer than bezel to camera alignment post 2120. In this way, alignment post 2112 can engage receiver assembly 2114 prior to the engagement of alignment post 2120 and alignment feature 2012. Due to the chamfered nature of alignment feature 2012, the engagement of alignment post 2120 with 2012 can have the effect of moving camera assembly 2000 if there is any mis-alignment between camera lens 2006 and lens opening 2122 in bezel 2110. In this way, any mis-alignment between camera lens 2006 and lens opening 2122 can be eliminated efficiently and easily.

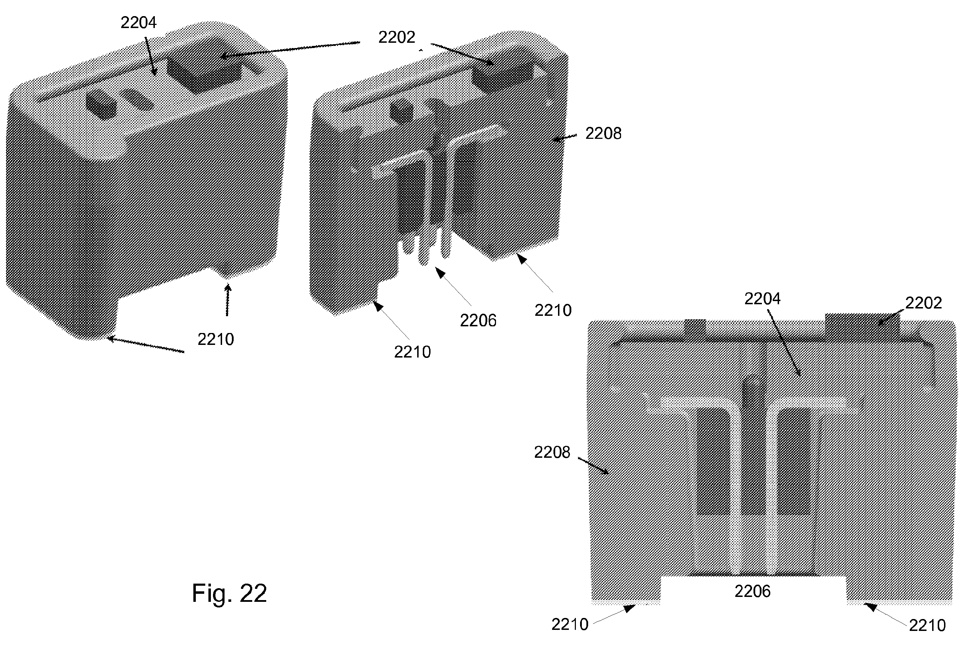

FIG. 22 shows a full and cut away perspective views of Hall effect sensor (HES) assembly 2200 in accordance with the described embodiments. HES assembly 2200 can include Hall effect sensor 2202, PCB assembly 2204, and electrical connectors 2206. Compression molded boot 2208 can encapsulate most of Hall effect sensor 2200 leaving a top portion of PCB assembly 2204 exposed as well as enough of electrical connectors 2206 for electrically connecting HES assembly 2200 to electrical connectors on a motherboard. In the described embodiment, HES assembly 2200 can be surface mounted directed to a motherboard, or other such PCB, using adhesive layer 2210 that can take the form of double side adhesive tape. Moreover, HES assembly 2200 can be electrically connected to components on the motherboard by way of electrical connectors 2206 without the need for flex or other indirect connectors. In this way, the cost of and the time consumed in assembly can be reduced.

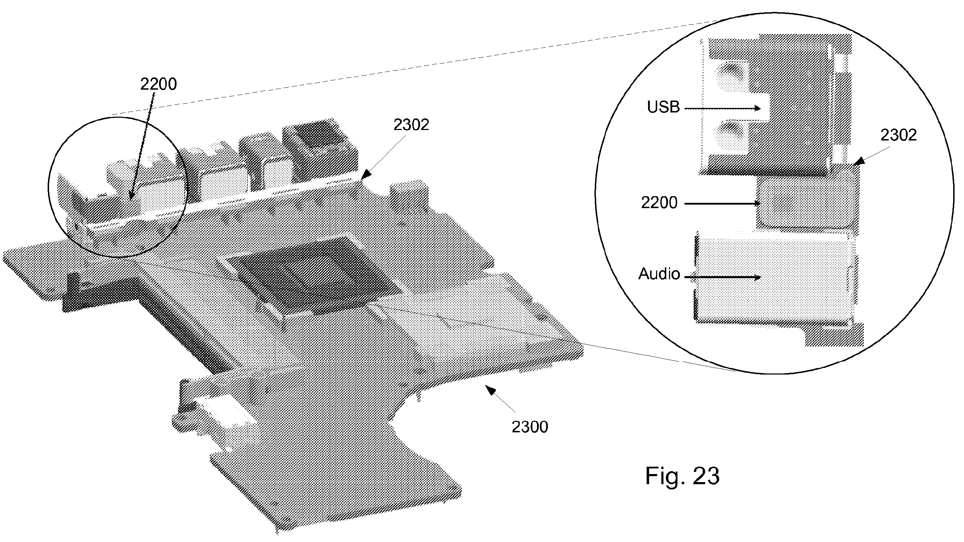

Fig. 23 is a full view of representative motherboard 2300 (along the lines of MLB 1116) in accordance with the described embodiments. HES 2200 can be mounted to motherboard 2300 by way of riser board 2302. Riser board 2302 can be generally inexpensive to assemble and parts or modules may be attached to it relatively easily. In one embodiment, HES assembly 2200 can be attached to riser board 2302 by use of connector 2206. Using connector 2206 to attach HES assembly 2200 to motherboard 2300 is more efficient and less costly than soldering HES assembly 2200 on to motherboard 2300 or use flex circuitry. Boot 2208 and adhesive 2210 can act together to maintain HES assembly 2200 securely in place. In addition to easing assembly, riser board 2302 is closer to the top surface of the main housing making HES assembly 2200 more sensitive to detection of the magnet in the display housing.

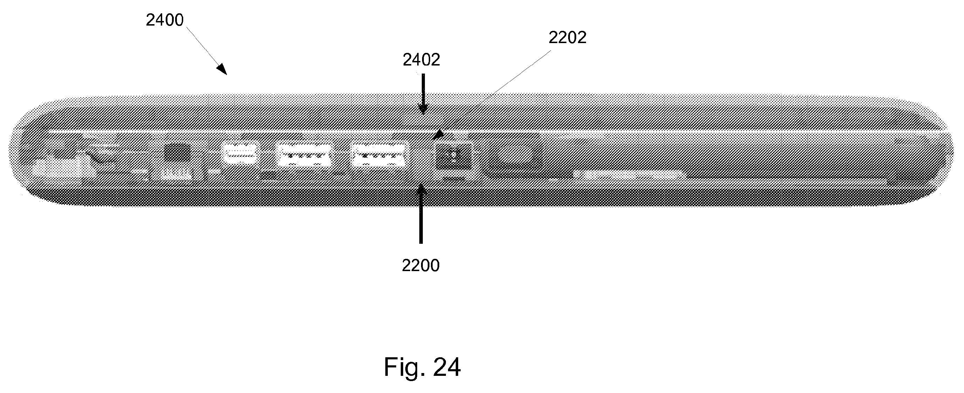

Fig. 24 shows a translucent side view of representative portable computer 2400 in a closed position illustrating the proximity of source magnet 2402 and Hall effect sensor 2202 in accordance with the described embodiments. By elevating the position of Hall effect sensor 2202 relative to motherboard 2300, the distance between source magnet 2402 and Hall effect sensor 2202 can be reduced over conventionally mounted Hall effect sensors. By reducing the distance between source magnet 2402 and Hall effect sensor 2202, Hall effect sensor 2202 can have improved relative sensitivity without resorting to a sensor that is more sensitive and therefore more costly and/or a stronger source magnet.

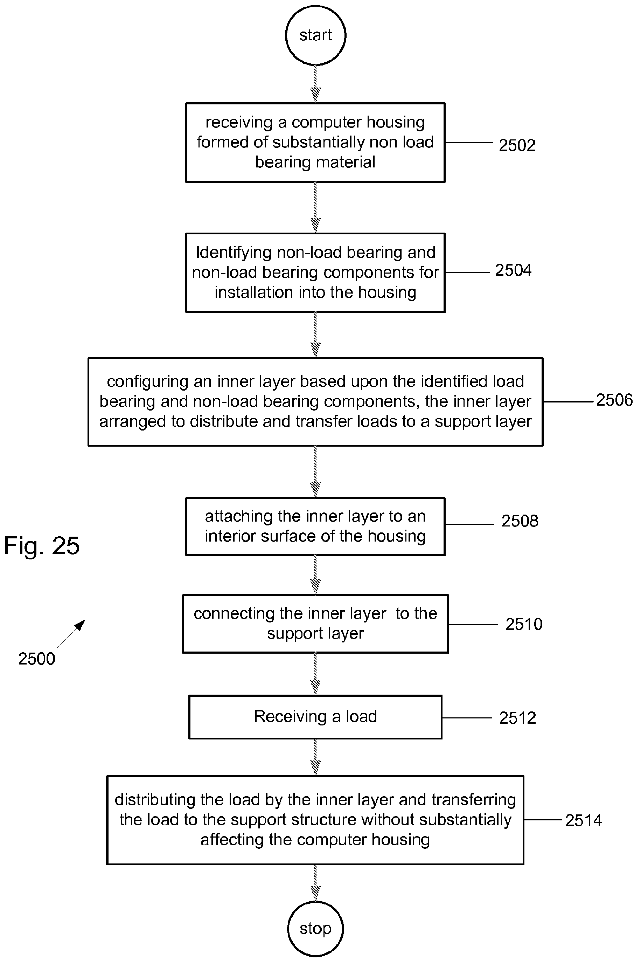

Fig. 25 shows a flowchart detailing process 2500 in accordance with the described embodiments. Process 2500 can provide for enhanced load distribution and transference in systems having a housing formed of substantially non-load bearing material. Such material can include, for example, plastic along the lines of PCABS well known for use in portable computers such as laptops. However, process 2500 can describe a computer framework that can provide for load isolating the non-load bearing housing by utilizing an inner layer adapted to both distribute a load and transfer the load to a structural support layer without substantially affecting the housing.

Process 2500 can be carried out by performing at least the following. At 2502, a computer housing can be received. The computer housing can be formed of material, such as PCABS, that is substantially non-load bearing. As such, housing 2502 can have a shape that is widely varied and can have a number of openings that facilitate access to internal circuits such as an audio circuit, a USB circuit, and so on. At 2504, based upon the computer assembly to be installed within the computer housing, internal components that are load bearing and non-load bearing are identified. By load bearing, it is meant that the internal component can accept a load without substantially affecting either its structural or operational integrity. For example, an embedded battery having a shape that is stiff and resistant to flexing can be considered to be load bearing. By non-load bearing, it is meant that the internal component cannot accept the load without substantially affecting its structural or operational integrity. A hard disc drive (HDD) although relatively stiff and resistant to flexing, can be considered to be an example of a non-load bearing component due to the potential deleterious effects of loads being applied to the drive, in particular, the R/W circuitry for non-solid state type memory. Furthermore, some components can be considered to be intolerant of being flexed and therefore must be supported in such as way as to avoid any flexing. Such components can include assemblies of components a number of which are surface mounted to a printed circuit board, or PCB, that can include, for example, a main logic board, or MLB.

Once the non-load bearing and load bearing internal components are identified (as well as the flex intolerant components), an internal layer can be configured at 2506. The internal layer can be used to distribute and transfer a load without substantially affecting the housing. In the described embodiment, the load can be distributed within the internal layer in order to, for example, dissipate high concentration loads that could have an adverse impact on components or parts of the inner layer. For example, a high concentrated load received from the opening and closing of a display cover can cause an adhesive bond between a support structure and the housing to be damaged. At 2508, the inner layer can be attached to the housing. Typically, the inner layer can be attached using an adhesive such as glue that does not facilitate the transfer of the load from the inner layer to the housing nor should it substantially affect the load transferring and distribution properties of the inner layer.

At 2510, the inner layer is connected to a structural support layer. The structural support layer can be formed of metal such as aluminum. In this way, any load received at 2512 can be distributed by the inner layer and transferred to the structural support layer without substantially affecting the housing at 2514.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium for controlling assembly operations or as computer readable code on a computer readable medium for controlling a manufacturing line used to fabricate housings. The computer readable medium is any data storage device that can store data which can thereafter be read by a computer system. Examples of the computer readable medium include read-only memory, random-access memory, CD-ROMs, DVDs, magnetic tape, optical data storage devices, and carrier waves. The computer readable medium can also be distributed over network-coupled computer systems so that the computer readable code is stored and executed in a distributed fashion.

### DISPLAY HOUSING

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

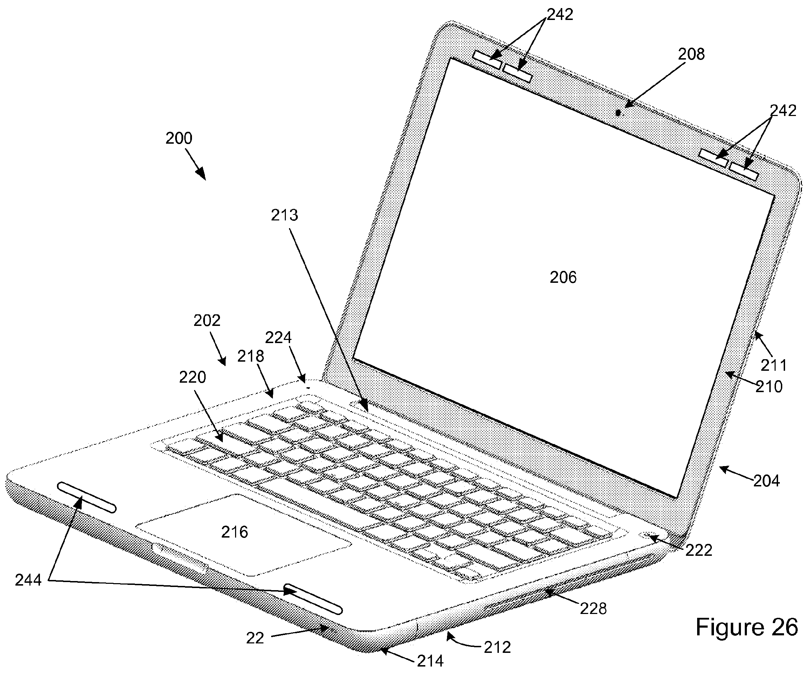

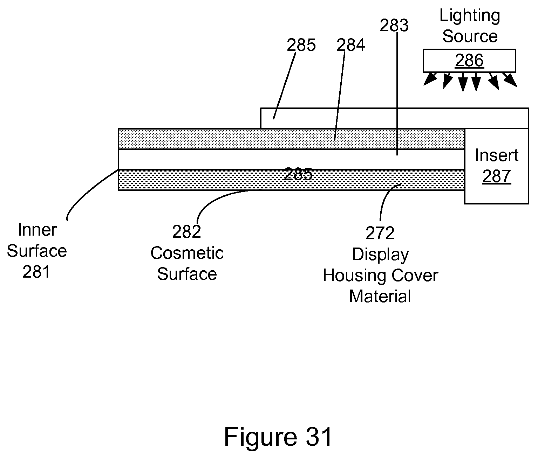

The following relates to a multi-part housing suitable for a portable computing device such as a laptop computer, netbook computer, tablet computer, etc and in particular a display housing cover for the laptop computer. A general description of a portable computing device is described with respect to ***Fig. 26****.* In particular embodiments, the display housing can have a plastic cover joined to a metallic inner frame. A bonding scheme for joining the cover to the metallic frame that accounts for different thermal expansion rates in the materials is described with respect to Figs. 2-4. Methods and apparatus for providing an illuminated portion of display housing cover are described with respect to Figs. 31-32. These and other embodiments of the invention are discussed below with reference to Figs. 26-32. However, those skilled in the art will readily appreciate that the detailed description given herein with respect to these figures is for explanatory purposes as the invention extends beyond these limited embodiments.

Fig. 26 shows a right side front facing perspective view of portable computing device 200 in an open state. Portable computing device 200 can include body 202 and display housing 204 having display 206. The body can, in turn, include a cosmetic outer layer supported by an inner layer that can both transfer and distribute loads applied to the portable computing device. The outer layer can be formed of lightweight yet durable materials. Such materials can include, for example, blends of poly-carbonate and acrylonitrile butadiene styrene (ABS), or PCABS that exhibit high flow, toughness and heat resistance well suited for portable applications. The inner layer can be formed of metal such as magnesium or magnesium alloy.

Display housing 204 can be moved by a user from a closed position to an open position as shown. Display 206 can display visual content such as a graphical user interface, still images such as photos as well as video media items such as movies. Display 206 can display images using any appropriate technology such as a liquid crystal display (LCD), OLED, etc. Portable computing device 200 can also include image capture device 208 located on display housing 204. Compliant display trim 210 formed of suitable compliant material can be supported by structural components (not shown) within display housing 204 but attached to display housing cover 211 of display housing 204.

Display housing 204 can be coupled to body 202 using a hinge assembly (hidden by clutch barrel 213) that in turn can be connected by way of a load path to structural support layer 212. Body 202 can include a number of user input devices such as touch pad 216 and keyboard 218. Keyboard 218 can include a plurality of key pads 220 each having a symbol imprinted thereon for identifying to a user the key input associated with the particular key pad. Touch pad 216 can be configured to receive a user's finger gesturing.

Body 202 can also include power button 222 arranged to assist the user in turning on and turning off portable computing device 200. Audio input device 224 can be used as a microphone to receive audible input such as speech. Status indictor light (SIL) 226 can be used to provide a user with information. Body 202 can also include openings used for accessing operational circuits mounted within housing 202. For example, disc slot 228 can be used for inserting disc media such as compact discs (CDs) and or digital versatile discs (DVDs).

The display housing 204 includes two sets of magnetic latches 242 above the display 206. The magnetic latches 242 are configured to line up with metal plates 244 on the body 202. When the portable computing device 200 is in a closed configuration, the magnetic latches 242 align with the metal plates 244. A magnetic interaction between the latches 242 and the steel plates 244 generates a force that can help to keep the portable computing device in a closed configuration.

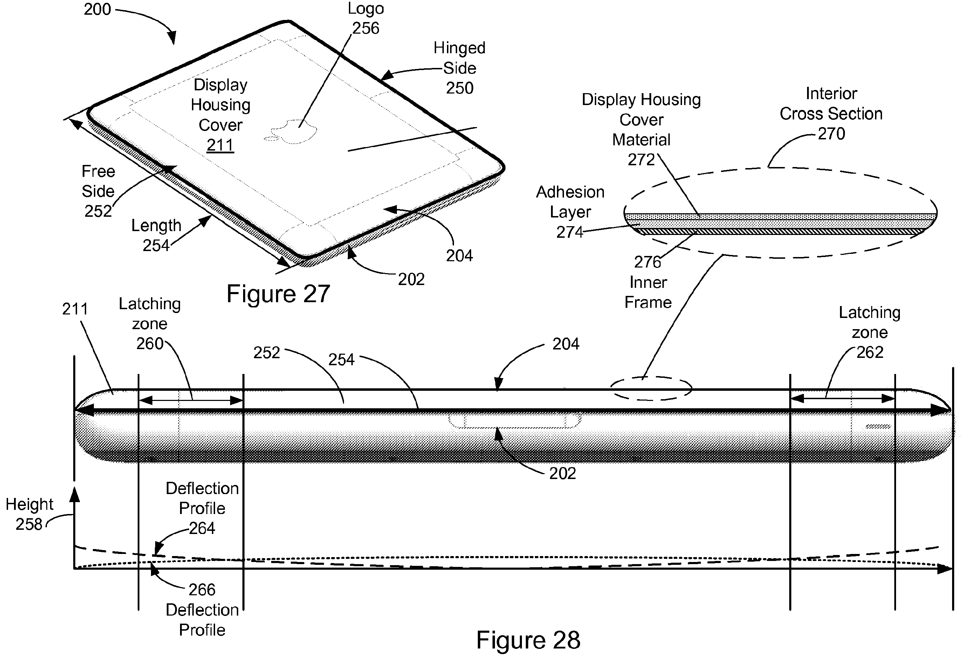

Fig. 27 shows a perspective view of a portable computing device 200 in a closed configuration. As described with respect to FIG. 26, the portable computing device 200 includes a body 202 and a display housing 204. In the closed configured configuration, a display housing cover 211 of the display housing is visible. In this embodiment, the portable computing device 200 includes a hinged side 250 where the body 202 and the display housing 204 are joined. Opposite the hinged side 250 is free side 252 with length 254 of the display housing 204. The free side 252 of the display housing 204 can be moved away from body 202 to expose the display 206 and keyboard 218 as shown in FIG. 26.

Fig. 28 is a front view of a portable computing device 200 and a cross section 270 of a portion of the display housing 204. As is shown in the cross section 270, the display housing cover 211 can be constructed of a display housing material 272, such as a type of plastic. The display housing cover 211 can be primarily cosmetic in nature such that other components provide most of the structural stiffness of the display housing 204. In one embodiment, the display housing cover 211 can be joined to an inner frame 276 for providing structural stiffness. The inner frame 276 can be a metal such as a magnesium alloy.

The display housing cover 211 can be joined to an inner frame, such as 276, using a combination of fasteners (e.g., screws), adhesives or other types of bonding agents. In one embodiment, as shown in the interior cross section 270, the display housing cover material 272 can be joined to the inner frame using primarily an adhesion layer 274. In a particular embodiment, a plastic display housing cover is joined to a metallic inner frame using only adhesion layer and without using fasteners, such as screws. A bonding scheme for joining the display housing cover material 272 to the inner frame 276 including more details about the adhesion layer 276 are described with respect to FIG. 28.

As previously described above in the background section, a portable computing device during operation can be exposed to a wide range of temperatures. For instance, a device left in a car for some users can experience temperatures well below freezing at night while a device left in a car for other users can experience temperatures as high as 65°C. However, during manufacture, the various components of the portable computing device 200 can be assembled at an ambient temperature that is well within the operational ranges that the device 200 can experience. Thus, after a prototype of a device is assembled, it can be thermally cycled at a range of temperatures to determine that it adequately withstands any thermal stresses that are introduced during thermal cycling.

For instance, as an illustration of thermal cycling, to simulate a device left in the car on a hot day, the device can be placed in environment to reach equilibrium with the ambient temperature, such as a temperature of about 15-25°C to simulate an air-conditioned temperature in the car, then the temperature can be raised over a time period from the air conditioned temperature, to simulate the device sitting on a dashboard of the car in the sun with the air conditioning off, then the device can be allowed to reach equilibrium with some final temperature, such as 45-65°C. If desired, cooling of the device can be simulated, such as the returning the device to an air conditioned temperature. Also, if desired this cycling can be repeated, using the same other cycling conditions (e.g., the device could be taken from a heated condition in a car during a winter to over night temperatures well below freezing). Thus, the range of temperatures above is provided for illustrative purposes only. After a device is exposed to thermal cycling, it can be examined to determine whether any components have been damaged or deformed as a result of thermal stresses introduce during thermal cycling.

Returning to Fig. 28, in a particular embodiment, a plastic display housing cover 211 can be joined to a metallic frame using a liquid adhesive, such as a liquid two-part epoxy where the two parts react when mixed together, and then, the bond can be allowed to cure. During curing, the liquid bond hardens. The liquid adhesive can be selected for cost, environmental friendly-ness and ease of application. In particular embodiments, the thermal expansion coefficient of the display housing material, such as 272, can be greater than the material of the inner frame 276. For instance, in one embodiment, the thermal expansion coefficient of the display housing material is proximately 3 times greater than that of the inner frame.

During design of the display housing 204, a prototype of the display housing cover was joined to the inner frame using a liquid adhesive and exposed to the thermal cycling where an upper operational temperature was simulated. Because the thermal coefficient of the display housing cover material is greater than that the inner frame, on heating the display housing material lengthens faster than the inner frame, this mismatch in lengthening can produce a deflection profile, such as 266, as shown in FIG. 28. The height 258 or amount of deflection along the length 254 of the free side 252 of the portable displaying housing 204 is shown. For deflection profile 266, along the length 254 of the free side 252, the center of the profile 266 tends to deflect more than the comers producing a downward bowing shape. As an example, the maximum height of the deflection at the center can be 1-6 mm. On the hinged side, the hinging mechanism prevents this amount of deflection to occur.

As is describe above, after heating to an upper operational temperature, the device can be allowed to reach an equilibrium temperature and then cooled again. After cooling, a deflection profile 264 was observed for the prototype. In profile 264, the corners are deflected more than the center. As is shown in FIG. 28, one explanation for the profile 264 is that at the higher temperature at which the prototype was tested, the bond formed by the liquid adhesive after curing softens resulting in bond slippage between the inner frame 276 and the display housing cover material 272. The slippage relieves the thermal stresses in the adhesion layer 274 resulting from the unequal expansion of the two materials. After bond slippage occurs, new bond locations are established. Upon cooling, the bond again hardens and the new bond locations cause a profile, such as 264.

The profiles described above are provided for illustrative purposes only. Different profile can be obtained under different testing conditions. For instance, if the bonds of the liquid adhesive are sufficiently softened at high temperatures, then bond slippage can occur as a result of gravitational forces. For instance, the inner frame can slip relative to the display housing cover as a result of a device being left on its side or on a tilted surface. This type of slippage could produce a different deflection profile upon cooling. In particular, the deflection profile could be asymmetric along length 254 of the free side. Another bond slipping mechanism could result from applying a sudden force to the device, such as dropping or jarring the device when the bonds where softened under high temperature conditions.

A profile 264, such as shown in FIG. 28, can be undesirable for cosmetic reasons as after cooling the display housing cover remains warped and does not return to its pre-heated condition. Further, for the magnetic latches, as described with respect to FIG. 1, the profile 264 can reduce the latching integrity of the magnetic latches in latching zones, 260 and 262. The latching integrity of the magnetic latches can be reduced because the magnetic force between the latches and its associated latching plates is reduced exponentially as a function of a distance between the magnetic latches and the latching plates. Thus, the latching integrity can be decreased for profile 264 because upon deflection, the distance between the magnetic latches and the latching plates are increased.

It can be desirable that after a component is heated and cooled, such as the display housing cover 204, that the component returns proximately to its original shape. Further, it can be desirable when a portable computing device, such as 200, temperature is raised that latching integrity is still maintained. A bonding scheme that addresses these needs is described with respect to FIG. 4.

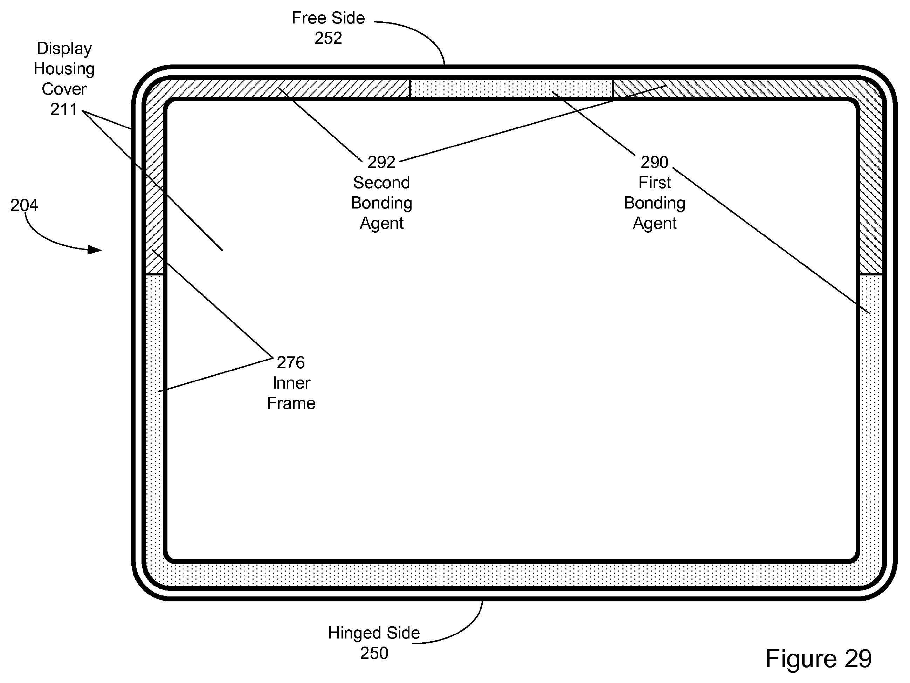

Fig. 29 is a block diagram of a bonding scheme for bonding a display housing cover 211 to an inner frame 276. The display housing cover is a component of the display housing 204. The hinged side 250 and the free side 252 of the display housing cover 204 are indicated in the figure. An inner frame 276 is shown bonded to the inner surface of the display housing cover 211. The inner frame 276 is simplified for illustrative purposes as it can vary in shape and thickness around its perimeter. Further, inner frame can include cut-outs and various attachment points.

A bonding scheme including a combination of bonding agents is shown around the perimeter of the inner frame 276. The bonding agents provide an adhesion layer 274 between the inner frame 276 and the display housing cover 211 that joins the two components. In embodiment, two bonding agents can be used at various locations around the perimeter of the inner frame 276. A first bonding agent 290 is represented by the dots while a second bonding agent 292 is represented by the dashed lines.

In a particular embodiment, the first bonding agent can be a two-part epoxy that is applied in a liquid state and then allowed to cure and harden. The second bonding agent 292 can be selected such that at higher operational temperatures for which the portable housing device is tested, the second bonding agent maintains bond integrity. When bond integrity provided by the second bonding agent is maintained between the two materials during thermal cycling, the thermal stress resulting from unequal expansion of the two materials remains in the bond rather being relieved by bond slippage.

The second bonding agent 292 can be applied proximate to the corners of the inner frame on the free side 252 while the first bonding agent is utilized in other areas. On the hinged side, the hinge mechanism prevents or minimizes bond slippage and thus the first bonding agent 290 can be used in this area. Between the two corners on the free side 252, the first bonding agent 290 can be used. The first bonding agent 290 can be used because if at the higher operational temperature, the bond generated from the first bonding agent 290 softens, the bond formed by the second bonding agent 292 stores enough of the thermal stress to minimize bond slippage in the bond formed by the first bonding agent.

The area of the second bonding agent 292 can be selected to prevent bond slippage induced from a selected maximum thermal stress as well as to maintain bond integrity during thermal cycling. In one embodiment, a very high bond, (VHB) doubled side tape can be used as the second bonding agent. VHB tapes for bonding metal to plastic are available from many manufacturers, such as 3M™ (Minneapolis, MN). These tapes can be designed to maintain bond integrity for temperatures up to 150°C.

In other embodiments, a single bonding agent can be used to bond the inner frame 276, such as metal frame, to a display cover housing 211, such as plastic housing. For example, in one embodiment, a VHB bond tape can be used around the entire perimeter or a sufficient portion of the perimeter to ensure adequate bonding. In another embodiment, an adhesive applied in a liquid form that maintains its bonds under the thermal stresses experienced by the portable housing cover can be used. Further, when the thermal properties of the inner frame and the display cover materials are more closely matched the thermal stresses can be reduced, and then a single bonding agent, such as an adhesive applied in a liquid form can be used.

A few advantages of using the bonding scheme described with respect to Fig. 29 are as follows. A first advantage can be that the bonding scheme is configured such that upon heating and then subsequent cooling, the display housing cover returns proximately to its original pre-heated shape. A second advantage can be at higher temperatures, along the length of the free side of the display housing cover, the corners of the free side deflect downward relative to the center as opposed to upwards as shown by deflection profiles 264 and 266, respectively in Fig. 28. Thus, even when the display housing cover deflects, latching integrity of the device can be maintained.

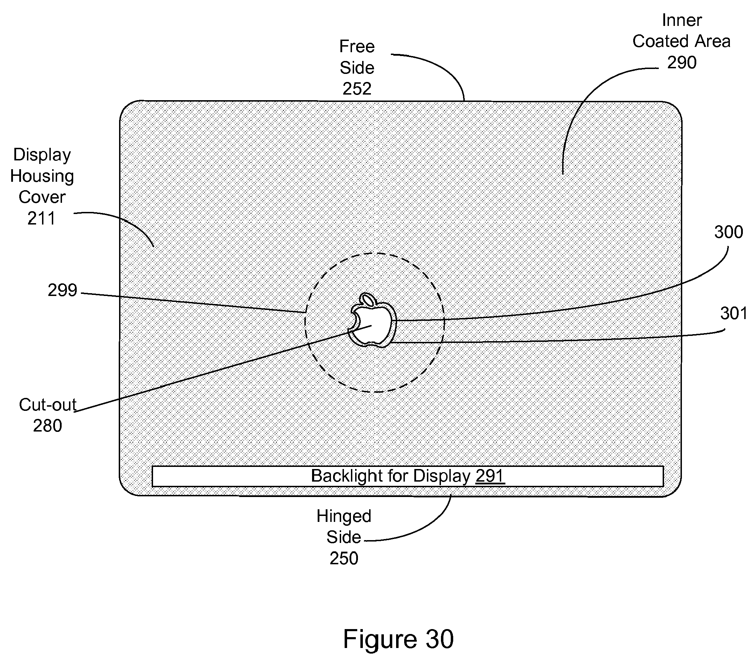

Fig. 30 is a block diagram of a coating scheme for a display housing cover 211. In some embodiments, a portion of the display housing cover 211 can be illuminated. For example, it can be desirable to illuminate the region 280, which includes a logo 300. Multiple areas on the display housing cover can be illuminated and the present invention is not limited to a single illumination area such as around the logo. Further, shapes other than a logo can be illuminated.

In one embodiment, the backlight 291 for the display can be used as an illumination source for lighting the logo 300. The backlight 291 can be generated from different lighting mechanisms, such as but not limited to a compact fluorescent bulb, an array of LED's arranged in a line or LED tiles. In other embodiments, an illumination source separate from the backlight 291 can be used. For multiple cut-out areas, multiple illumination sources can be used or a single illumination source, such as the backlight 291, can be employed.

In a particular embodiment, a cut-out 280 is made in the display housing cover 211 in the shape of the logo 300. An area 301 around the cut-out 280 is recessed to form a ledge. The ledge can support an insert or other filler material that is placed in the cut-out area 280. In other embodiments, rather than using a cut-out area, a portion of the display housing cover can be left uncoated. For instance, the uncoated area can be in the shape of a logo 300. When the display housing cover is transmissive to light, the uncoated area can be illuminated by an illumination source, such as the backlight for the display.

The inner surface of the display housing cover 211 can be coated with two layers. First, a white layer is applied and then a second gray layer is applied over the white layer. The paint can be selected for compatibility with the display housing cover material, which as previously described can be plastic, as well as light-blocking characteristics. The two coating layers can be applied to the edges of the cut-out area 280. The first two layers can be applied over some portion of an inner surface of the display housing cover 211, such as but not limited to extending from the edges of the cut-out area 280 to some area near the outer perimeter of the display housing cover (if multiple cut-out areas are used then the first two paint layers can extend around each of the edges of the cut-out areas.) The portion of the display housing cover coated with the first two coating layers is referred to as the inner coated area 290.

A third coating layer can be applied over the first two layers in some region surround the cut-out area. In one embodiment, the third layer is applied in a circular region 299 around the cut-out area 280. The third coating layer can be applied before or after an insert or filler material is applied in the recessed region 301 around the cut-out 280. The third coating layer can be applied to reduce shadowing effects proximate to the logo 300.

Fig. 31 is a diagram of coating layers for a coating scheme associated with a lighted portion of the display housing cover 211. A cross section around a cut-out area, such as 280 shown in FIG. 30, is illustrated. The thicknesses of the various layers are not representative and are provided for illustrative purposes only. The display housing cover 211 can be formed from a display housing cover material 272 and can be described as having an outer cosmetic surface 282 and inner surface 281. The illumination source 286 can generate light for illuminating the insert 287.

As previously described, a first coating 283, such as but not limited to a white-colored layer, can be applied to the inner surface of the cosmetic surface 281. Then, a second coating 284, such as but not limited to a gray-colored layer, can be applied on top of the white layer. These coatings can be applied to the edges of the cut-out area, which is bounded by insert 287. In some embodiments, an outer surface of the insert 287, which are visible to a user, can extend above the cosmetic surface 282, can be flush with surface 282, and can be recessed from the surface 282 or combinations thereof. A third coating layer 285 can be applied to layer 284. This layer can be applied to some area around the insert 287, such as 299, shown in Fig. 30. In one embodiment, the third layer can be applied over the insert 287 and an area surrounding the insert 287.

In particular embodiments, the first and second coating layers, 283 and 284, can be applied to the edge of insert 287 as shown in FIG. 31. This configuration produces one lighting effect on the insert as viewed from the outside. In another embodiment, proximate to the insert 287, the third coating 285 layer can cover the edges of the first and/or second coating layers such that these layers are not in contact with the insert 287. For instance, around the edges of the cut-out area, the first and second coating layers can be covered by the third coating layer such that only the third coating layer is in contact with the insert 287.

The colors of the first, second and third coating layers are provided for illustrative purposes and are not limited to the white, gray, white scheme described in the previous paragraphs. In general, a color of the first coating 283 can be selected to maintain or enhance the color or appearance of the display housing material 272. The first coating can maintain or enhance the color or appearance of the display housing material by absorbing or reflecting light that is transmitted through the display housing material from a light source outside of the display housing. The absorption and reflection characteristics of the first coating can be wave-length dependent.

In a particular embodiment, the coating color of the first coating can depend on the color of the display housing material 272. For instance, a white-colored first coating can be used with a display housing material that is mostly white. However, for display housing material of another color, such as blue, a first coating of another color may better maintain or enhance the color of the display housing material, such as a blue colored coating.

The second coating 284 can be selected to control a transmission of light from a light source inside of the display housing and compatibility with the color of the first coating. It is not limited to a gray color and other colored coatings can also be used. The third coating 285 can be selected to control a color and appearance of a lighted portion of the display housing cover, such as a logo, as viewed from the outside of the display housing and can also be selected for compatibility with the other two coating layers. The third coating 285 can act upon light transmitted from a light source outside the display housing and light transmitted from a light source inside the display housing. For instance, the third coating can act upon light transmitted through the insert 287 from a light source outside of the display housing and can act upon light transmitted from a backlight used for the display located inside of the display housing.

The third coating can change the apparent color of the lighted portion of the display housing cover, such as the logo, by absorbing and/or reflecting particular wavelengths of light. For instance, a green colored third coating can be selected to make the color of the lighted portion of the display housing cover appear green. As another example, as described above, the color of the third coating can be selected to remove shadowing effects around the light portion of the display housing cover.

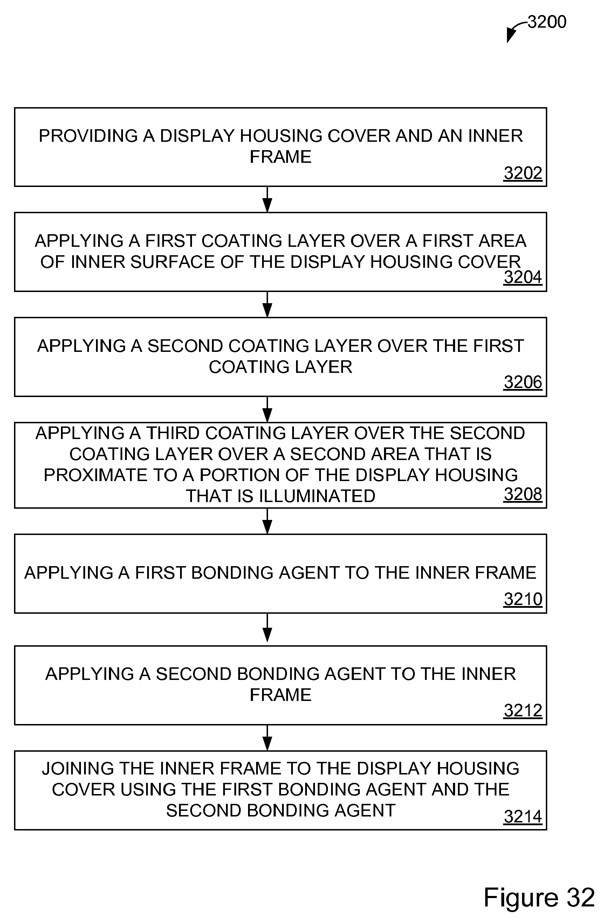

Fig. 32 is a flow chart of a method of assembling a display housing 400. In 402, a display housing cover and an inner frame can be provided. The display housing cover can be constructed from plastic and the inner frame can be constructed from a metal, such as aluminum, an aluminum alloy, magnesium or a magnesium alloy. The display housing cover can include one or more apertures or holes configured to receive an insert. In particular embodiments, the apertures or holes can be used to provide an illuminated logo.

The display housing cover can be described as having an outer cosmetic surface and an inner surface. The display housing cover can be light transmissive. One or more coating layers can be applied to the inner surface to alter the appearance the cosmetic surface. For instance, the coating layers can absorb or reflect light transmitted through the display housing cover from an illumination source outside of the display housing cover or the coating layers can absorb or reflect light from an illumination source inside of the display housing cover. The absorption and reflection of light by the coating layers can change how the cosmetic outer surface of the display housing cover appears to a person viewing it.

In 404, a first coating layer can be applied over a first area of the display housing cover. In one embodiment, the first coating layer can be a white colored-layer, such as a white colored paint. In 406, a second coating layer can be applied over the first coating layer. In one embodiment, the second coating layer can be a gray colored paint.

In 408, a third coating layer can be applied to the second coating layer. In a particular embodiment, the third coating layer can be applied over an area less than the area where the second coating layer is applied. For instance, the third coating layer can be applied approximate to an area that is to receive illumination from an illumination source located inside of the display housing.

In particular embodiments, the displaying housing cover includes one or more apertures surrounded by a ledge. The ledge can provide a support for an insert that covers the one or apertures. The one or more apertures can be in a shape of a logo. The insert can be illuminated from inside of the display housing cover.

The first two coating layers can be applied up to the edges of the one or more apertures in the display housing cover. Then, after the insert is placed over the one or more apertures, the third coating layer can be applied to a portion of the insert that provides an inner surface of the display housing cover and an area of the second coating layer surrounding the insert.

In one embodiment, in 408, a first bonding agent can be applied to the inner frame. The first bonding agent can be a two part epoxy that is applied in a liquid state. In 410, a second bonding agent can be applied to the inner frame. The second bonding agent can be a very high bond adhesive. The second bonding agent can be provided as a double sided tape. In 412, the inner frame can be joined to the display housing cover using the first bonding agent and the second bonding agent. In other embodiments, the first bonding agent and the second bonding can be applied to the display housing cover and then the inner frame can be joined to the first bonding agent and the second bonding agent. Also, the first bonding agent can be applied to the inner frame and the second bonding agent can be applied to the display housing cover or vice versa and then the two components can be joined together.

### ELECTRICAL GROUNDING AND AUDIO SYSTEM ARCHITECTURES

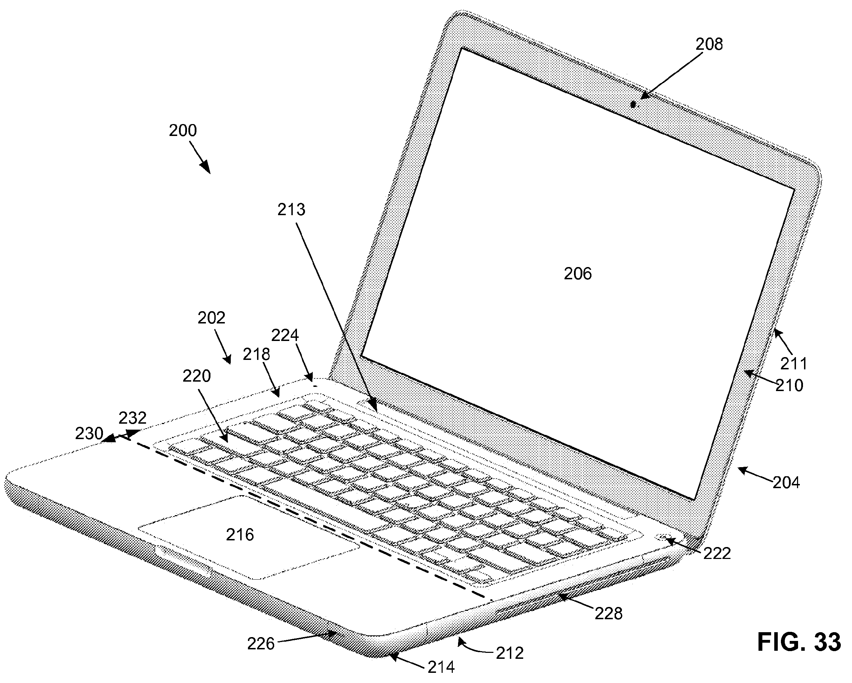

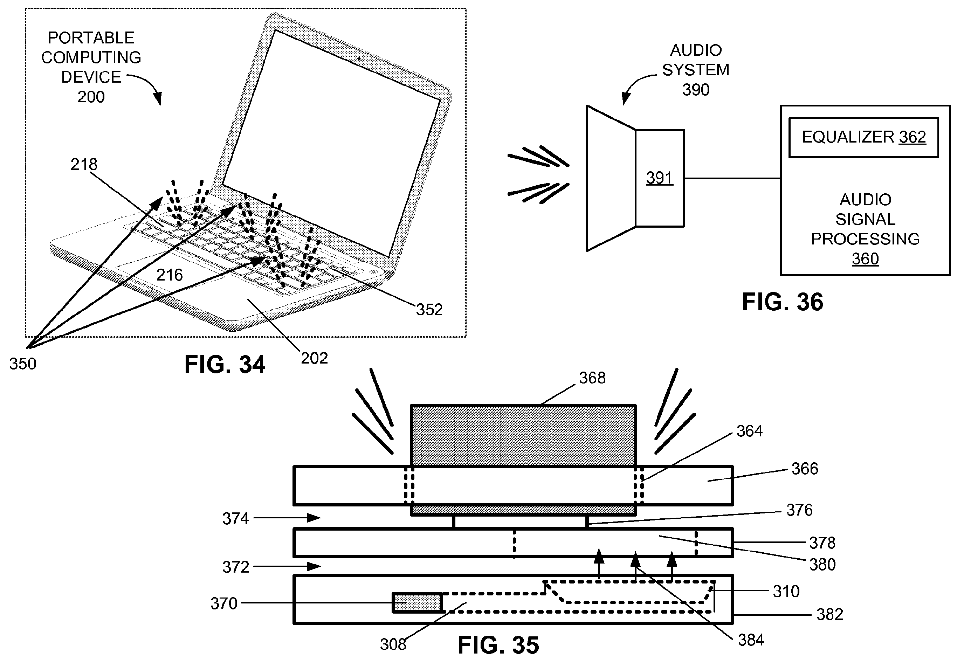

Continuing now with FIG. 33, the exemplary portable computing device is shown in right side front facing perspective view with audio signals being emitted from multiple audio sources via the keyboard. To provide audio signals to a user, such as music and sounds, associated with various applications that can be executed on the portable computing device, one or more audio sources can be provided. The one or more audio sources can be located within the body 202. Three audio sources emitting audio signals 350 are shown in the FIG. 34 for purposes of illustration, although it will be readily appreciated that more or fewer audio sources may be used, as desired.

In one embodiment, the gaps between the keys of keyboard 218, including various keys such as key 352, allow audio signals generated within the body 202 to be propagated away from the portable computing device 202. In other embodiments, other apertures in the body 202 can be used to provide an audio propagation path from the interior of the body to the exterior. For example, as is described with respect to FIG. 6 below, vents used for air cooling of the processor can also be used to propagate audio signals from the interior of the body 202.

One advantage of using the gaps between the keys of the keyboard 218 as a path for propagating audio signals can be that additional apertures do not have to be added to the body 202 for the purposes of sound propagation. The removal of dedicated apertures for sound propagation purposes can provide a design that is considered more aesthetically pleasing. In addition, manufacturing costs can be reduced since the machining of body 202 is reduced. Further, the removal of the dedicated apertures can eliminate potential entry points for dust and liquid that can adversely affect the electrical components housed within the body 202.

FIG. 35 is a cross section of an exemplary keyboard assembly 378 with an audio source disposed below the key board assembly. The figure includes a key 368 mounted to a support structure 376 that is attached to the keyboard substrate 378. The key 368 can be actuated towards the keyboard substrate by applying a force to the top surface of the key 368. An aperture slightly larger than the key 368 is provided in an outer layer 366 of the body 202 to accommodate actuation of the key 368.

In one embodiment, an audio source 310 can be disposed below the keyboard assembly substrate 378. The audio source 310 is shown located in substrate 382 for the purposes of illustration and is not limited to this location. For instance, in one embodiment, the audio source 310 can be integrated into the keyboard assembly, such as integrated into or mounted on top of the substrate 378 rather than in a separate component as shown in FIG. 34. Further, an audio source can be located below various keys in the keyboard 218 and is not limited to a particular key location.

In one embodiment, an audio source is positioned proximately below the 'F6' key on the keyboard, but is not limited to this location. It can be desirable to locate the audio source below a key that is not frequently used, such as a key on the periphery of the keyboard to avoid absorption of sound by the hands of a user utilizing the keyboard. For instance, when an audio source is located near the top of the keyboard, such as below a function key, the hands of a user are typically below this position during normal operation.

When the audio source 310 is mounted below the keyboard assembly, the substrate 378 of the keyboard assembly can include an aperture 380 located above the audio source to provide an audio transmission path for the audio signals generated by the audio source through the keyboard substrate 380. The audio signals refer to the sound waves generated by the audio source, such as 310. In various embodiments, one or more apertures through the keyboard substrate 380 can be provided, such as a number of small apertures or a single large aperture.

In a particular embodiment, a chamber of air 308, such as a tube, can be connected to the audio source 310 to enhance (e.g., amplify) one or more audio signal frequencies emitted from the audio source 310. One end of the chamber can receive audio signals generated from the audio source where propagation of the audio signals through the chamber can enhance one or more audio signal frequencies, such as by producing harmonics. The size and dimensions of the chamber 308 can be selected to produce a desired enhancement to the frequency response of the audio source 310. In one embodiment, the chamber 308 is sized to enhance lower audio signal frequencies in the frequency response of audio source 310. In various embodiments, audio sources 310 with or without one or more chambers configured to alter a frequency response of the audio source can be utilized.

The chamber 308 includes an exit port 370. The exit port 370 can include a cover, such as a mesh cover, that can alter the audio signals emitted from chamber 308. The driver for the audio source 310 is shown in a configuration where the primary direction 384 of the emitted audio signals (sound waves of various frequencies) is towards the bottom of the key 368. The exit port 370 is shown in an orientation where the primary direction of the emitted sound waves is in a direction that is perpendicular to that of the driver of the audio source 310.

In general, the primary directions of the emitted audio source and exit port 370 of chamber 308 can be directed to take advantage of any audio transmission paths that can result from or lend themselves to the packaging of the various internal components of the portable computing device and are not limited to a location below the keyboard. For instance, in one embodiment, the primary direction of the audio source 310 is through the keyboard 218 while the exit port associated with chamber 308 is aligned with vents used to provide air circulation and cooling to the main logic board located on a side of the body 202. In addition one or more audio sources can be located in the movable portion of the portable computing device 200 including the display.

In yet other embodiments, an audio source, such as 310, can be coupled to a chamber with an exit port 370. The primary directions of the audio signals emitted from the driver of the audio source 310 and the exit port 370 can be selected to take advantage of desired audio transmission paths and can be orientated any configuration relative to one another. As examples, the exit port 370 can be aligned such that emits audio signals in generally the same direction as the driver of the audio source 310, it can be orientated so that it primarily emits audio signals in an opposite direction (e.g., away from key 368), or the exit port 370 (as shown) can direct audio signals in a direction perpendicular to the audio source 310.

In FIG. 35, a primary direction 384 of the audio signals emitted from the driver of the audio source 310 is parallel to the alignment of gap 364 and perpendicular to a top surface of the driver of the audio source 310 and a top surface of the key 368. In other embodiments, the primary direction 384 can be in other directions. For example, the driver for the audio source 310 can be tilted such that the primary direction 384 of the audio source is no longer parallel to the direction of the gap 364. In particular, the primary direction 384 can be tilted toward the touch 216 (as shown in FIG. 33) to potentially direct more sound to a user of the portable computing device.

In FIG. 35, after audio signals or sound waves are emitted from audio source 310, the sound waves can propagate through various paths within the body 202 of the portable computing device. For instance, sound waves can propagate along paths from the driver of audio source 310, through the gap 372 between the substrate 384 of the audio device 310 and the substrate 378 of the keyboard assembly, through one or more apertures 380 in the substrate 278 of the keyboard assembly, through a gap 374 between the substrate 380 of the keyboard assembly and the outer layer 366 of the body 202 and exit the body 202 between gaps, such as 364 between a key, such as 368, and the outer layer 366 of the body. Some sound waves emitted from the audio source can be absorbed and/or reflected as they propagate from audio source 310 through the interior of the body 202 to the exterior of the body 202 increasing/or decreasing sound levels for certain frequencies emitted from the audio source 310. Further, various harmonics of the sound waves may be created. These harmonics can potentially cause unwanted vibrations or noises.

The amount that a particular sound wave is affected during its propagation through the body 202 can depend on the frequency of the wave, material properties of various components along its transmission path, such as how much sound energy various materials absorb or reflect as a function of frequency, spacing between layers, such as gaps 372 and 374, spacing between the keys, such as 364 and an outer layer 366 of the housing and the key 368 and a size and number of apertures in substrate 378. Thus, a frequency response of audio source 310 that is measured in a free standing configuration when it is not installed in the body 202 can be quite different than a frequency response of the audio source 310 measured at some point above the keyboard 218 when it is installed within the body 202.

In some embodiments, an equalizer can be applied to the electrical signals sent to the driver of the audio source, 310, installed within the body 202 of the portable computing device 200 to improve the sound quality detected outside of the body from the audio source 310, such as the sound quality detected by a user of the portable computing device. The equalizer can be applied such that the frequency response of audio source 310 is altered. The application of the equalizer can result in certain frequencies being increased in amplitude and other frequencies being decreased when sounds, such as music, are output via the audio source 310.

Turning next to FIG. 36, a block diagram of an exemplary audio system according to one embodiment of the present invention is provided. Audio system 390 can include one or more audio sources, such as 391, and audio signal processing 360 including equalizer 362. The audio source can be a loudspeaker that includes one or more electroacoustic transducers that convert electric signals into sound waves that are propagated through a medium such as air. The transducer portion of a loudspeaker can be referred to as a driver. A conical diaphragm driven by an electromagnetic interaction and a piezoelectric material that vibrates in response to an application of electricity are two examples of types of transducers that can be utilized with the audio system 390 described herein. The audio signal processing 360 can refer to various combinations of hardware and/or software that transform audio data encoded in a particular format, such as a digital format, to an electrical signal that is compatible with a particular design of an audio source, such as 310, used with the portable computing device.

At some point in the conversion of the audio data encoded in a particular foimat to the signal received by the audio source, the equalizer 362 can be applied such that the electrical signal sent to the audio source is altered. The equalizer 362 can be applied to produce a more aesthetically pleasing sound quality from the audio source, such as 391, when it is detected outside of the body 202 of the portable computing device. Also, some equalizer 362 functions can be applied to reduce unwanted vibrations and buzzing noises that can result from normal operation of an audio source. Different equalizers can be used for different audio sources to account for the frequency response of the audio source as well as its associated sound transmission paths that can be unique to the location where the audio source is installed in the body 202.

In other embodiments, different equalizers can be used for different audio data, such as music or a type of music. In a particular embodiment, the type of audio data that is being output can be detected and an equalizer associated with an audio source can be adjusted to account for the type of audio data. In another embodiment, the equalizer, such as 362, for a particular audio source can be dynamically adjusted depending on whether it is determined whether the keyboard is being actively used or not. The placement of the hands of a user over the keyboard can alter detected sound quality from an audio source transmitted through the speaker. Further, the transmission of sound through the keyboard can produce tactile sensations in the keyboard that can be undesirable to a particular user. Thus, it can be desirable to alter the equalizer, such 362, for a particular audio source, such as 391, transmitting through the keyboard when the keyboard is being actively used.

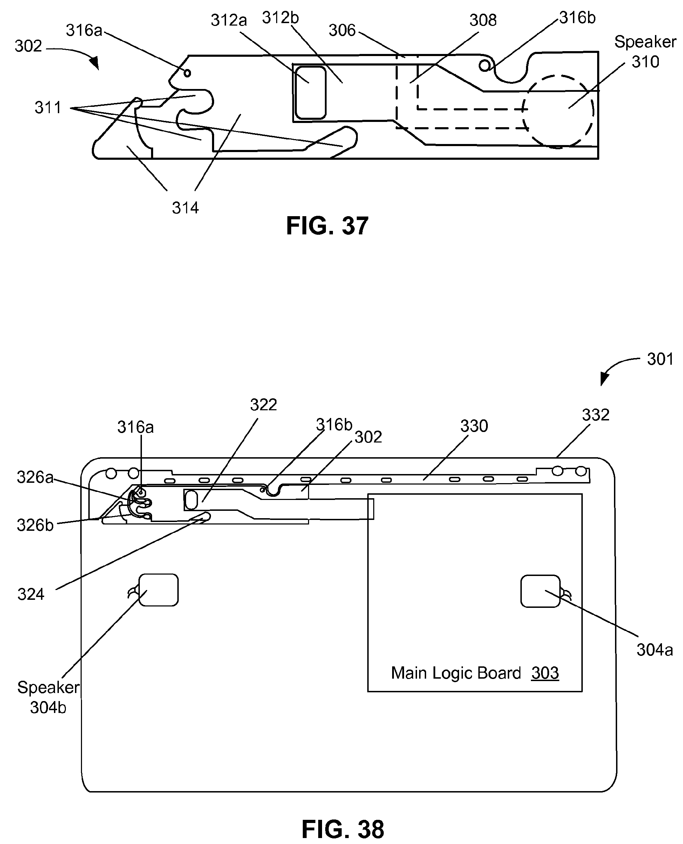

FIG. 37 is a diagram of an inner component 302 of the portable computing device 200 configured to support a wireless card (not shown) and an audio source 310. The component 302 can be formed from a material such as plastic. In particular embodiment, the inner component 302 includes two attachment points 316a and 316b that allow a fastener, such as screw to be inserted. A bottom surface of the component is indicated by surface 314. The bottom surface 314 can be cut out 311 to allow for connections to a wireless card inserted on the top side of component 302 opposite the bottom surface 314. A cut out 311 allowing for three connections is shown in FIG. 37. The bottom surface includes an addition cut out 312a through the surface 314 and a slot 312b in surface 314.

The slot 312b provides a path for ribbon cable and the cutout 312a allows the ribbon cable to be attached to the wireless card. The component 302 includes a loudspeaker 310. In a particular embodiment, the loudspeaker includes a cone type driver driven by an electromagnetic interaction. A chamber 308 with an exit port 306 is acoustically connected to speaker 310. The chamber 308 can be sized to enhance a frequency response of the speaker 310, such as a lower frequency response. In this embodiment, the size of the chamber 308 is limited by the placement of the wireless card. The placement of the wireless card limits a potential length of the chamber 308, i.e., the distance from the speaker to the exit port 306. The tube 308 is not necessarily rectangular and can be curved shaped in some embodiments.

Moving next to FIG. 38, an exemplary inner component 302 mounted within a portion 301 of body 202 of the portable computing device 200 is illustrated in top plan view. In this diagram, a lower cover of the body 202 is removed. The opposite side of the body 202 includes apertures for allowing the keys of a keyboard assembly to be actuated. The component 302 is shown in an installed position within the portion 301. The component is positioned next to a structural stiffener 330.

The component 302 is positioned such that the speaker 310 directs sound through the keyboard on the opposite side. In one embodiment, as described above, the speaker can be positioned below the 'F6' key of the keyboard. The exit port 306 is positioned such that sound from chamber 308 is directed toward a backside 332 of the portion 301. The backside is where the body 202 and a display portion of the portable computing device are coupled together via hinge and can include ports for providing air circulation for cooling of the portable cooling device. The sound from the chamber 308 can be directed out one of more these ports.

A wireless card 324 is shown inserted in the component 302 in FIG. 38. The two connectors 326a and 326b are shown connected to the wireless card 324. A ribbon line connector 322 is also shown connected to the wireless card 324 and the main logic board 303. Two additional speakers 304a and 304b are shown attached to the portion 301 of the body 202. In one embodiment, the speakers 304a and 304b can be piezoelectric speakers. In a particular embodiment, the speakers 304a and 304b can also be positioned to direct sounds through the keyboard on the opposite side. In this configuration, speakers 310, 304a and 304b may not be visible when a user is looking at the keyboard. Again, it will be understood that more or fewer speakers may be used, some of all or which are similarly positioned beneath the keyboard.

### Electrical Grounding System Architecture

Specific examples with respect to alternative electrical grounding architectures will now be provided. In particular, the following alternative electrical grounding structures can prove to be particularly useful for portable computing devices that employ outer housings that are not electrically conductive. Again, such portable computing devices can include, for example, a laptop computer, netbook computer, tablet computer, and the like. It will be understood that the following alternative electrical grounding structures can be utilized separate from or in addition to the various audio system architectural components set forth in greater detail above. In some arrangements, one or more components can provide functionalities with respect to both of the electrical grounding and audio system architectures.

In general, the provided examples can avoid the traditional method of employing the entire enclosure or outer housing as a total Faraday shield and/or ground plane for the portable computing device. This is particularly useful where the enclosure or outer housing is composed entirely or predominantly of a thermoplastic or other non electrically conducting material. Instead, a plurality of localized and smaller grounding regions and EMI/RF shields can be applied within the portable computing device. These smaller localized grounding regions can be electrically intercoupled with each other to form an overall ground plane or universal grounding structure for the entire device. Further, one or more of these localized grounding regions and/or the electrical couplers therebetween can also provide one or more additional functions for the portable computing device, such as structural supports, hinges, brackets, and clutches, among other possibilities.

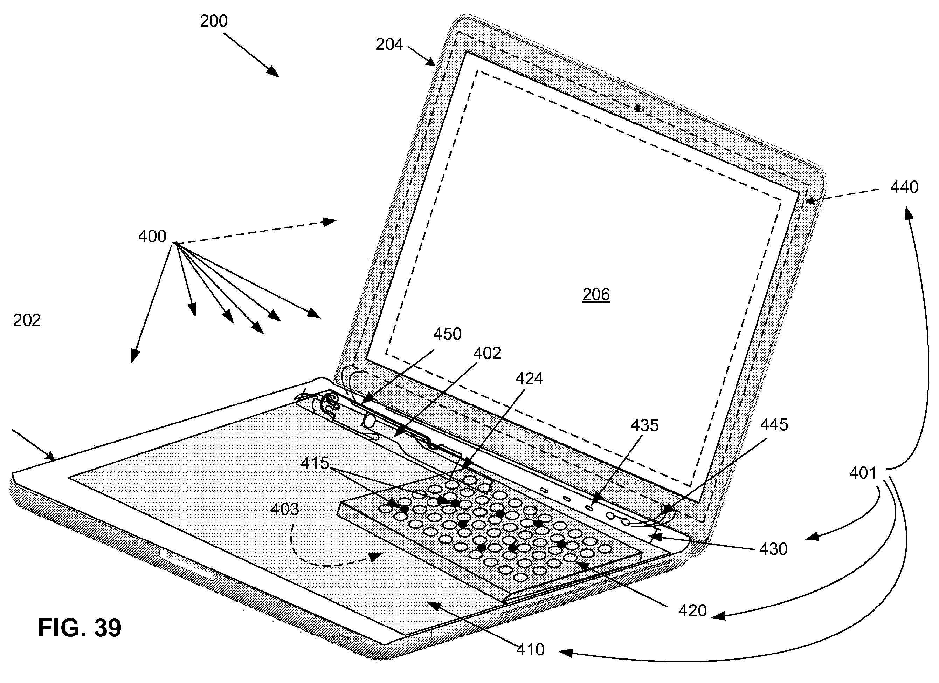

Turning now to FIG.39, an exemplary overall electrical grounding architecture for a partially disassembled portable computing device having a non-conductive outer housing is illustrated in right side front facing perspective view. Portable computing device 200 can be, for example, a laptop computer, and can again include a body 202 and movable lid 204 having a display 206. Numerous additional features and components of portable computing device 200 are set forth in greater detail above, and will not be discussed further unless relevant to the electrical grounding system architecture. Some components of computing device 200 have been removed from FIG. 7 for purposes of illustration, including the keyboard, touchpad and display screen, among others. Universal grounding structure 400 provides an overall ground plane for portable computing device 200, which overall ground plane can be comprised of a plurality of separate ground components 401. These separate ground components 401 can be localized to different regions of the portable computing device, and can be electrically intercoupled by various electrical connectors, such that a universal ground plane for the entire device is created.

Separate ground components comprising localized ground regions can include, for example, backplate 410, MLB frame 420, rear bracket 430, and display chassis 440. Electrical connectors that can be used to couple these various localized and separate ground components to form an overall device ground plane can include, for example, MLB 403, a plurality of grounding pins 415, a plurality of rear bracket tabs 435, display chassis wiring 445, and a ribbon line connector 424 coupled to a sound component 402 that is in turn coupled to a display clutch assembly 450. It will be readily appreciated that additional or fewer separate ground components may exist or be designated as part of universal grounding structure 400, and that various electrical connectors, such as any of the foregoing exemplary electrical connectors, may be resized, rearranged or otherwise designated as separate ground components themselves within the universal grounding structure. Similarly, additional or fewer electrical connectors may be used to intercouple the various localized separate ground components of universal grounding structure 400.

One benefit that can be realized by having multiple localized grounding regions rather than a traditional single ground plane comprising a conductive outer housing is that appropriate focus can be applied with respect to the grounding needs of particular components, such that material costs may be reduced. Such reductions can be enhanced by utilizing one or more already existing components that provide other functions as part of the universal grounding structure 400. While this may result in some design alterations and/or extensions of certain components, the overall need to resort to added metal or other conductive structures just to provide a universal ground plane is reduced or eliminated. Notably, various smaller localized ground regions are created, with none of these regions being so traditionally large as the entire enclosure or outer housing.

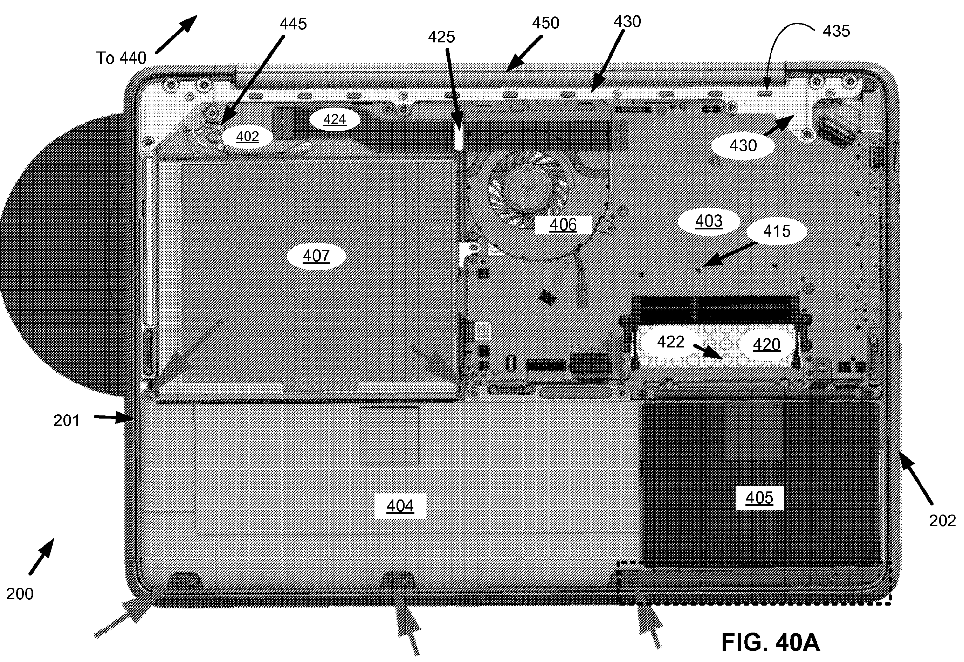

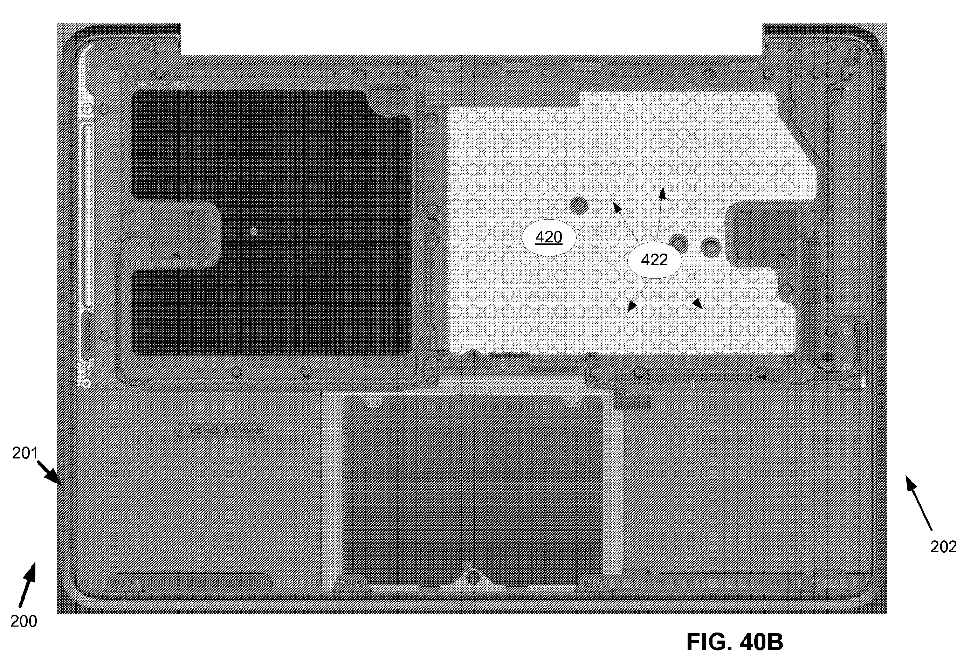

Moving next to FIGS. 40A and 40B, the body of the exemplary portable computing device of FIG. 39 is shown as being partially disassembled in bottom plan and top plan views respectively. Further details of the various separate ground components, electrical connectors and other device components can be seen with the bottom housing removed in FIG. 40A and the keyboard, touchpad and upper housing removed in FIG. 40B. For purposes of illustration, the bottom of the outer housing has been removed in FIG. 40A to reveal various components internal to body 202. As such, the bottom outer housing portion and coupled backplate 410 are not shown in FIG. 40A. It will be understood that backplate 410 exists at about the level of the page of this figure, as FIG. 40A is looking into the body 202 from the bottom of device 200. As shown, portable computing device 200 can have a number of typical electrical components, such as a main logic board ("MLB") 403, battery assembly 404, hard disc drive ("HDD") 405, fan 406, optical disc drive ("ODD") 407, and sound component 402, among others. It will be readily appreciated that some components can provide load bearing as well as electrical ground bearing capabilities.

As noted above, some of the localized separate grounding components and/or the electrical couplers therebetween can provide additional functions for the portable computing device, such that space constraints are minimized, excess metal is not applied solely for the sake of providing a ground plane, and overall device components are reduced and streamlined. For example, backplate 410 is a localized separate ground component that forms part of universal grounding structure 400, and can also serve as an inner structural component to which outer housing 201 can attach and be supported. As noted previously, outer housing 201 can comprise any of a wide variety of non-conducting materials having any of a wide variety of appearances and textures under the present invention, such as a thermoplastic, for example. As such, backplate 410 can provide structural support and rigidity for a potentially structurally unreliable outer housing 201. Thus, backplate 410 may serve as the structural support layer noted in the "Outer Housing" section above. To meet all of the foregoing functional requirements, backplate 410 can be comprised of a suitable metal, such as aluminum, steel, magnesium or a magnesium alloy, for example.

MLB frame 420 provides another example of a localized separate ground component that provides multiple functions for portable computing device 200. That is, in addition to providing a localized separate ground component for electrical items such as MLB 403, fan 406, and numerous electrical components on or coupled to MLB 403, MLB frame 420 also provides support and structural rigidity for MLB 403. Due to the potentially large number of individual components on MLB 403 that are surface mounted or are otherwise susceptible to being damaged by flexion, MLB 403 must be firmly supported. MLB frame can be specifically designed to perform such a support function. Other components that can be mounted to and physically supported by MLB frame 420 can include fan 406, optical disc drive 407, and sound component 402, among others. As noted above, sound component 402 can comprise an integrated audio/wireless card that is electrically connected to MLB 403 and also to MLB frame 420 by way of a flex or ribbon line connector 424. Such a connection to MLB frame 420 can be made at a grounding point 425 where a midsection of flex or ribbon line connector 424 contacts a wall edge of the MLB frame, for example. Additional components that MLB 420 may provide grounding for include any number of I/O ports that may be coupled to MLB 403.

As yet another function, MLB frame 420 can also provide RF or EMI shielding for MLB 403. Such an RF or EMI shield can effectively result from a combination of MLB frame 420 and backplate 410, since MLB frame 420 may not surround MLB 403 in all directions. In some embodiments, MLB frame 420 and backplate 410 may combine to serve as a localized Faraday cage for MLB 403, although the MLB frame and backplate combination preferably at least provides an EMI shield to insulate any noise between the MLB and one or more other components located elsewhere on portable computing device 200. In particular, the RF shielding aspects of MLB frame 420 and/or backplate 410 can shield noise or interference between the MLB 403 and any wireless antennae in the portable computing device 200, such as antennae that may be embedded in the display housing and/or display clutch assembly, for example. Electrical connectors between MLB frame 420 and backplate 410, such as grounding pins 415, may further enhance the combined universal ground plane and/or EMI shielding properties of these components.

MLB frame 420 can be formed from a strong, rigid, lightweight, and electrically conductive material, such as aluminum, magnesium or a magnesium alloy, among other suitable choices. In some embodiments, a magnesium alloy is used. As noted, MLB frame 420 can provide structural support and rigidity for various components that do not tolerate much flexion, such as MLB 403. MLB frame 420 can also distribute loads received from one or more load bearing components, such as by way of various structural connectors. In some embodiments, MLB frame 420 can be configured to provide support to external features fabricated in the non-conducting outer housing. For example, various openings in the outer housing can be used to provide access to data ports, power ports and so on, some of which may be required to have relatively large spans.

In some embodiments, MLB frame 420 can form five sides of a rectangular box, with the MLB 403 being disposed therein, and the open sixth side being covered by backplate 410 after assembly. In some embodiments, MLB frame 420 can be sized such that it is only slightly larger than the MLB 403, such that excess material is not wasted. This can result in savings on the cost and weight of MLB frame 420, and portable computing device 200 overall. In some embodiments, MLB frame 420 may be integrally formed with one or more extensions that are used to provide structural support and/or electrical grounding for one or more other electrical components within portable computing device 200. For example, a lateral extension of MLB frame 420 can extend from MLB 403 across and above ODD 407 and to the opposing sidewall of the outer housing of body 202. Such a lateral extension may also include holes, and a middle wall may exist within MLB frame 420 between the MLB 403 and the ODD 407, such as for added separation and support.

The weight of preferably lightweight MLB frame 420 can be further reduced by forming a plurality of holes 422 therethrough by using any of a number of suitable techniques, such as stamping. The plurality of holes 422 can reduce the weight of MLB frame 420 without substantially affecting its strength or its ability to provide support for components that have little or no tolerance for flex, such as MLB 403. In addition, the plurality of holes 422 can be arranged in a particular pattern such that EMI shielding is maximized despite the removal of a significant amount of material from MLB frame 420. Such hole creation or material removal patterns that results in a reliable EMI shield will be readily appreciated by those skilled in the art, and any such suitable pattern may be used for the holes 422 on MLB frame 420.

As noted above, a variety of electrical connectors can be used to couple electrically separate ground components, such as backplate 410 and MLB frame 420. For example, MLB 403 and or a plurality of grounding pins 415 can be utilized to electrically intercouple backplate 410 and MLB frame 420. Of course, other electrical connectors can be used for the same purpose, and alternative indirect paths may also result in an electrical coupling of backplate 410 and MLB frame 420 as part of the general formation of a universal grounding structure 400. Further electrical connectors can be used to connect backplate 410 and/or MLB frame 420 to one or more other localized separate ground components, such a rear bracket 430 and/or display chassis 440. For example, a plurality of rear bracket tabs 435 can electrically couple rear bracket 430 to MLB frame 420, while display chassis wiring 445 can couple display chassis 440 to rear bracket 430, such as via a display clutch assembly 450. In addition, a ribbon line connector 424 coupled to a sound component 402 that is in turn coupled to the display clutch assembly 450 can electrically connect the MLB frame 420 to the display chassis wiring 445 and thus the display chassis 440.

In some embodiments, the integrated wireless/audio card comprising sound component 402 might not be mounted directly to MLB frame 420, but rather can rest on a metal platform or wing that is part of ODD 407, which can be used to accommodate optical media, for example. In addition to providing support, the metal platform can provide a chassis ground to which display chassis wiring 445 can be connected. As noted previously, grounding pins 415 can be used to make electrical contact between MLB frame 420 and backplate 410, such as through MLB 403. Grounding pins 415 may serve as direct contacts between MLB frame 420 and backplate 410 that are electrically isolated from the MLB 403 itself. Alternatively, one or more grounding pins 415 can make one or more direct contacts to various grounded regions on MLB 403. Grounding pins 415 can be, for example, pogo pins, although other suitable grounding pin types may be used.

In this way, MLB frame 420, backplate 410 and grounding pins 415 can combine to form an effective EMI or RF shield that can contain RF energy generated by various components on MLB 403. Moreover, the RF shield can also protect circuits such as the integrated wireless/audio card or other sound component 402 from RF leakage and interference that can seriously impact the wireless performance of such an integrated wireless/audio card.

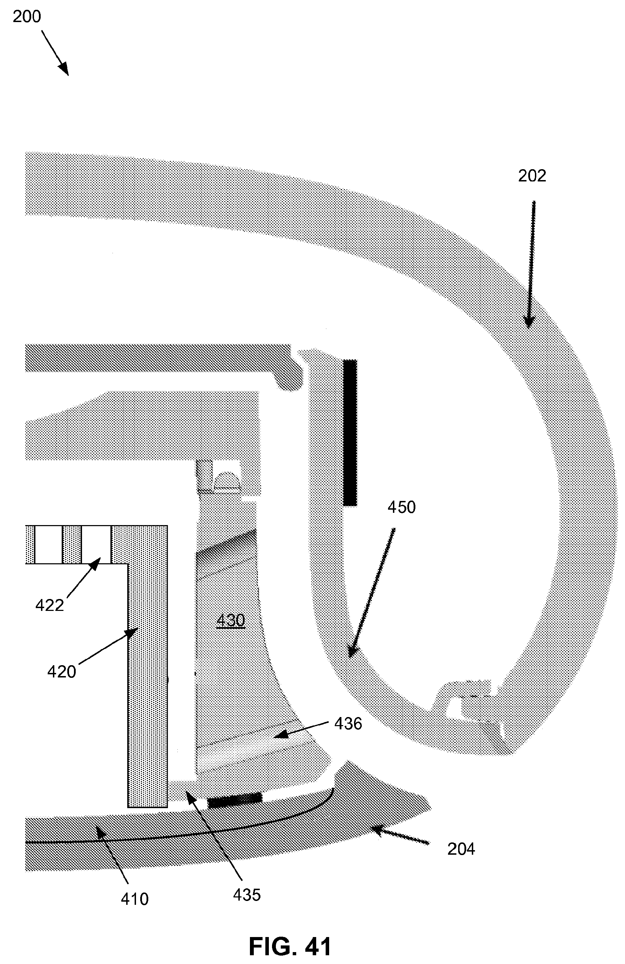

Turning next to FIG. 41, the rear bracket and its surrounding region is shown in close-up side cross-sectional view for purposed of clarity. As yet another example of a multifunctional separate ground component, rear bracket 430 can provide localized grounding for one or more associated electrical components, as well as providing overall structural support at various locations and assistance in the mechanical interaction between body 202 and lid 204 of portable computing device 200. In various embodiments, rear bracket 430 can act as a cantilever beam with respect to body 202 and lid 204. Accordingly, rear bracket 430 can be formed of a strong, lightweight, and resilient material, such as a magnesium or magnesium alloy. In addition, rear bracket 430 can aid in the distribution of high concentration loads that if applied to MLB frame 420 without dissipation could adversely affect the bond between MLB frame 420 and the outer enclosure.

Furthermore, rear bracket 430 can be formed to include vent like structures 436 that can facilitate the transfer of air between the outer housing of the portable computing device and the external environment, while at the same time obscuring an interior view of the portable computing device from the outside. Rear bracket 430 can also be adapted to transfer mechanical loads from lid 204 to body 206 by way of a display clutch 450 to MLB frame 420 and/or backplate 410. While rear bracket 430 can form a localized separate ground structure, this rear bracket can also have a plurality of rear bracket tabs 435 that directly contact MLB frame 420, such that these two separate ground structures are directly electrically connected as part of the universal grounding structure of portable computing device 200. Rear bracket tabs 435 can be integrally formed as a part of rear bracket 430, and can be, for example, beveled contact points that are specifically machined into the rear bracket 430 during its manufacture.

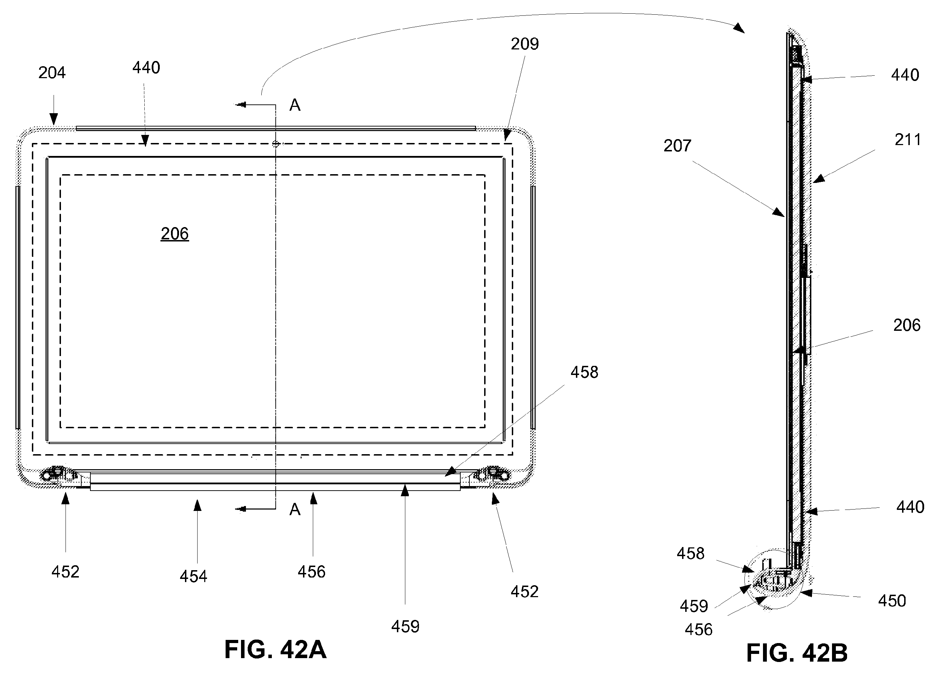

Display chassis 440 may also serve as a localized separate ground component. Unlike separate ground components 410, 420 and 430, display chassis is located in the lid 204 rather than the body 202 of portable computing device 200. FIG. 42A illustrates in front elevation view the lid 204 of the exemplary portable computing device of FIG. 39, while FIG. 42B illustrates the lid in side cross-sectional view. Lid 204 of the subject portable computing device can include a display screen 206, a display cover 207, and a surrounding bezel 209, as well as a display chassis 440 and display clutch assembly 450. Display chassis 440 can essentially comprise a metal or otherwise electrically conducting plate or thin component that is sandwiched between the back of display screen 206 and the outer housing of the device. In some embodiments, display chassis 440 can form a frame situated behind and/or at or about the outer edges of display screen 206, with the frame having a missing center portion. Display chassis 440 essentially serves as a localized ground for the display, any antenna, and any other electrical components that may be included within lid 204.

For example, a driver or other printed circuit board (not shown) associated with display screen 206 can be located at or near a bottom portion of lid 204 when the lid is in an upright position, with such an electrical component being coupled to display chassis 440 at that location. Power, ground and other potential electrical wires may run from lid 204 to body 202, such as at or near clutch connectors 452. Such wiring can include display chassis wiring 445, which serves to connect display chassis 440 with one or more contact points on rear bracket 430. One or more display clutch assembly brackets or connectors may serve as intermediaries between display chassis wiring 445 and the contact points on rear bracket 430. Of course, each of these components, including any intermediaries, are all electrically conducting, and any such components in the electrical path wind up being part of the ground plane or universal grounding structure 400 of the device.

As in the case of various forgoing separate localized ground components and connectors in body 202, various parts of the electrical grounding structure found in lid 204 can also provide additional functionalities. For example, display clutch assembly 450 can include clutch connectors 452 that mechanically connect to and transmit loads to MLB frame 420 and/or rear bracket 430 at suitable connector points. Display clutch assembly 450 can be housed within display clutch barrel 454 having back portion 456 that can be part of lid 204. Back portion 456 can be joined to display clutch cover 458 resulting in display clutch seam 459. In the described embodiment, display clutch seam 459 cannot be seen from the back by a user when portable computing device 200, and in particular, top cover 204 is in the closed position. Furthermore, when top cover 204 is in the open position, clutch barrel seam 459 aligns with an associated TPU seam (not shown) giving the impression of continuity even in those areas not expected to be seen in normal operational use.

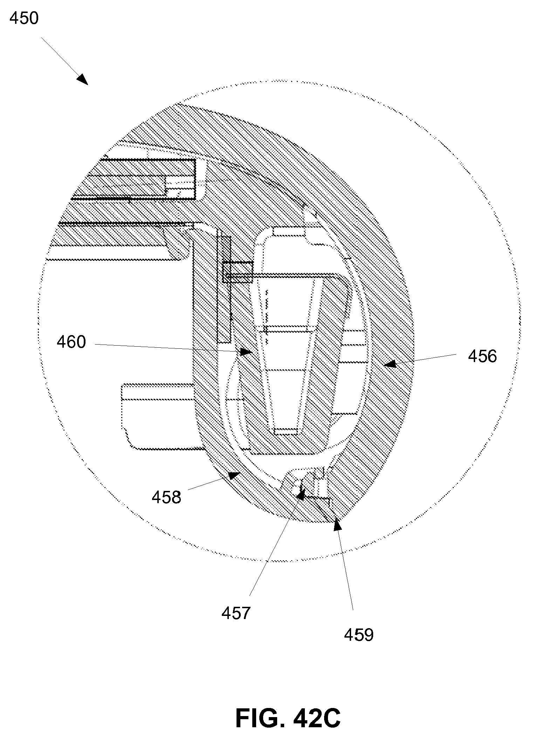

As shown in greater cross-sectional detail in FIG. 42C, display clutch assembly 450 can enclose and therefore hide from view a number of electrical and mechanical components. For example, display clutch assembly 450 can enclose RF antenna 460, as well as various mechanical items, such as structural and snap connector items. RF antenna 460 can be electrically coupled to display chassis 460, as well as to display chassis wiring 445 that connects the localized separate ground structures found in lid 204 and body 202. The location of display clutch barrel seam 459 can provide for a longer uninterrupted span for top cover 204. Back portion 456 can include a number of snap connectors 457 that are used to secure the display clutch cover 458 to the back portion 456.

### PORTABLE COMPUTER HOUSING

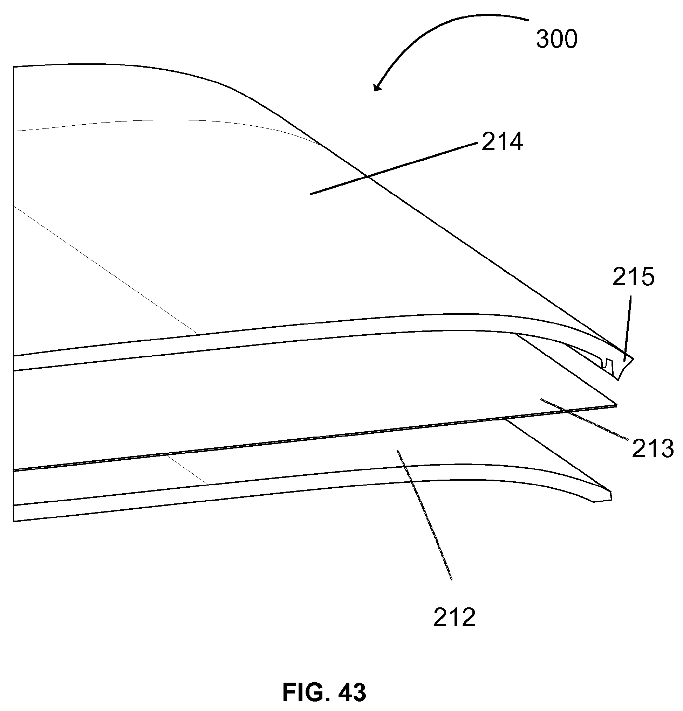

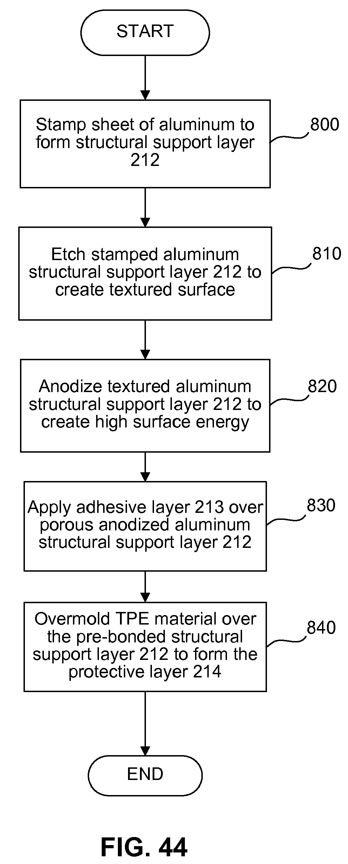

A process for manufacturing the bottomcase 300 will be described with reference to Fig. 43. An aluminum finishing process will be described below with reference to steps 800-820 shown in Fig. 44. In step 800, a sheet of aluminum can be stamped to form the structural support layer 212. In one embodiment, a 5052-H32 sheet of aluminum is stamped to form the structural support layer 212. Aluminum can provide strength without the bulk of more conventional laptop housings. According to one embodiment, the structural support layer 212 has a thickness of about 1 mm. In some embodiments, the structural support layer 212 can be as thin as about 0.8 mm. As can be appreciated by the skilled artisan, aluminum is a durable yet lightweight metal. Thus, in order to maintain the aesthetic look and feel of a lightweight portable computing device having a thin profile, aluminum can be used as the base material for the structural support layer 212. Although aluminum is a durable material that is able to withstand rigorous use, a protective layer 214 can be applied over the aluminum structural support layer 212 to provide more protection to the internal components of the portable computing device 200 as well as to provide protection for the outer surface of the bottomcase 300.

According to this embodiment, in step 810, the stamped aluminum structural support layer 212 is first chemically etched to create a textured surface. In one embodiment, an ammonium fluoric acid etch is used to create a satin etch finish on the aluminum surface. According to an embodiment, the textured surface of the structural support layer is etched to have an arithmetic mean surface roughness, Rₐ, of about 0.5- 0.5 micron, with a peak count number of about 120-140 peaks/cm. The texturized aluminum base can then be anodized to create a high surface energy in step 820. In an embodiment, the texturized aluminum base is anodized such that the contact angle with deionized water is less than about 30°. The anodization process leaves the surface of the aluminum structural support layer 212 with high surface energy. Anodizing is a fairly environmentally-friendly metal finishing process because the typical anodizing effluents can be recycled for manufacturing other products and can also be used in industrial wastewater treatment.

According to an embodiment, the anodized aluminum structural support layer 212 is not sealed before an adhesive layer 213 is applied over it. Typically, anodized aluminum is subjected to a chemical sealing process to close the pores created during anodization. Sealing the pores can be desirable because the sealing process makes the anodized aluminum easy to clean as well as colorfast. Further, the pores in the surface can collect debris and contaminants and the sealing process protects the anodized aluminum from harmful contaminants in the environment. However, in this embodiment, the anodized aluminum structural support layer 212 is not chemically sealed in order to leave the surface with high surface energy because the typical sealing process creates low surface energy, which causes the aluminum surface to repel adhesives. The skilled artisan will appreciate that high surface energy is the tendency of a surface to attract an adhesive. The high surface energy of the anodized aluminum surface, in combination with the textured surface, of the structural support layer 212, increase the bond strength with the adhesive layer 213 that is applied over the structural support layer 212.

An overmolding process will be described below with reference to steps 830 and 840. According to this embodiment, in step 830, an adhesive layer 213 can be applied over the surface of the unsealed, porous anodized aluminum structural support layer. It will be understood that the pores in the surface increase the surface area for bonding, thereby increasing bond strength. The adhesive layer 213 can be applied over the entire surface of the structural support layer 212. The adhesive can be formed of a thermoplastic bonding film having a high bond strength, such as a polyester thermal bonding film. It is desirable for the adhesive to have initial high bond strength. That is, the adhesive can form the bond in about one second or less, and that the initial bond does not need to grow over time. The initial high bond strength is important because an adhesive with a bond that builds over time may result in a protective layer 214 that may not be securely adhered to the structural support layer 212. The adhesive layer can be a Tesa 8464 thermal bonding film, commercially available from Tesa SE of Germany. In one embodiment, the adhesive layer 213 has a thickness of about 0.1 mm.

According to an embodiment, in step 840, a TPE material is overmolded onto the adhesive layer 213 over structural support layer 212 structure to form the protective layer 214. The aluminum structural support layer 212 with the pre-bonded adhesive layer 213 can be inserted into an injection molding tool so that the protective layer 214 can be overmolded onto the pre-bonded aluminum structural support layer 212. According to another embodiment, a silicone material is compression molded onto the adhesive layer 213 over structural support layer 212 structure to form the protective layer 214.

As appreciated by the skilled artisan, the TPE can be overmolded by injecting molten TPE pellets into a tool in an injection molding machine. Overmolding is an injection-molding process in which the material (*e.g*., TPE), is molded over a substrate. TPE is a material that can easily be molded. In this embodiment, the TPE is molded over the structural support layer 212 pre-bonded with an adhesive layer 213. The skilled artisan recognizes that Injection molding is a rapid and economical process. The equipment and methods normally used for extrusion or injection molding of a conventional thermoplastic are usually suitable for TPEs as well. Furthermore, TPEs do not require vulcanization, thus resulting in savings of cost and time.

According to an embodiment, the adhesive layer 213 has a melting temperature that is lower than the temperature at which the TPE material for the protective layer 214 is injected during the subsequent injection molding process. Since the adhesive layer 213 has a melting temperature below the injection temperature of the TPE, the adhesive and the TPE mix well during injection molding of the TPE to create a strong chemical bond. According to one embodiment, the TPE is injected at about 245°C and the adhesive film has a melting temperature of about 160°C -180°C and becomes solidified at about 130°C - 150°C. The adhesive film 213 cools down quickly so the bond between the structural support layer 212 and the protective layer 214 sets quickly. In an embodiment, the hold time in the mold is about 15 seconds. According to an embodiment, the TPE material has a melting temperature in a range of about 230°C - 245°C. It will be understood that if the TPE melting temperature is too high (e.g., about 260 °C), the bond strength is actually compromised and up to about 40% in bond strength could be lost.

In another embodiment, the TPE protective layer 214 can simply be adhered to the aluminum structural support layer 212 using an adhesive, such as glue. However, overmolding the TPE results in a better aesthetic look and feel for the bottomcase 300. The skilled artisan will appreciate that overmolding TPE directly onto metal, such as aluminum, can be challenging because metal does not melt at the injection temperature of TPE. Typically, overmolding TPE directly onto metal is not easy to accomplish without pre-treating the metal. As described above, the aluminum can be pre-treated by etching the surface and anodizing to create a porous surface with high surface energy.

According to an embodiment, the aluminum structural support layer 212 can be etched to create a textured surface and anodized to create high surface energy. In this embodiment, the protective cover layer 214, which can be formed of a TPE, can be directly overmolded, without an adhesive layer, over the unsealed anodized aluminum having high surface energy.

Alternatively, an adhesive layer 213 can be used, as described above. In this embodiment, the aluminum structural support layer 212 can be etched to create a texture, anodized to create high surface energy, and pre-bonded with an adhesive layer 213, which mixes well with the TPE during the overmolding process to create a chemical bond.

Overmolding the TPE over the pre-bonded aluminum also reduces or even eliminates potential failure points between the protective layer 214 and 212 because it creates a chemical bond between the TPE and the aluminum. Poor adhesion can lead to defects, such as peeling and delaminating of the protective layer 214 from the structural support layer 214. The chemical bond over the entire surface area helps prevent separation of the TPE protective layer 214 from the aluminum structural support layer 212 over the lifespan of the laptop computer. Such a strong bond between the structural support layer 212 and the protective layer 214 can be especially important because the bottomcase 300 of a portable computer is typically subjected to a great deal of handling and even rigorous use. Furthermore, the strong chemical bond also prevents the TPE protective layer 214 from peeling away from the structural support layer 212 during traditional finishing methods. According to an embodiment, the protective layer 214 has a thickness of about 1 mm. Thus, the total thickness of the bottom case 300 is about 2.1 mm or less.

It will be understood that the strong bond between the protective layer 214 and the structural support layer 212 is important in order to achieve a durable and aesthetically pleasing bottomcase 300 because aluminum and TPE have different shrink rates. That is, aluminum and TPE contract at different rates when the temperature is lowered. As aluminum is a metal, it has a different coefficient of thermal expansion (CTE) compared to TPE. The TPE, which has a different CTE and has a higher temperature (about 245° C) than the aluminum when the TPE is injected, the TPE will shrink significantly. As discussed above, the TPE material is typically injected at a temperature of about 245° C and the aluminum is held at about 50° C. After the injection molding process, the material will cool to about room temperature and the TPE will shrink when it cools, but the aluminum will not shrink at the same rate. If the overmolded TPE shrinks and is not held in place on the aluminum for the initial period of time *(e.g.,* 24-36 hours), then problems can occur because the materials contract at different rates. If the materials contract at different rates, the bond between the protective layer 214 and the structural support layer 212 will be weakened and elements, such as mounting holes, may no longer be aligned (*i.e.,* no longer concentric). Thus, it is desirable to have a strong bond between the aluminum and the TPE material. This strong bond can be created by the chemical bond with the adhesive, as described above.

TPE is a desirable material for the protective cover layer 214 because TPE provide both the advantages of rubbery material and plastic materials. Using TPE for the protective cover layer 214 can improve the aesthetics of the bottomcase 300, as TPE can easily be colored by most types of dyes for color matching. For example, the TPE of the protective color layer 214 can easily be dyed to match the color of another component, such as the cosmetic outer layer 202. The TPE protective cover layer 214 can also provide a weather seal to protect the unsealed anodized aluminum structural support layer 214 from debris and other contaminants. The TPE also helps to protect the internal components of the computer against impact.

Compounders can be incorporated to provide a TPE with certain properties, such as a soft touch and good grip properties. TPEs can be made to have softness and suppleness, which can provide consumer appeal, especially to products, such as portable computers, that are gripped and otherwise handled. In an embodiment, the TPE can be Arnitel® EM460, a TPC-ET thermoplastic co-polyester elastomer commercially available from DSM Engineering Plastics B.V. of The Netherlands. The TPE can also be pre-colored and overmolded over the aluminum structural support layer 212 to provide an aesthetically pleasing surface with a soft texture combined with good mechanical properties. In an embodiment, the TPE protective cover layer 214 has an arithmetic mean surface roughness, Rₐ, of about 1.2 - 1.6 microns and a maximum profile height, R_{z}, of about 6-9 microns.

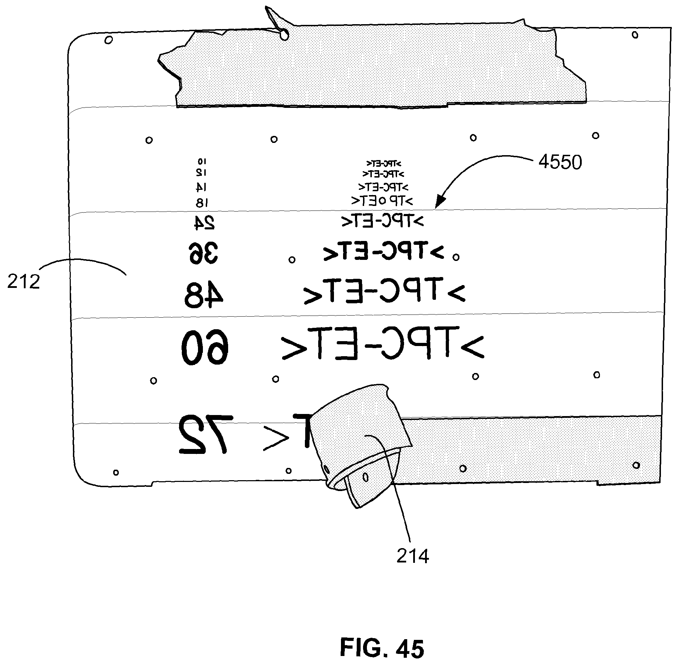

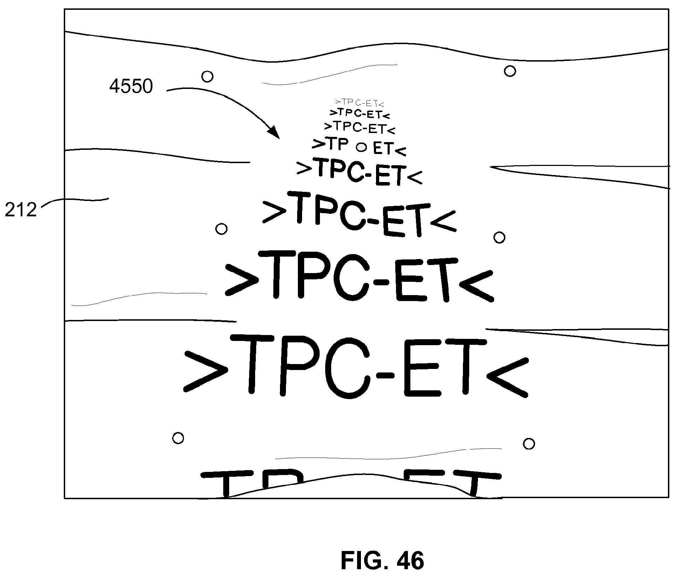

TPE materials, which are physically, not chemically, cross-linked can be easily processed as well as recycled, and are therefore environmentally friendly materials. TPEs can be molded, extruded, and reused like plastics. The TPE protective cover layer 214 can therefore be recycled by peeling away the TPE layer from the aluminum structural support layer 212. Typically, a recycling code is stamped or printed on a part that can be recycled. In order to preserve the aesthetics of the exterior of the portable computer housing, such a recycling code should not be printed on the exterior of the housing, including the external surface of the protective cover layer 214 of the bottomcase 300. However, because the protective cover layer 214 is overmolded, the recycling code cannot be printed or stamped directly on the interior surface either. Thus, according to an embodiment, a recycling code corresponding to the material of the protective cover layer 214 can be printed wrong-reading (e.g., backwards) on either the aluminum structural support 212 or right-reading on the adhesive layer 213 before the protective cover layer 214 is overmolded. As shown in Fig. 45, a recycling code 4550 labeled as ">TPC-ET<," which, according to an International Standards Organizations (ISO) specification, is appropriate for the TPE of the protective cover layer 214, is printed right-reading on the adhesive layer 213 before it is pre-bonded to the aluminum structural support layer 212. After the protective cover layer 214 is overmolded over the pre-bonded structural support layer 212 with the printed recycling code, a portion of the ink of the recycling code 4550 will be transferred onto the interior surface of the protective cover layer 214. It will be understood that the ink has an affinity for the TPE material and will peel off with the TPE when the TPE protective cover layer 214 is removed or peeled away from the aluminum structural support layer 212. Once the TPE protective cover layer 214 is removed or peeled away, the recycling code 4550 will appear in a readable form on the interior surface of the TPE protective cover layer 214, as shown in Fig. 46. It will be understood that Fig. 45 shows the structural support layer 212 with the recycling code 4550 printed backwards after the protective cover layer 214 has been peeled away.

According to an embodiment, an edge portion 215 of the protective cover layer 214 can be designed to extend over and wrap around an edge of the structural support layer 212, as shown in Fig. 43. When the portable computer housing is fully assembled, the edge of the protective cover layer 214 is not visible, as it is wrapped around the edge of the structural support layer 212 and tucked under the cosmetic outer layer 202, forming an essentially uninterrupted spline profile. The protective layer 214 can form a seal with outer layer 202. The seal provides protection from contaminants from the external environment as well as an appearance of continuity in the shape of outer layer 202. The seal also helps prevent the protective outer layer 214 from being peeled away or otherwise damaged, as the edge of the protective layer is positioned under the outer layer 202.

Outer layer 202 can include a number of user input devices, such as touch pad 216 and keyboard 218. Keyboard 218 can include a plurality of key pads 220 each having a symbol imprinted or etched thereon for identifying to a user the key input associated with the particular key pad. Outer layer 202 can also include power button 222 arranged to assist the user in turning on and turning off portable computing device 200. Audio input device 224 can be used as a microphone to receive audible input such as speech. Status indicator light (SIL) 226 can be used to provide a user with information. Such information can be related to, for example, an operational status of portable computing device 200. Since outer layer 202 can be formed of semi-translucent plastic material that can transmit a noticeable portion of light (referred to as light bleed), SIL 226 can be configured to substantially eliminate all light except that confined by the geometric confines of SIL 226. Outer layer 202 can also include openings used for accessing operational circuits mounted within housing 202. For example, disc slot 228 can be used for inserting disc media such as compact discs (CDs) and or digital versatile discs (DVDs). As a convention, outer layer 202 can be considered to be divided into front portion 230 and rear portion 232 as viewed by a user when operation portable computing device. In this way, touch pad 216 can be considered to be located in front portion 230 and keyboard 218 can be considered to be located in rear portion 232.

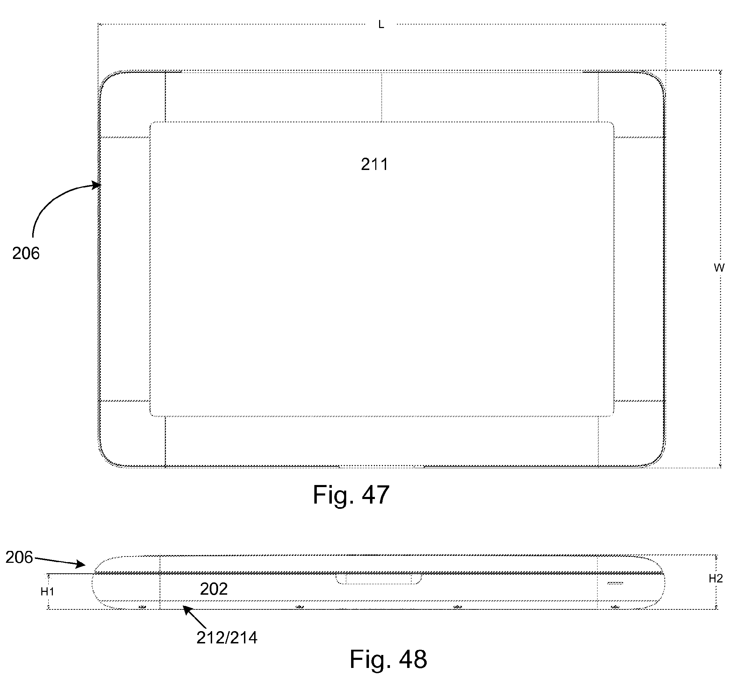

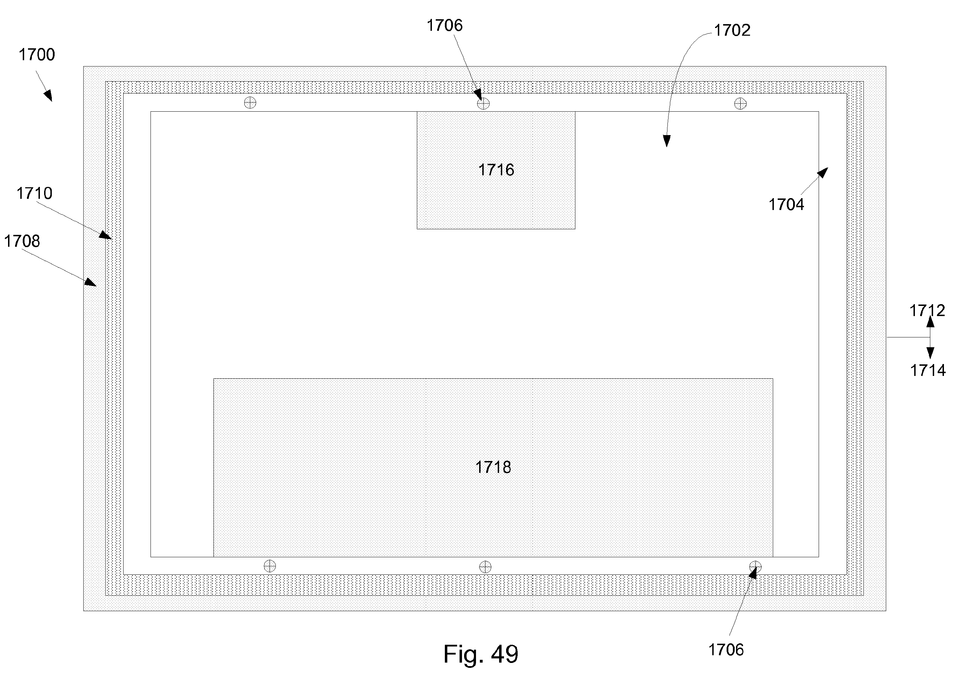

Figs. 47 and 48 show a top view and a front view, respectively, of portable computing device 200 in a closed state. More specifically, Fig. 48 and 49 illustrate the uniformity of shape of portable computing device 200. This continuity in shape is evident by the continuous lines between lid 206, outer layer 202, and structural support 212 and protective layer 214.

### BATTERY

Broadly speaking, the described embodiments relate to a battery assembly that can be embedded within a portable computing device, such as a laptop computer. The battery assembly can have a high charge capacity and yet be sufficiently compact to provide for additional circuitry to be incorporated within a housing of the laptop computer while maintaining a thin profile of the portable computer. Moreover, by embedding the battery assembly in the small computing device and making it substantially inaccessible to anyone but an authorized repair technician, the housing of the small computing device can provide additional protection to the battery assembly since the battery assembly can be considered to be an integral part of the small computing device. The battery assembly can also be customized to fit within the confines of the available space within the housing of the small computing device. In particular, by making the battery assembly more compact as needed, more operational components can be assembled into the small computing device while still maintaining a thin profile.

Furthermore, the battery assembly can include battery cells, or core pack, enclosed in a battery housing having a stiffness enhancing shape. At least a portion of the battery housing can have a shape that conforms to the shape of an interior portion of the computer housing in contact with the battery assembly. The battery assembly can be dropped into the computer housing and then in motion referred to as diving in, the battery assembly is placed in close proximity to the corresponding interior portion of the computer housing. In this way, the battery housing and the computer housing can be integrally coupled in such as way that the flexibility of the computer housing can be increased. Accordingly, by not having to rely solely upon the stiffness of the material used to form the computer housing, it is possible that the computer housing can be formed of material such as plastic that is flexible and conventionally thought of as being unsuitable for use in supporting and protecting a computer assembly.

In one embodiment, the battery housing is a single piece housing having a cantilever beam portion integrally formed along a bottom length of a top cover of the battery housing (presenting a cross sectional shape that can resemble the letter "C"). The cantilever beam portion having a higher moment of inertia and therefore presenting a greater resistance to bending than that of a conventional battery housing without the cantilever beam portion. Moreover, since the battery housing is formed of a single piece of hard, durable material such as PCABS, no glue or other adhesive is used. In this way, there are no seams or other joints that could weaken or otherwise reduce the structural integrity of the battery housing. Since the battery assembly is embedded, then only the top portion of the battery housing is exposed when a bottom cover of the computer housing is removed. Therefore, a bottom portion of the battery housing is protected by the computer housing and requires only a thin, protective layer. The protective layer can be attached to the cantilever beam portion and the core pack using an adhesive, such as VHB (very high bond) adhesive such as tape. The protective layer can be formed of lightweight and compliant material such as Mylar. Furthermore, by being thin, the protective layer can have little or no impact on the Z stack of the battery assembly.

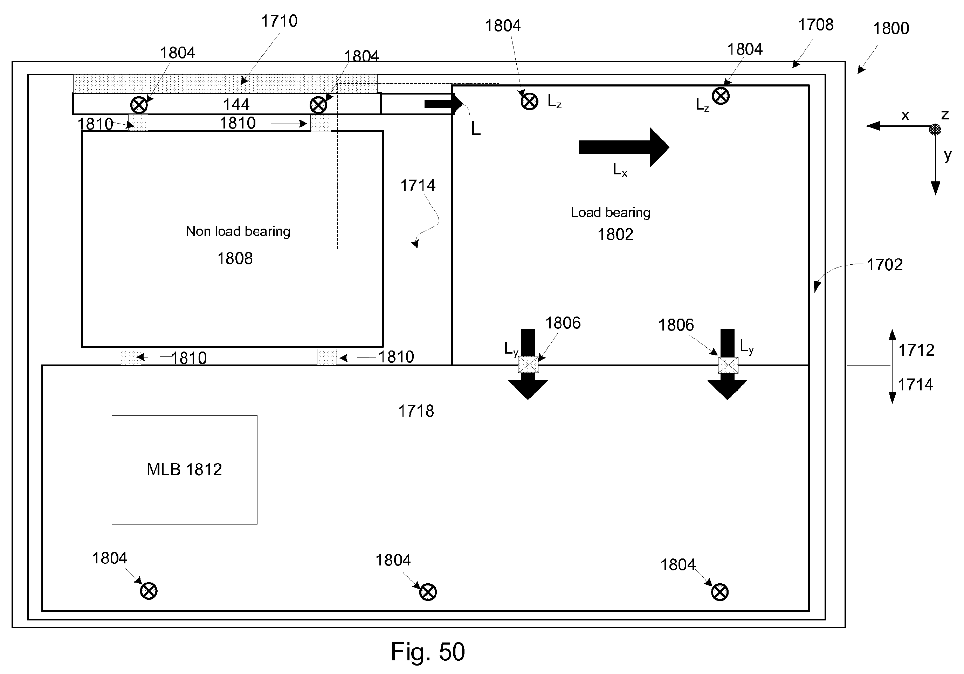

Fig. 50 shows housing 1700 in accordance with the described embodiments. Housing 1700 can form enclosure 1702 suitable for accommodating a computer assembly. More specifically, Fig. 17 shows a representation of enclosure 1702 in an orientation suitable for receiving components used to form the computer assembly during a component installation operation. The computer assembly can include a plurality of operational components, such as a main logic board (MLB), hard disc drive (HDD), optical disc drive (ODD) and so on used in the operation of a computing system. The computing system can be a desktop or portable, however, for the remainder of this discussion, the described embodiments relate to a portable computing system without any loss of generality. Housing 1700 can include a structural support layer that in the finished product covers enclosure 1702 and is therefore not shown in Fig. 49. The structural support layer is typically connected to inner layer 1704 and only after installation of operational components into enclosure 1702 is complete.

However, after the installation of computer assembly is complete, the structural support layer can be used to cover the components assembled into enclosure 1702 by, for example, placing the structural support layer in contact with inner layer 1704. Inner layer 1704 can then be physically connected to the structural support layer at a plurality of connecting points 1706 by way of fasteners that can include screws, rivets, etc. It should be noted that there can be any number and/or combination of types of fasteners used depending upon, of course, the particular design. By securely fastening inner layer 1704 to the structural support layer, the fasteners at connecting points 1706 can be used to transfer load L from inner layer 1704 to the structural support layer without substantially affecting outer layer 1708. Outer layer 1708 can be attached to and supported by inner layer 1704 by way of adhesive 1710 that can absorb or otherwise prevent a load on inner layer 1704 from transferring to outer layer 1708. In this way, outer layer 1708 can be acoustically isolated from inner layer 1704 in that outer layer 1708 is essentially unaffected by a load on inner layer 1704.

Inner layer 1704 can be used to transfer loads to the structural support layer without affecting outer layer 1708. As a result, outer layer 1708 can be formed of material such as lightweight plastic not particularly suitable for carrying a load or believed by the conventional arts to be suitable for use as a computer housing. Therefore, in order to provide the requisite stability, the structural support layer can be formed of materials such as metal (such as aluminum formed in a stamping operation) or composite materials whereas outer layer 1708 can be formed of materials that are chosen for their aesthetic appeal and rather than for their ability to act as a load bearing structural component. Therefore, the choice of materials that can be used to form outer layer 1708 can be widely varied. A product designer can create a look and feel for the portable computer well beyond anything realistically possible with a conventional computer housing. For example, outer layer 1708 can be formed of light weight plastic and molded into any shape (such as an undercut shape) that can also be widely varied. For example, outer layer 1708 can present a continuous spline profile so as to appear to an observer to be a single unified shape with substantially no discontinuities. Outer layer 1708 can be formed of, for example, plastic such as PCABS.

It should be noted that the functional layout of the portable computing device can be used to enhance the ability of inner layer 1704 to transfer and distribute loads. In one embodiment, enclosure 1702 can be thought of being apportioned into a number of regions based upon the operational components and their respective structural characteristics. For example, if enclosure 1702 corresponds to a laptop computer, then enclosure 1702 can be thought of as having front portion 1712 suitable for accommodating features such as a user interface along the lines of a touch or track pad and rear portion 1714 for accommodating a keyboard, for example. The touch pad can be structurally supported by corresponding frame structure 1716 whereas the keyboard can be supported by rear frame 1718 each of which can be mounted to housing 1700 using, for example, adhesive. Both frame structure 1716 and rear frame 1718 can be formed of strong, rigid material such as metal in the form of aluminum, magnesium, and/or magnesium alloy.

Some of the internal components can be load bearing components while other components can be non-load bearing components. In the context of this discussion, a load bearing component can be thought of as one that can accommodate an external load without substantially affecting its operational or structural properties. Conversely, a non-load bearing component cannot carry an external load without a substantial likelihood of adversely affecting its form or function. For example, a hard disk drive (HDD) can be very sensitive to applied loads and must therefore be protected from an external load. In some cases, a component can be used to enhance the load handling capability of inner layer 1704 as well as to augment the stiffness of outer layer 1708.

Fig. 50 shows a representation of portable computer 1800 in accordance with the described embodiments. Portable computer 1800 can include a computer assembly placed within enclosure 1702. The computer assembly can include various operational components that can cooperate to provide the functionality of portable computer 1800. Moreover, in addition to performing their designed function, some of the operational components can be used to enhance the ability of inner layer 1704 to transfer and distribute loads as well as augment the stiffness of outer layer 1708. For example, a load path can be created between front portion 1712 and rear portion 1714 using load bearing internal component 1802. For example, load bearing internal component 1802 can be attached to inner layer 1704 using connector 1804 and rear frame 1718 using connectors 1806. In this way, load L can be transferred to either the structural support layer by way of connectors 1804 and/or rear frame 1718 by way of connectors 1806. For example, load L can be thought of as having three spatial components, {Lₓ, L_{y}, L_{z}}. Spatial component L_{z} can be transferred by way of connector 1804 to the structural support layer whereas spatial component L_{y} can be transferred to rear frame 1718 by way of connector 1806. In contrast to load bearing components, non-load bearing component 1808 can be attached to inner layer 1704 and rear frame 1718 by way of load absorbing connectors 1810. Load absorbing connectors 1810 can be used to load isolate non-load bearing component 1808 using any number and type of load absorbing materials such as soft plastic.

Rear frame 1718 can be used to support components such as main logic board (MLB) 1812. Components such as MLB 1812 cannot tolerate much, if any, flexing due in part, to the relatively large number of surface mounted devices included in MLB 1812 that can be susceptible to the bending or flexing of the printed circuit board (or PCB) onto which the devices are mounted. Rear frame 1718 can be attached to outer layer 1708 using adhesive such as load absorbing adhesive 1710.

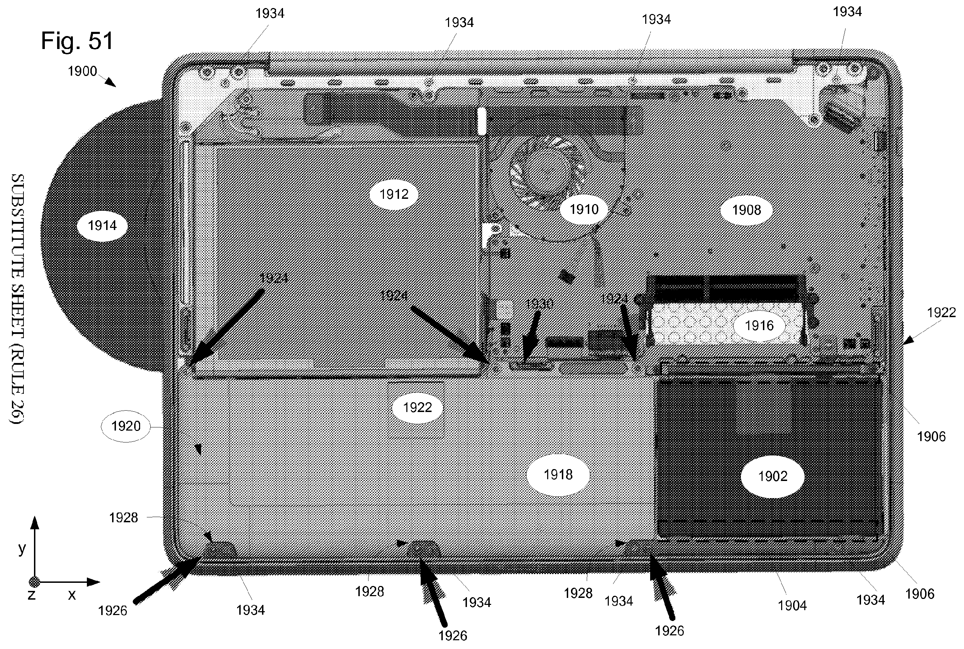

Fig. 51 shows portable computer 1900 in accordance with a particular embodiment of the generalized representation of portable computer 1800 shown in Fig. 18. Portable computer 1900 can include a number of operational components. Some of the operational components can be non-load bearing such as hard disk drive, or HDD, 1902 attached to front frame 1904 by way of load isolating connector 1906. Components that cannot tolerate much bending or flexing such as, for example, as MLB 1908, fan 1910, and optical disc drive (ODD) 1912 configured to accommodate optical disk 1914 can be mounted to rear frame 1916. Rear frame 1916 can be formed of metal such as magnesium or magnesium alloy. Battery assembly 1918 can include battery housing 1920 that encloses and supports a number of battery cells and associated circuits. Furthermore, battery assembly 1918 can also include pull tab 1922 used to assist in removing battery assembly 1918 from portable computer 1900. It should be noted that in order to enhance the structural integrity of battery assembly 1918 and its ability to handle external loads, battery housing 1920 can be formed of a single piece of material such as plastic along the lines of PCABS. Battery assembly 1918 can have a form and composition that can be mechanically coupled to and thereby add to the stiffness of outer layer 1922. Moreover, battery assembly 1918 can be made part of a load path between rear frame 1916 and front frame 1904.

Battery assembly 1918 can be attached to rear frame 1916 at connectors 1924 using a suitable fastener. In the particular embodiment shown in Fig. 19, the fastener used to attach battery assembly 1918 to rear frame 1916 can take the form of tamper resistant fastener 104 described above. Battery assembly 1918 can be attached to front frame 1904 at connector 1926 located on attachment feature 1928 using a suitable fastener such as a screw. In this case, battery housing 1920 can include holes, or bosses, suitably configured to accept the fastener used to secure battery assembly 1918 to front frame 1904. When the screw is tightened, battery assembly 1918 can move in the Z direction resulting in appropriately shaped recess portion formed in battery housing 1920 to engage attachment feature 1928. This movement also brings restricted Z type connector 1930 (also referred to as a lollipop connector) into position to couple with a corresponding lip formed on the inside surface of the structural support layer.

Battery assembly 1918 can be secured to rear frame 1916 by tightening the tamper proof fasteners at connectors 1924. Battery assembly 1914 can be secured to front frame 1904 by tightening the fasteners at connector 1926 in attachment feature 1928. The structural support layer can then be secured to front frame 1904 and rear frame 1916 by using fasteners such as screws at connectors 1934. In this way, battery assembly 1918 can facilitate the transfer and distribution of load L in any spatial coordinate. For example, battery assembly 1918 can, as part of the load path, facilitate the transfer of load L having spatial coordinates {Lₓ, L_{y}, L_{z}} to the structural support layer (L_{z}) by way of fasteners at connectors 1934 and connector 1930 or rear frame 1916 (L_{y}) using fasteners at connectors 1924. Once installed, battery assembly 1918 can be secured to front frame 1904 at connector 1926 included in attachment feature 1928 and at rear frame 1912 and by way of fasteners at connectors 1924. Furthermore, by shaping battery housing 1920 to conform to the contours of interior surface of front frame 1904, a tighter, more integrated fit and cleaner more appealing appearance can be presented.

Battery assembly 1918 can be placed within portable computer 1900 such a way that when the structural support layer is removed, battery housing 1920 can be exposed to the external environment. Accordingly, battery housing 1920 can be formed of a durable material, such as high impact plastic or other suitably rugged yet lightweight material. For example, battery housing 1920 can be injection molded plastic, such as PCABS. In some embodiments, battery housing 1920 can have a thickness in a range of about 0.35-1.3 mm with nominal thickness being about 0.65mm. The durable material of the battery housing 1920 is capable of protecting the battery cells from incidental damage.

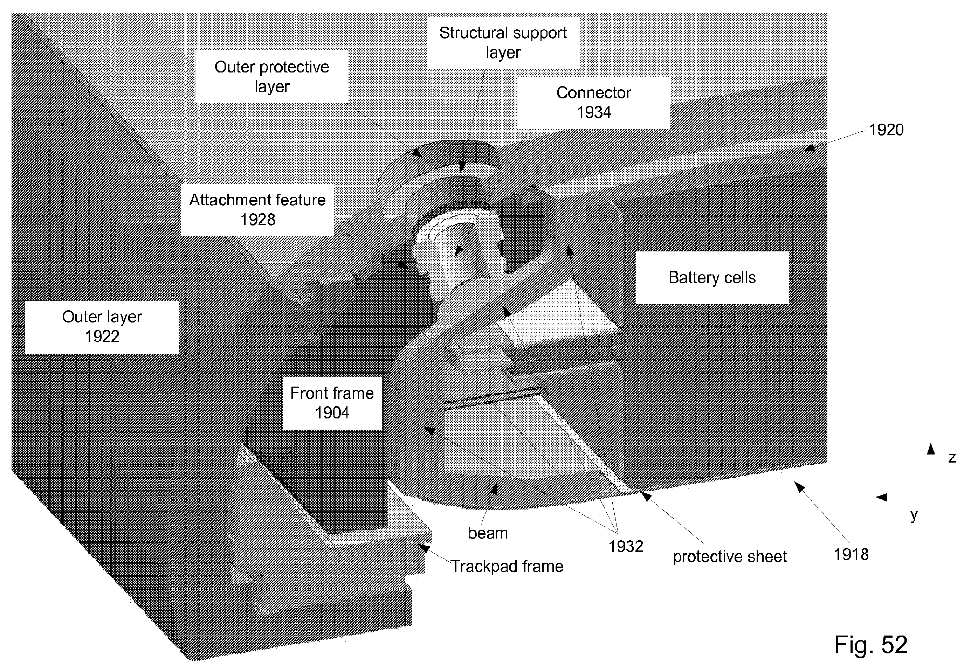

As shown in more detail in Fig. 52, battery housing 1920 can have a front portion with an external shape that can conform to the contour (such as an undercut shape) of front frame 1904 that, in turn, can conform to the shape of an interior surface of outer layer 1922. For example, battery housing 1920 can have front portion 1932 shaped to conform with and therefore fit into the interior surface of front frame 1904. Front frame 1904, in turn, can fit into the shape presented by the interior surface of outer layer 1922. In this way, battery assembly 1918 can be installed by being dropped into enclosure 1702 and then placed using a dive like motion where front portion 1932 can be placed into the accommodating space formed by interior surface of front frame 1904 then lowered into place next to rear frame 1916. The close fit provided by the conforming shapes of front frame 1904 and front portion 1932 can provide a much tighter fit and cleaner appearance. Moreover, the placing front frame 1916 into the concave recess formed the outer layer 1922, the structural stability of outer layer 1922 can be enhanced since front frame 1904 essentially becomes part of outer layer 1922. In this way, both the stiffness of battery assembly 1918 and front frame 1904 can be added to that of outer layer 1922 without adding any more weight than would otherwise be required.

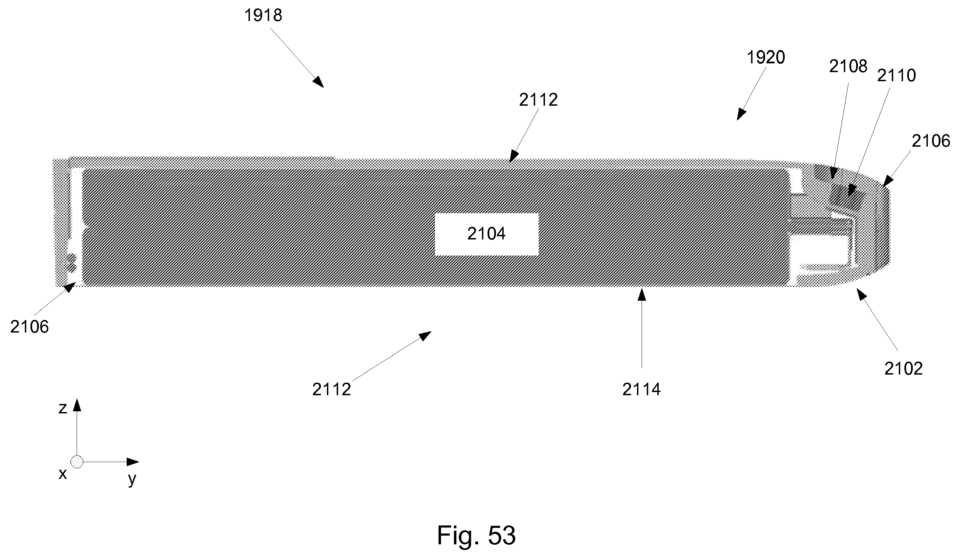

Figs. 53 - 54 show various perspective and cross sectional views of battery assembly 1918 in accordance with the described embodiments. Fig. 53 shows a representative cross sectional view of battery assembly 1918 showing single piece battery housing 1920. As shown, battery housing 1920 has a "C" shaped cross section that includes portion 2102 shaped to act as a cantilever beam that can increase the stiffness of battery housing 1920 even in the absence of battery cells (or core pack) 2104. However, with battery cells 2104 placed within enclosure 2106 supported by C shaped portion 2102 and taped into place using VHB provided by protective layer 2114, the stiffness of battery assembly is greatly increased. Battery assembly 1918 can be connected to both front frame 1904 and rear frame 1916. In this way, battery assembly can substantially increase the stiffness of outer layer 1922 as well facilitate the transfer of load L between front frame 1904, rear frame 1916 and the structural support layer.

Recess portion 2108 can include boss 2110 that can receive a fastener such as a screw used to secure battery assembly to front frame 1904. As noted above, recess portion 2108 can be shaped to accommodate attachment feature 1928 such that upper surface 2112 of battery housing 1920 can move in the Z direction when the fastener is tightened. Since bottom portion 2112 of battery assembly 1918 is protected by outer layer 1922, the Z stack of battery assembly 1928 can be preserved by providing protective layer 2114 at bottom portion 2112 of battery assembly 1928. Protective layer 2114 can be formed of thin and lightweight material such as Mylar. Since the bottom of battery assembly 1918 is protected by the top case, VHB (very high bond) adhesive is used to attach protective layer 2114 to core pack 2104 and C shaped portion 2102.

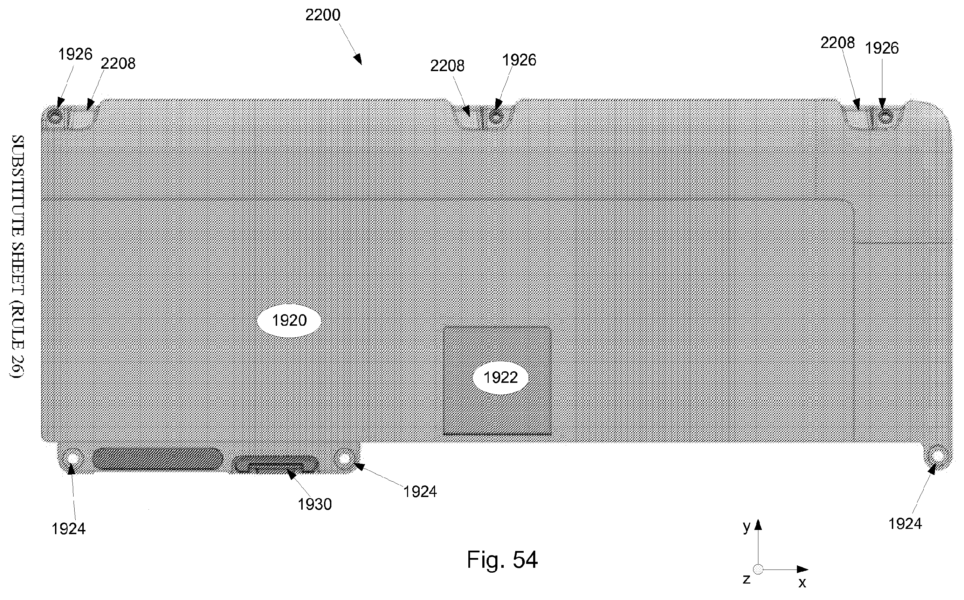

Fig. 54 shows a top view of battery assembly 1918. According to an embodiment, the battery cell or cells within the battery assembly 1918 can have a customized size and shape designed to fit inside a computer housing having a thin profile. The thickness of a conventional battery assembly is typically dictated by the diameter of the cylindrical lithium-ion cells contained within the battery assembly. Also, the space between the cylindrical cells is wasted in a conventional battery assembly. However, the battery cells, according to this embodiment, can be customized such that there is no wasted space between cells and the thickness of each cell can be customized to fit in the designated space within battery assembly 1918, thereby maintaining the overall volume of the battery cells even through the cells are thinner.

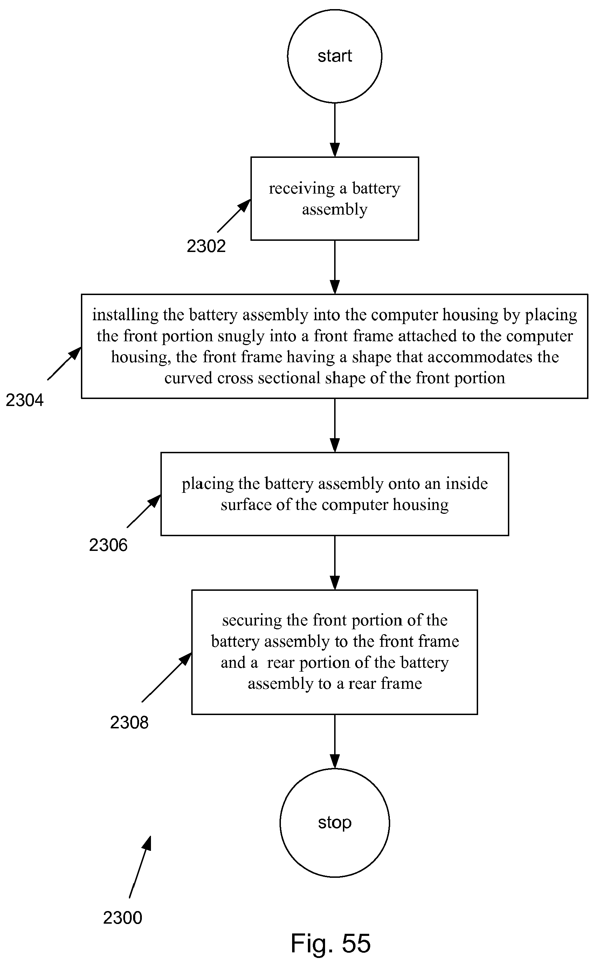

Fig. 55 shows a flowchart detailing process 2300 for embedding a battery assembly into a portable computer having a computer housing formed of flexible material. Process 2300 can be carried out by performing at least the following operations. At 2302, receiving the battery assembly, the battery assembly comprising: a single piece battery housing arranged to enclose a plurality of battery cells, the battery housing having a front portion having a curved cross sectional shape, a top portion, a cantilever beam portion, and a minimum Z impact protective layer, the cantilever beam portion being integrally formed along a lower edge of the top portion arranged to increase a resistance to flexing of the battery housing, the protective layer being attached to the cantilever beam portion and the battery cells by way of a high bond strength adhesive. At 2304, installing the battery assembly into the computer housing by placing the front portion snugly into a front frame attached to the computer housing, the front frame having a shape that accommodates the curved cross sectional shape of the front portion. At 2306, placing the battery assembly onto an inside surface of the computer housing such that the protective layer is placed in contact with the inside surface such that the computer housing provides a substantial portion of the protection provided to the battery cells. At 2308, securing the front portion of the battery assembly to the front frame such that a load applied to the computer housing is transferred by way of a load path to a structural support layer connected to the computer housing without substantially affecting the computer housing, the load path including the battery assembly.

The advantages of these embodiments are numerous. Different aspects, embodiments or implementations may yield one or more of the following advantages. One advantage is that the battery assembly is not readily accessible to any but an authorized user. The battery assembly can be shaped to provide additional stiffness to a computer housing having little or no inherent stiffness. In this way, lightweight materials such as plastic can be used for computer housings.
The many features and advantages of the described embodiments are apparent from the written description and, thus, it is intended by the appended claims to cover such features and advantages. Further, since numerous modifications and changes will readily occur to those skilled in the art, the invention should not be limited to the exact construction and operation as illustrated and described. Hence, all suitable modifications and equivalents may be resorted to as falling within the scope of the invention.

### Numbered Statements of Invention:

1. A computing device, comprising:
   a single piece, seamless housing formed of a lightweight, flexible material, the seamless housing comprising:
      a top portion, and
      a body portion integrally formed with the top portion;
      a moveable top cover pivotally connected to the single piece seamless housing, the movable top cover and the seamless housing shaped to create an appearance of a single continuous shape when the movable top cover is closed and in contact with the top portion.
2. The computing device as recited in statement 1, wherein the top portion includes at least one user interface, and wherein the housing is formed of plastic.
3. The computing device as recited in statement 1, wherein the housing encloses and supports a computer assembly, the computer assembly includes a plurality of components operable to provide a set of defined functions for the computing device.
4. The computing device as recited in statement 3, wherein the body portion has at least one reinforced opening having a wide span sized to accommodate a connector used to access at least one of the operable components.
5. The computing device as recited in statement 4, wherein the connector is a USB connector.
6. The computing device as recited in statement 1, further comprising:
   a bottom cover, the bottom cover arranged to provide structural support for the computing device such that a load applied at the housing is passed to the bottom cover without substantially affecting the housing.
7. The computing device, as recited in statement 1 further comprising:
   a structural support layer and wherein the single piece seamless housing has no visible fasteners, the single seamless body further comprising:
      an outer layer formed of lightweight flexible material, and
      an inner layer attached to the outer layer adapted to transfer and distribute a load applied to the housing wherein the inner layer is physically connected to the support layer such that the load is transferred from the inner layer to the support layer without substantially affected the outer layer.
8. The computing device as recited in statement 7, wherein the inner layer is attached to the outer layer using an adhesive that buffers the outer layer from a load on the inner layer.
9. The computing device as recited in statement 7, wherein the multipart computer housing has a substantially continuous cross sectional shape.
10. The computing device as recited in statement 7, wherein the inner layer includes a plurality of structural members conformally attached to an inside surface of the outer layer.
11. The computer device as recited in statement 10, wherein the inner layer includes at least a load bearing component attached to at least one of the plurality of structural members, the load bearing component acting in concert with the inner layer to transfer and distribute the load.
12. The computing device as recited in statement 11, wherein the inner layer includes at least a non-load bearing component, the non-load bearing component being attached to at least one of the plurality of structural members by way of load buffering connectors that buffer the non-load bearing component from the load.
13. The computing device as recited in statement 7, wherein the multipart computer housing is formed of plastic that includes PCABS.
14. A portable computer, comprising:
   a housing, the housing formed of non-load bearing material, the housing having an aesthetically appealing shape and aesthetically appealing surface features;
   a load distributing and load transferring endoskeleton, attached to an interior surface of the housing;
   a structural support layer mechanically coupled to the endoskeleton, the structural support layer formed of metal, the structural support layer providing structural support for the portable computer and an electrical ground, wherein a load applied to the housing is passed by the endoskeleton to the structural support layer without substantially affecting the housing;
   a protective layer attached to an exterior surface of the structural support layer, the protective layer having an appearance in conformity with the housing, the protective layer forming a junction with the housing that protects the appearance of the housing;
   a top cover having a supporting inner frame;
   a display supported by the inner frame, the inner frame pivotally connected to the endoskeleton by way of a hinge arrangement; and
   a hinge arrangement enclosure arranged to enclose the hinge arrangement, wherein the hinge arrangement enclosure comprises:
      a back portion, the back portion being visible to a user when the top cover is in a close state, the back portion being integrally formed from the top cover, and
      a cover portion, the cover portion being removably attached to the back portion by way of a zipper lock arrangement such that when the cover portion and the back portion are joined, a resulting seam is not visible by the user when the top cover is in a closed position, and where the resulting seam aligns with a seam formed by the protective layer and the housing when the top cover is in the open position.
15. The portable computer as recited in statement 14, wherein the housing is formed of plastic that includes PCABS.
16. The portable computer as recited in statement 14, wherein the endoskeleton includes at least a frame member and a load bearing operational component, the load bearing operational component arranged to distribute and transfer the load without substantially affecting the operational or structural characteristics of the load bearing operational component is attached to the frame member such that the load applied to the housing is transferred by the frame member to the load bearing operational component that, in turn, transfers the load to the structural support layer.
17. A display housing for a portable computer comprising,
   a display;
   a display housing cover that encloses at least a back side of the display;
   an illumination source deposed between the backside of the display and the display housing cover;
   an inner frame bonded to the display housing cover for providing structural stiffness to the display housing cover,
   a first bonding agent for bonding the display cover to the inner frame,
   a second bonding agent for bonding the display cover to the inner frame, wherein the second bonding agent is for preventing bond slippage in a bond between the inner frame and the display housing cover formed using the first bonding agent during thermal cycling of the display housing.
18. The display housing of statement 17, wherein the illumination source comprises one of more LED elements.
19. The display housing of statement 17, wherein the illumination source is a backlight for the display.
20. The display housing of statement 17, wherein a portion of the display housing cover is transmissive to light generated from the illumination source such that when the illumination source is emitting light, the portion of the display housing cover appears illuminated.
21. The display housing of statement 17, wherein the inner frame comprises magnesium.
22. The display housing of statement 17, wherein the display housing cover comprises plastic.
23. The display housing of statement 17, wherein the second bonding agent comprises a very high bond adhesive.
24. The display housing of statement 17, wherein the first bonding agent is a liquid two part epoxy during application.
25. The display housing of statement 17, wherein the second bonding agent comprises a double sided tape with very bond adhesive on each side of the tape.
26. The display housing of statement 17, wherein the display housing cover comprises a hinged side and a free side and wherein proximate to corners of the free side, the display housing cover is joined to the inner frame using the second bonding agent wherein the second bonding agent is a very high bond adhesive.
27. The display housing of statement 17, wherein the display housing cover comprises a hinged side and a free side wherein proximate to each end of the free side, the inner frame is joined to the display housing cover using the second bonding agent and proximate to a center of the free side the inner frame is joined to display housing cover using the first bonding agent.
28. The display housing of statement 17, wherein the display housing cover comprises a hinge side and a free side and two adjacent sides connecting the hinged side and the free side wherein, for each of the adjacent sides, on a first end proximate to the hinged side, the first bonding agent is used to join the inner frame to the display housing cover and on a second end proximate to the free side, the second bonding agent is used to join the inner frame to the display housing cover.
29. A method comprising,
   providing a display housing cover and an inner frame for a display housing wherein the display housing cover comprises a hinged side and a free side wherein proximate to each end of the free side;
   applying a first bonding agent to a first portion of the inner frame wherein the first bonding agent is applied as a liquid;
   applying a second bonding agent to a second portion the inner frame proximate to each end of the free side wherein the second bonding agent is a very high bond adhesive; and
   joining the inner frame to the display housing cover using the first bonding agent and the second bonding agent wherein the second bonding agent is for preventing bond slippage in a bond between the inner frame and the display housing cover formed using the first bonding agent during thermal cycling of the display housing.
30. The method of statement 29, further comprising:
   applying a first coating layer over a first area of an inner surface of the display housing cover;
   applying a second coating layer over the first coating layer;
   applying a third coating layer over the second coating layer over a second area less than the first area, said second area surrounding a portion of display housing cover that is illuminated from an illumination source enclosed within the display housing.
31. A portable computing device, comprising: an outer housing configured to enclose and support a plurality of internal components, said outer housing being composed of predominantly one or more electrically non-conducting thermoplastic materials;
   a main logic board located within said outer housing, said main logic board having a primary processing unit coupled thereto;
   a keyboard assembly including a plurality of keys physically coupled to said outer housing and electrically coupled to said main logic board;
   an audio source located within the housing and positioned below the keyboard assembly, wherein the audio source is configured to emit sound waves that are propagated primarily via sound transmission paths through said keyboard assembly and between gaps between the keyboard keys and said outer housing;
   an equalizer adapted to adjust electrical signals sent to said audio source, wherein one or more settings for said equalizer are selected to account for sound absorption and amplification characteristics of the sound waves along the sound transmission paths; and
   a universal grounding structure electrically coupled to each of said main logic board, keyboard assembly, audio source, and equalizer, wherein said universal grounding structure includes a plurality of separate ground components that are
   electrically intercoupled, wherein each of said separate ground components is substantially smaller than the overall portable computing device, wherein a first ground component provides an electromagnetic interference shield around said main logic board, wherein a second ground component comprises a metal backplate positioned such that said main logic board is between the metal backplate and the
   separate first ground component, and wherein the second ground component is electrically and mechanically coupled to the first ground component via a plurality of conductive pins positioned through the main logic board.
32. The portable computing device of statement 31, wherein said portable computing device is a laptop computer.
33. The portable computing device of statement 31, wherein said first ground component comprises a metal Faraday cage of a size that is slightly larger than said main logic board.
34. The portable computing device of statement 31, wherein said keyboard assembly includes a substrate on which the plurality of keys are mounted, and wherein said
   substrate comprises one or more apertures positioned proximate to said audio source and adapted to allow the sounds waves to pass through said substrate.
35. The portable computing device of statement 31, wherein said audio source is secured in a substrate of a component configured to be secured within the housing, and wherein said component includes a slot for a wireless card.
36. A portable computing device, comprising:
   an outer housing configured to enclose and support a plurality of internal components, said outer housing being composed of predominantly one or more electrically non-conducting materials;
   a main logic board located within said outer housing, said main logic board having a primary processing unit coupled thereto;
   one or more additional electrically powered components located within said outer housing and separate from said main logic board; and
   a universal grounding structure electrically coupled to each of said main logic board and said one or more additional electrically powered components, wherein said universal grounding structure includes a plurality of separate ground components that are electrically intercoupled, wherein each of said separate ground components is substantially smaller than the overall computing device, and wherein at least one of
   said separate ground components also provides an electromagnetic interference shield around said main logic board.
37. The portable computing device of statement 36, wherein said portable computing device is a laptop computer, and wherein said outer housing is composed of predominantly a thermoplastic material.
38. The portable computing device of statement 36, wherein said electromagnetic interference shield comprises a metal Faraday cage of a size that is slightly larger than said main logic board.
39. The portable computing device of statement 36, wherein said plurality of separate ground components includes a rear bracket, wherein said rear bracket couples a top
   cover of said portable computing device to a lower body of said portable computing device and transmits physical loads therebetween.
40. The portable computing device of statement 36, wherein said plurality of separate ground components includes a metal backplate positioned such that said main logic board is between the metal backplate and the separate electromagnetic interference
   shield, and wherein said metal backplate is electrically and mechanically coupled to the electromagnetic interference shield via a plurality of conductive pins positioned through the main logic board.
41. An electrical grounding system for a laptop computer having a non-conductive outer housing, comprising;
   a main logic board located within said outer housing, said main logic board having a primary processing unit coupled thereto;
   one or more additional electrically powered components located within said outer housing and separate from said main logic board; and
   a universal grounding structure electrically coupled to each of said main logic board and said one or more additional electrically powered components, wherein said universal grounding structure includes a plurality of separate ground components that are electrically intercoupled, wherein each of said separate ground components is substantially smaller than said outer housing, and wherein at least one of said separate ground components also provides an electromagnetic interference shield around said main logic board.
42. The electrical grounding system of statement 41, wherein said plurality of separate ground components includes a rear bracket, wherein said rear bracket couples a top cover of said portable computing device to a lower body of said portable computing device and transmits physical loads therebetween.
43. The electrical grounding system of statement 41, wherein said plurality of separate ground components includes a metal backplate positioned such that said main logic board is between the metal backplate and the separate electromagnetic interference shield, and wherein said metal backplate is electrically and mechanically coupled to the electromagnetic interference shield via a plurality of conductive pins positioned through the main logic board.
44. An audio system for a portable computer, comprising:
   a keyboard assembly including a plurality of keys coupled to a housing;
   an audio source located within the housing and positioned below the keyboard assembly, wherein the audio source is configured to emit sound waves that are primarily propagated via sound transmission paths through the keyboard assembly and between gaps between the keys and the housing; and
   an equalizer adapted to adjust the electrical signals sent to the audio source, wherein one or more equalizer settings are selected to account for sound absorption and amplification characteristics of sound waves along the sound transmission paths.
45. The audio system of statement 44, wherein said keyboard assembly includes a substrate on which the plurality of keys are mounted, and wherein said substrate comprises one or more apertures positioned proximate to said audio source and adapted to allow the sounds waves to pass through said substrate.
46. The audio system of statement 44, further comprising:
   a chamber including an exit port and an entrance port acoustically coupled to the audio source, wherein dimensions of the chamber are selected to enhance a frequency response of one or more frequencies emitted from the audio source.
47. The audio system of statement 46, wherein the chamber primarily directs sound waves in a direction different from a primary direction of the audio source.
48. The audio system of statement 46, wherein said chamber includes an exit port that is configured to direct sound through one or more ports that provide air circulation for cooling an interior of the housing.
49. The audio system of statement 44, wherein the audio source comprises a cone-type electromagnetically actuated driver, a piezoelectric driver, or both.
50. The audio system of statement 44, wherein said audio source further comprises three or more separate audio sources located within the housing and positioned below the keyboard assembly,
51. The audio system of statement 44, wherein a first equalizer setting increases a sound
   level of a first frequency sound wave absorbed along the sound transmission paths, and wherein a second equalizer setting decreases a sound level of a second frequency sound wave absorbed along the sound transmission paths.
52. The audio system of statement 44, wherein a first equalizer setting decreases a sound level of a frequency of a sound wave that produces an unwanted vibration in the housing.
53. The audio system of statement 44, wherein said audio source is secured in a substrate of a component configured to be secured within the housing, and wherein said component includes a slot for a wireless card.
54. A laptop computer, comprising:
   an outer housing configured to enclose and support a plurality of internal components, said outer housing being composed of predominantly one or more electrically non-conducting materials;
   a main logic board located within said outer housing, said main logic board having a primary processing unit coupled thereto;
   a keyboard assembly including a plurality of keys coupled to said outer housing; at least one audio source located within said outer housing and positioned below the keyboard assembly, wherein the at least one audio source is configured to emit sound waves that are propagated via sound transmission paths through the keyboard assembly and between gaps between the keys and the housing; and
   an equalizer adapted to adjust the electrical signals sent to the audio source,
   wherein one or more equalizer settings are selected to account for sound absorption and amplification characteristics of sound waves along the sound transmission paths.
55. The laptop computer of statement 54, wherein said keyboard assembly includes a substrate on which the plurality of keys are mounted, and wherein said substrate comprises one or more apertures positioned proximate to said audio source and adapted to allow the sounds waves to pass through said substrate.
56. The laptop computer of statement 54, further comprising:
   a chamber including an exit port and an entrance port acoustically coupled to the audio source, wherein dimensions of the chamber are selected to enhance a frequency response of one or more frequencies emitted from the audio source.
57. The laptop computer of statement 54, wherein said at least one audio source comprises three or more separate audio sources located within the outer housing and positioned below the keyboard assembly.
58. A multipart computer housing, comprising:
   an anodized structural support layer having a porous, textured surfaced; and
   a protective cover layer formed over the structural support layer, wherein the protective cover layer comprises a thermoplastic elastomer or silicone material.
59. The computer housing of Statement 58, wherein the porous, textured surface has high surface energy.
60. The computer housing of Statement 59, wherein the porous, textured surface has a contact angle with deionized water that is less than about 30°.
61. The computer housing of Statement 58, wherein the structural support layer comprises aluminum.
62. The computer housing of Statement 28, wherein the protective cover layer comprises thermoplastic elastomer that is overmolded over the structural support layer.
63. The computer housing of Statement 58, wherein the protective cover layer comprises a silicone material that is compression molded over the structural support layer.
64. The computer housing of Statement 58, further comprising an adhesive layer between the structural support layer and the protective cover layer.
65. The computer housing of Statement 58, wherein the protective cover layer covers an entire surface of the structural support layer and extends around an edge of the structural support layer.
66. The computer housing of Statement 58, wherein a recycling code is printed wrong-reading on the structural support layer, the recycling code corresponding to the protective cover layer.
67. The computer housing of Statement 66, wherein a recycling code is printed right-reading on the adhesive layer before the adhesive layer is bonded to the structural support layer, the recycling code corresponding to the protective cover layer,
68. A method of manufacturing at least a portion of a computer housing, comprising:
   providing an aluminum base having a textured surface;
   creating high surface energy on the aluminum base by anodizing the aluminum base;
   applying an adhesive layer over the anodized aluminum base having high surface energy; and
   applying a thermoplastic elastomer layer over the adhesive layer.
69. The method of Statement 10, wherein the thermoplastic elastomer is overmolded over the adhesive layer.
70. The method of Statement 69, wherein the adhesive layer has a melting temperature lower than a temperature at which the thermoplastic elastomer layer is injected during an injection molding process.
71. The method of Statement 69, wherein providing the aluminum base having a textured surface comprises chemically etching the aluminum base.
72. The method of Statement 69, wherein the adhesive layer comprises a thermoplastic bonding film.
73. The method of Statement 72, wherein the adhesive layer is bonded to the anodized aluminum base having high surface energy before the aluminum base is placed in an injection molding tool.
74. The method of Statement 69, wherein the thermoplastic elastomer layer is wrapped around an edge of the aluminum base.
75. A method of manufacturing at least a portion of a computer housing, comprising;
   providing an aluminum sheet having an etched surface;
   anodizing the aluminum sheet to create high surface energy on the aluminum sheet, wherein the etched surface has a contact angle with deionized water that is less than about 30°, and
   applying thermoplastic elastomer layer directly over an entire surface of the anodized aluminum sheet having high surface energy.
76. The method of Statement 75, wherein the etched surface has a surface roughness, Rₐ, of about 0.5 - 0.6 micron.
77. The method of Statement 75, further comprising pre-bonding an adhesive film to the aluminum sheet before applying the thermoplastic elastomer layer such that the adhesive film is between the anodized aluminum sheet and the thermoplastic elastomer layer.
78. The method of Statement 77, wherein applying comprises overmolding the thermoplastic elastomer layer in an injection molding machine and wherein the adhesive film has a melting temperature lower than a temperature at which the thermoplastic elastomer layer is overmolded.
79. The method of Statement 75, wherein applying comprises overmolding the thermoplastic layer in an injection molding machine,
80. A method of manufacturing at least a portion of a computer housing, comprising:
   providing an aluminum base having a textured surface;
   creating high surface energy on the aluminum base by anodizing the aluminum base;
   applying an adhesive layer over the anodized aluminum base having high surface energy; and
   applying a silicone layer over the adhesive layer.
81. The method of Statement 80, wherein applying comprises compression molding the silicone layer.
82. The method of Statement 80, wherein the etched surface has a surface roughness, Rₐ, of about 0.5 - 0.6 micron.
83. The method of Statement 80, further comprising pre-bonding an adhesive film to the aluminum sheet before applying the silicone layer such that the adhesive film is between the anodized aluminum sheet and the silicone layer.
84. A lightweight, compact, high charge capacity battery assembly embeddable in a portable computing device, the portable computing device having a housing formed of lightweight material, comprising:
   a single piece battery housing configured to provide structural support to battery components included therein, the single piece housing formed of durable material, wherein the single piece battery housing comprises:
      a top portion, the top portion arranged to provide protection to a plurality of battery components and to provide connectors for securing the battery to the housing, and
      a cantilever beam portion, the cantilever beam portion integrally formed with the top portion and extending along a lower edge of the top portion, the cantilever beam portion enhancing a resistance to flexing of the battery housing; and
      a lightweight minimum Z stack impact bottom layer attached to the cantilever beam portion and at least some of the battery components by way of a high bond adhesive, the lightweight bottom layer having a thickness that does not substantially impact the Z stack of the battery assembly.
85. The battery assembly as recited in statement 84, further comprising an electrical connector arranged to electrically connect circuits external to the battery assembly with circuits and battery cells internal to the battery assembly.
86. The battery assembly as recited in statement 85, wherein the minimum Z stack impact bottom layer has a thickness of about 0.1 mm.
87. The battery assembly as recited in statement 86, wherein the minimum Z stack impact bottom layer comprises Mylar.
88. The battery assembly as recited in statement 87, wherein the protective layer comprises stainless steel.
89. The battery assembly as recited in statement 88, wherein the high bond adhesive is VHB.
90. The battery assembly as recited in statement 85, wherein the computer housing includes a plurality of frame members attached to an inside surface of the computer housing.
91. The battery assembly as recited in statement 90, wherein the plurality of frame members includes a rear frame.
92. The battery assembly as recited in statement 91, wherein at least one of the connectors used to secure the battery assembly to the computer housing by way of the rear frame is a tamper resistant fastener.
93. A method of embedding a battery assembly into a portable computer having a computer housing formed of flexible material, comprising:
   receiving the battery assembly, the battery assembly comprising:
      a single piece battery housing arranged to enclose a plurality of battery cells, the battery housing formed to include a front portion having a curved cross sectional shape, a top portion, a cantilever beam portion, and a minimum Z impact protective layer, the cantilever beam portion being integrally formed along a lower edge of the top portion arranged to increase a resistance to flexing of the battery housing, the protective layer being attached to the cantilever beam portion and the battery cells by way of a high bond strength adhesive;
      installing the battery assembly into the computer housing by, placing the front portion snugly into a front frame attached to the computer housing, the front frame having a shape that accommodates the curved cross sectional shape of the front portion, and
      placing the battery assembly onto an inside surface of the computer housing such that the protective layer is placed in contact with the inside surface such that the computer housing provides a substantial portion of the protection provided to the battery cells; and
      securing the front portion of the battery assembly to the front frame such that a load applied to the computer housing is transferred by way of a load path to a structural support layer connected to the computer housing without substantially affecting the computer housing, the load path including the battery assembly.
94. The method as recited in statement 93, further comprising:
   installing a computer assembly into the computer housing, the computer assembly comprising a plurality of operational components that provide desired functionality, wherein at least one of the operational components is non-load bearing.
95. The method as recited in statement 93, further comprising:
   attaching the computer assembly to the frame; and
   electrically coupling the battery assembly to at least one operational component.
96. The method as recited in statement 95, wherein the at least one non-load bearing component is attached to the frame by way of at least one load absorbing connector.
97. The method as recited in statement 95, wherein the battery assembly includes at least one specially shaped recess arranged to accommodate at least one tamper- resistant fastener used to attach the computer assembly to the frame in such a way as to prevent an unauthorized user from gaining meaningful access to the at least one tamper resistant fastener.
98. The method as recited in statement 95, wherein the battery assembly includes a back and the housing includes a rear portion having a supportive rear frame attached thereto, the method further comprises:
   securing the back of the battery assembly to the rear frame, wherein a load applied to the computer housing can be transferred by way of a load path to a structural support layer connected to the front and rear frames without substantially affecting the computer housing, the load path including the battery assembly.
99. A computing device, comprising: a flexible housing;
   a load transferring inner frame;
   a load absorbing layer arranged to mechanically couple the housing and the inner frame;
   a structural support layer connected to the load transferring inner frame; and
   a battery assembly mechanically connected to the load transferring inner frame, wherein when a load is applied to the flexible housing, the applied load is transferred by way of a load path to the structural support layer without substantially affecting the flexible housing, wherein the load path includes the battery assembly.
100. The computing device as recited in statement 99, wherein the battery assembly comprises:
   a single piece battery housing, the housing comprising: a top portion, and
   a cantilever beam section integrally formed with a lower portion of the top portion, the cantilever beam section increasing the stiffness of the single piece battery housing; and
   a minimum Z stack impact protective layer attached to at least a bottom portion of the cantilever section and the cantilever beam section.
101. The computing device as recited in statement 100, wherein battery assembly is attached to the inner frame by at least one tamper-resistant fastener that can be manipulated only by a customized tool.
102. The computing device as recited in statement 101, wherein the battery assembly includes at least one specially shaped recess arranged to accommodate the at least one tamper-resistant fastener in such a way as to allow meaningful access to the at least one tamper resistant fastener only with a customized tool.

## Claims

1. A portable computing device, comprising:
a single piece, seamless housing; and
a top cover pivotally connected to the single piece seamless housing, the top cover comprising:
a display housing enclosing a recess and including a first alignment pin extending from an inside surface of the display housing, and
a camera module disposed within the recess, the camera module comprising:
a lens assembly,
a camera printed circuit board (PCB), and
a first receiving feature having a size and shape in accordance with the first alignment pin, the first alignment pin being received into the first receiving feature that aids in aligning the lens assembly to a lens opening in the display housing.

2. The portable computing device as recited in claim 1, the camera module further comprising:
a support pad having one side formed of foam in contact with a bottom surface of the PCB and another side in contact with an internal wall of the top cover, wherein the support pad aids in the movement of the camera module within the recess.

3. The portable computing device as recited in claim 2, wherein the recess has a size and shape in accordance with the camera module.

4. The portable computing device as recited in claim 1, wherein the lens opening extends through the inside surface of the display housing.

5. The portable computing device as recited in claim 1, wherein the first receiving feature defines a chamfered opening that guides the first alignment pin into a portion of the receiving feature having a size and shape complementary to the first alignment pin..

6. The portable computing device as recited in claim 1, wherein the camera module further comprises:
a second alignment pin extending from the inside surface of the display housing; and
a second receiving feature having a size and shape in accordance with the second alignment pin.

7. The portable computing device as recited in claim 1, further comprising:
a Hall Effect sensor assembly, comprising:
a Hall Effect sensor (HES),
a PCB assembly, and
electrical connectors.

8. The portable computing device as recited in claim 7, further comprising:
a compression molded boot configured to encapsulate all but a top portion of the HES assembly and a portion of the electrical connectors.

9. The portable computing device as recited in claim 8, wherein an exposed portion of the electrical connectors are surface mounted to a motherboard using an adhesive.

10. The portable computing device as recited in claim 9, wherein the electrical connectors are directly connected to electrical components in the motherboard.

11. The portable computing device as recited in claim 110, wherein the HES is mounted to the motherboard by way of a riser board.

12. A camera module suitable for use in a top cover of a portable computing device, the camera module comprising:
a lens assembly;
a camera printed circuit board (PCB);
a support pad configured to facilitate movement of the camera module within the top cover of the portable computing device during an assembly operation;
a first alignment pin; and
a first receiving feature having a size and shape in accordance with the first alignment pin, the first alignment pin being received into the first receiving feature,
wherein the first receiving feature is configured to aid in aligning the lens assembly to a lens opening in the top cover.

13. The camera module as recited in claim 12, wherein the portable computing device comprises:
a base; and
the top cover, the top cover being pivotally coupled to the base.

14. The camera module as recited in claim 13, wherein the top cover comprises a supporting structure having a camera assembly recess, and wherein the camera assembly is disposed within the camera assembly recess.

15. The camera module as recited in claim 14, wherein the first receiving feature has a chamfered interior shape.

16. A camera module suitable for use in a display housing of a portable computing device, the camera module comprising:
a lens assembly;
a camera printed circuit board (PCB);
a first alignment pin; and
a first receiving feature coupled with the lens assembly, the first receiving feature defining a chamfered opening that causes the first receiving feature to align with and receive the first alignment pin during an assembly operation, wherein alignment of the first receiving feature with the first alignment pin aids in aligning the lens assembly with a lens opening in the display housing.

17. The camera module as recited in claim 16, further comprising:
a second alignment pin extending from an inside surface of the display housing; and
a second receiving feature having a size and shape in accordance with the second alignment pin, wherein the first and second alignment pins cooperate to cause the lens assembly to align with the lens opening.
